# EUROPEAN PATENT APPLICATION

(11) **EP 4 593 445 A1**
(43) Date of publication of application: **30.07.2025**
(21) Application number: 23868075.5
(22) Date of filing: 08.09.2023
(51) Int. Cl.: H04W 16/28, H04W 72/044, H04W 72/231, H04W 72/232, H04W 76/15

(54) **TERMINAL DEVICE AND BASE STATION DEVICE**

(30) Priority: 21.09.2022 JP 2022150165
(71) Applicant: Sharp Kabushiki Kaisha, Sakai City, Osaka 590-8522 (JP)
(72) Inventor: FUKUI, Takahisa, Sakai City, Osaka 590-8522 (JP); YOKOMAKURA, Kazunari, Sakai City, Osaka 590-8522 (JP); MORIMOTO, Ryota, Sakai City, Osaka 590-8522 (JP); WAN, Hua, Sakai City, Osaka 590-8522 (JP)
(74) Representative: Müller-Boré & Partner Patentanwälte PartG mbB
(86) International application number: PCT/JP2023/032894
(87) International publication number: WO 2024/062952

(57) **Abstract**

A receiver is included which is configured to receive a first PDCCH to which first DCI is mapped, a second PDCCH to which second DCI is mapped, and a PDSCH scheduled by the second DCI, wherein a PDSCH-MTRP scheme is configured to be applied for the PDSCH, the PDSCH-MTRP scheme is some or all of an SFN scheme, an FDM scheme, a TDM scheme, and an SDM scheme, the first DCI indicates a first TCI state and a second TCI state, one or both of the first TCI state and the second TCI state being applied to the PDSCH is determined based on a higher layer parameter, in a case that one of the first TCI state and the second TCI state is applied to the PDSCH, the PDSCH-MTRP scheme is not applied to the PDSCH, and in a case that both of the first TCI state and the second TCI state are applied to the PDSCH, the PDSCH-MTRP scheme is applied to the PDSCH.

## Description

### Technical Field

The present invention relates to a terminal apparatus and a base station apparatus.

This application claims priority to JP 2022-150165 filed on September 21, 2022, the contents of which are incorporated herein by reference.

### Background Art

In the 3^{rd} Generation Partnership Project (3GPP), a radio access method and a radio network for cellular mobile communications (hereinafter also referred to as "Long Term Evolution (LTE)" or "Evolved Universal Terrestrial Radio Access (EUTRA)") have been studied. In LTE, a base station apparatus is also referred to as an evolved NodeB (eNodeB) and a terminal apparatus is also referred to as a User Equipment (UE). LTE is a cellular communication system in which multiple areas covered by base station apparatuses are arranged in a form of cells. A single base station apparatus may manage multiple serving cells.

The 3GPP has been studying a next generation standard (New Radio or NR) (NPL 1) to make a proposal for International Mobile Telecommunication (IMT)-2020, a standard for a next generation mobile communication system developed by the International Telecommunication Union (ITU). NR is to satisfy requirements for three scenarios including enhanced Mobile BroadBand (eMBB), massive Machine Type Communication (mMTC), and Ultra Reliable and Low Latency Communication (URLLC) in a single technology framework.

In the 3GPP, extension of services supported by NR has been studied (NPL 2).

### Citation List

### Non Patent Literature

NPL 1: "New SID proposal: Study on New Radio Access Technology", RP-160671, NTT docomo, 3GPP TSG RAN Meeting #71, Goteborg, Sweden, 7th - 10th March, 2016.
NPL 2: "Release 17 package for RAN", RP-193216, RAN chairman, RAN1 chairman, RAN2 chairman, RAN3 chairman, 3GPP TSG RAN Meeting #86, Sitges, Spain, 9th - 12th December, 2019

### Summary of Invention

### Technical Problem

The present invention provides a terminal apparatus that efficiently performs communication, a communication method used for the terminal apparatus, a base station apparatus that efficiently performs communication, and a communication method used for the base station apparatus.

### Solution to Problem

(1) A first aspect of the present invention is a terminal apparatus including a receiver configured to receive a first PDCCH to which first DCI is mapped, a second PDCCH to which second DCI is mapped, and a PDSCH scheduled by the second DCI, wherein a PDSCH-MTRP scheme is configured to be applied for the PDSCH, the PDSCH-MTRP scheme is some or all of an SFN scheme, an FDM scheme, a TDM scheme, and an SDM scheme, the first DCI indicates a first TCI state and a second TCI state, one or both of the first TCI state and the second TCI state being applied to the PDSCH is determined based on the second DCI, in a case that one of the first TCI state and the second TCI state is applied to the PDSCH, the PDSCH-MTRP scheme is not applied to the PDSCH, and in a case that both of the first TCI state and the second TCI state are applied to the PDSCH, the PDSCH-MTRP scheme is applied to the PDSCH. The second DCI includes one field different from a TCI field, in a case that the one field indicates a first indication, the first TCI state is applied to the PDSCH, in a case that the one field indicates a second indication, the second TCI state is applied to the PDSCH, and in a case that the one field indicates a third indication, both of the first TCI state and the second TCI state are applied to the PDSCH.
(2) A second aspect of the present invention is a terminal apparatus including a receiver configured to receive a first PDCCH to which first DCI is mapped, a second PDCCH to which second DCI is mapped, and a PDSCH scheduled by the second DCI, wherein a PDSCH-MTRP scheme is configured to be applied for the PDSCH, the PDSCH-MTRP scheme is some or all of an SFN scheme, an FDM scheme, a TDM scheme, and an SDM scheme, the first DCI indicates a first TCI state and a second TCI state, one of the first TCI state and the second TCI state is not expected to be applied to the PDSCH, and in a case that both of the first TCI state and the second TCI state are applied to the PDSCH, the PDSCH-MTRP scheme is applied to the PDSCH. The second DCI includes one field different from a TCI field, in a case that the one field indicates a first indication, the first TCI state is applied to the PDSCH, in a case that the one field indicates a second indication, the second TCI state is applied to the PDSCH, and in a case that the one field indicates a third indication, both of the first TCI state and the second TCI state are applied to the PDSCH.
(3) A third aspect of the present invention is a base station apparatus including a transmitter configured to transmit a first PDCCH to which first DCI is mapped, a second PDCCH to which second DCI is mapped, and a PDSCH scheduled by the second DCI, wherein a PDSCH-MTRP scheme is configured to be applied for the PDSCH, the PDSCH-MTRP scheme is some or all of an SFN scheme, an FDM scheme, a TDM scheme, and an SDM scheme, the first DCI indicates a first TCI state and a second TCI state, one or both of the first TCI state and the second TCI state being applied to the PDSCH is determined based on the second DCI, in a case that one of the first TCI state and the second TCI state is applied to the PDSCH, the PDSCH-MTRP scheme is not applied to the PDSCH, and in a case that both of the first TCI state and the second TCI state are applied to the PDSCH, the PDSCH-MTRP scheme is applied to the PDSCH. The second DCI includes one field different from a TCI field, in a case that the one field indicates a first indication, the first TCI state is applied to the PDSCH, in a case that the one field indicates a second indication, the second TCI state is applied to the PDSCH, and in a case that the one field indicates a third indication, both of the first TCI state and the second TCI state are applied to the PDSCH.

### Advantageous Effects of Invention

According to the present invention, the terminal apparatus can efficiently perform communication. The base station apparatus can efficiently perform communication.

### Brief Description of Drawings

FIG. 1 is a conceptual diagram of a radio communication system according to an aspect of the present embodiment.
FIG. 2 is an example illustrating a relationship between the subcarrier spacing configuration µ, the number of OFDM symbols per slot N^{slot}_{symb}, and a cyclic Prefix (CP) configuration according to an aspect of the present embodiment.
FIG. 3 is a diagram illustrating an example of a configuration method of a resource grid according to an aspect of the present embodiment.
FIG. 4 is a diagram illustrating a configuration example of a resource grid 3001 according to an aspect of the present embodiment.
FIG. 5 is a schematic block diagram illustrating a configuration example of a base station apparatus 3 according to an aspect of the present embodiment.
FIG. 6 is a schematic block diagram illustrating a configuration example of a terminal apparatus 1 according to an aspect of the present embodiment.
FIG. 7 is a diagram illustrating a configuration example of an SS/PBCH block according to an aspect of the present embodiment.
FIG. 8 is a diagram illustrating an example of monitoring occasions for search space sets according to an aspect of the present embodiment.
FIG. 9 is a diagram illustrating an example of an activation command A according to an aspect of the present embodiment.
FIG. 10 is a diagram illustrating an example of an activation command B according to an aspect of the present embodiment.
FIG. 11 is a diagram illustrating an example of an activation command C according to an aspect of the present embodiment.
FIG. 12 is a diagram illustrating an example of an activation command D according to an aspect of the present embodiment.
FIG. 13 is a diagram illustrating an example of an activation command E according to an aspect of the present embodiment.
FIG. 14 is a diagram illustrating an example of management of a TCI state according to an aspect of the present embodiment.

### Description of Embodiments

An embodiment of the present invention will be described below.

floor(C) may be a floor function for a real number C. For example, floor(C) may be a function that outputs a maximum integer in a range of not exceeding the real number C. ceil(D) may be a ceiling function for a real number D. For example, ceil(D) may be a function that outputs a minimum integer in a range of not falling below the real number D. mod(E, F) may be a function that outputs a remainder obtained by dividing E by F. mod(E, F) may be a function that outputs a value corresponding to the remainder obtained by dividing E by F. exp(G) = e^G. Here, e is a Napier's constant. H^I represents H to the power of I. max(J, K) is a function that outputs a maximum value out of J and K. Here, in a case that J and K are equal, max(J, K) is a function that outputs J or K. min(L, M) is a function that outputs a maximum value out of L and M. Here, in a case that L and M are equal, min(L, M) is a function that outputs L or M. round(N) is a function that outputs an integer value of a value closest to N. "·" represents multiplication.

In the radio communication system according to an aspect of the present embodiment, at least Orthogonal Frequency Division Multiplex (OFDM) is used. The OFDM symbol is a time domain unit of the OFDM. The OFDM symbol includes at least one or multiple subcarriers. The OFDM symbol is converted into a time-continuous signal in baseband signal generation. In downlink, at least Cyclic Prefix-Orthogonal Frequency Division Multiplexing (CP-OFDM) is used. In an uplink, either CP-OFDM or Discrete Fourier Transform-spread-Orthogonal Frequency Division Multiplex (DFT-s-OFDM) is used. DFT-s-OFDM may be given by applying Transform precoding to the CP-OFDM.

The OFDM symbol may be a term including a CP added to the OFDM symbol. That is, a certain OFDM symbol may include the certain OFDM symbol and the CP added to the certain OFDM symbol.

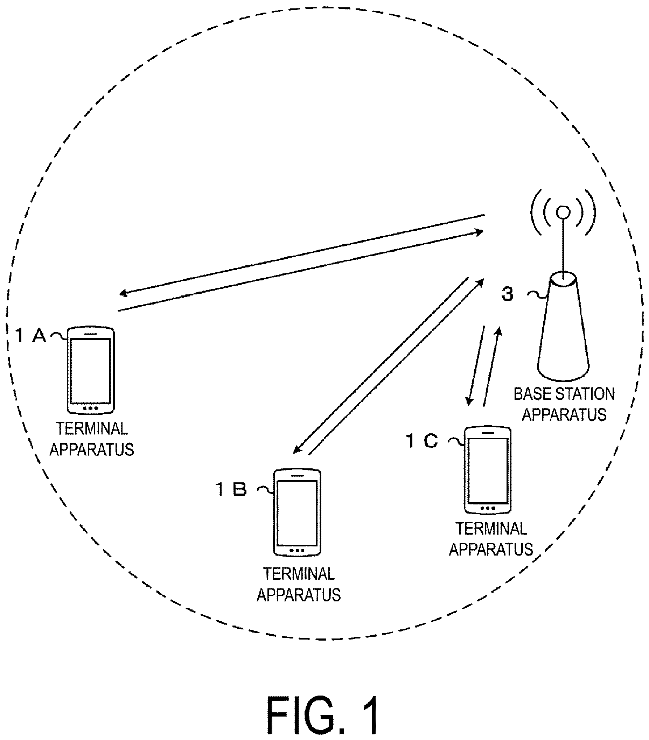

FIG. 1 is a conceptual diagram of a radio communication system according to an aspect of the present embodiment. In FIG. 1, the radio communication system includes at least terminal apparatuses 1A to 1C and a base station apparatus 3 (Base station #3 (BS #3)). Hereinafter, the terminal apparatuses 1A to 1C are also referred to as a terminal apparatus 1 (User Equipment #1 (UE #1)).

The base station apparatus 3 may include one or multiple transmission apparatuses (or transmission points, transmission and/or reception apparatuses, transmission and/or reception points). In a case that the base station apparatus 3 includes multiple transmission apparatuses, the multiple transmission apparatuses may be arranged at different positions.

The base station apparatus 3 may provide one or multiple serving cells. Each serving cell may be defined as a set of resources used for radio communication. The serving cell is also referred to as a cell.

The serving cell may include one or both of one downlink component carrier (downlink carrier) and one uplink component carrier (uplink carrier). The serving cell may include either or both of two or more downlink component carriers, and/or two or more uplink component carriers. The downlink component carrier and the uplink component carrier are also collectively referred to as a component carrier (carrier).

For example, for each component carrier, one resource grid may be given. For each set of one component carrier and a certain subcarrier spacing configuration µ, one resource grid may be given. Here, the subcarrier spacing configuration µ is also referred to as numerology. For example, for a set of a certain antenna port p, a certain subcarrier spacing configuration µ, and a certain transmission direction x, one resource grid may be given.

The resource grid includes N^{size, µ}_{grid, x}N^{RB}_{sc} subcarriers. Here, the resource grid starts from a common resource block N^{start, µ}_{grid, x.} The common resource block N^{start, µ}_{grid, x} is also referred to as a reference point of the resource grid.

The resource grid includes N^{subframe, µ}_{symb} OFDM symbols.

The subscript x added to the parameter associated with the resource grid indicates the transmission direction. For example, the subscript x may be used to indicate either of a downlink or an uplink.

N^{size, µ}_{grid, x} is an offset configuration indicated by a parameter provided by the RRC layer (e.g., parameter CarrierBandwidth). N^{start, µ}_{grid, x} is a band configuration indicated by a parameter provided by the RRC layer (e.g., parameter, OffsetToCarrier). The offset configuration and the band configuration are configurations used for configuring an SCS-specific carrier.

The SubCarrier Spacing (SCS) Δf for a certain subcarrier spacing configuration µ may be Δf = 2^{µ} * 15 kHz. Here, the subcarrier spacing configuration µ may indicate one of 0, 1, 2, 3, or 4.

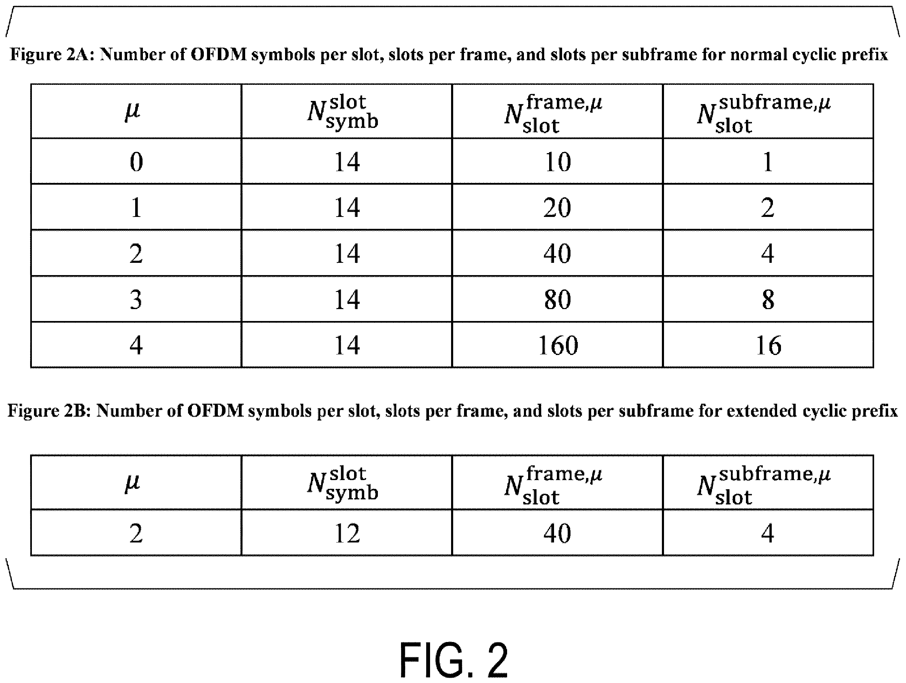

FIG. 2 is an example illustrating a relationship between the subcarrier spacing configuration µ, the number of OFDM symbols per slot N^{slot}_{symb}, and a cyclic Prefix (CP) configuration according to an aspect of the present embodiment. In FIG. 2A, for example, in a case that the subcarrier spacing configuration µ is two and the CP configuration is a normal cyclic prefix (normal CP), N^{slot}_{symb} = 14, N^{frame, µ}ₛₗₒₜ = 40, and N^{subframe, µ}ₛₗₒₜ = 4. In FIG. 2B, for example, in a case that the subcarrier spacing configuration µ is two and the CP configuration is an extended cyclic prefix (extended CP), N^{slot}_{symb} = 12, N^{frame, µ}ₛₗₒₜ = 40, and N^{subframe, µ}ₛₗₒₜ = 4.

The time unit T_{c} may be used to represent the length of the time domain. The time unit T_{c} is T_{c} = 1/(Δfₘₐₓ · N_{f}). Δfₘₐₓ = 480 kHz. N_{f} = 4096. A constant κ is κ = Δfₘₐₓ · N_{f}/(Δf_{ref}N_{f, ref}) = 64. Δf_{ref} is 15 kHz. N_{f, ref} is 2048.

Transmission of a signal in the downlink and/or transmission of a signal in the uplink may be organized into a radio frame (system frame, frame) having the length T_{f}. T_{f} = (ΔfₘₐₓN_{f}/100) · Tₛ = 10 ms. The radio frame includes 10 subframes. The length T_{sf} of the subframe is (ΔfₘₐₓN_{f}/1000) · Tₛ = 1 ms. The number of OFDM symbols per subframe is N^{subframe, µ}_{symb} = N^{slot}_{symb}N^{subframe, µ}ₛₗₒₜ.

The OFDM symbol is a time domain unit of one communication scheme. For example, the OFDM symbol may be a time domain unit of CP-OFDM. The OFDM symbol may be a time domain unit of DFT-s-OFDM.

The slot may include multiple OFDM symbols. For example, N^{slot}_{symb} continuous OFDM symbols may constitute one slot. For example, in normal CP configuration, N^{slot}_{symb} may be 14. In extended CP configuration, N^{slot}_{symb} may be 12.

For a certain subcarrier spacing configuration µ, the number and indices of slots included in the subframe may be given. For example, slot indices n^{µ}ₛ may be given in ascending order in the subframe with integer values within a range of 0 to N^{subframe, µ}ₛₗₒₜ - 1. For the subcarrier spacing configuration µ, the number and indices of slots included in the radio frame may be given. Slot indices n^{µ}_{s, f} may be given in ascending order in the radio frame with integer values within a range of 0 to N^{frame, µ}ₛₗₒₜ - 1.

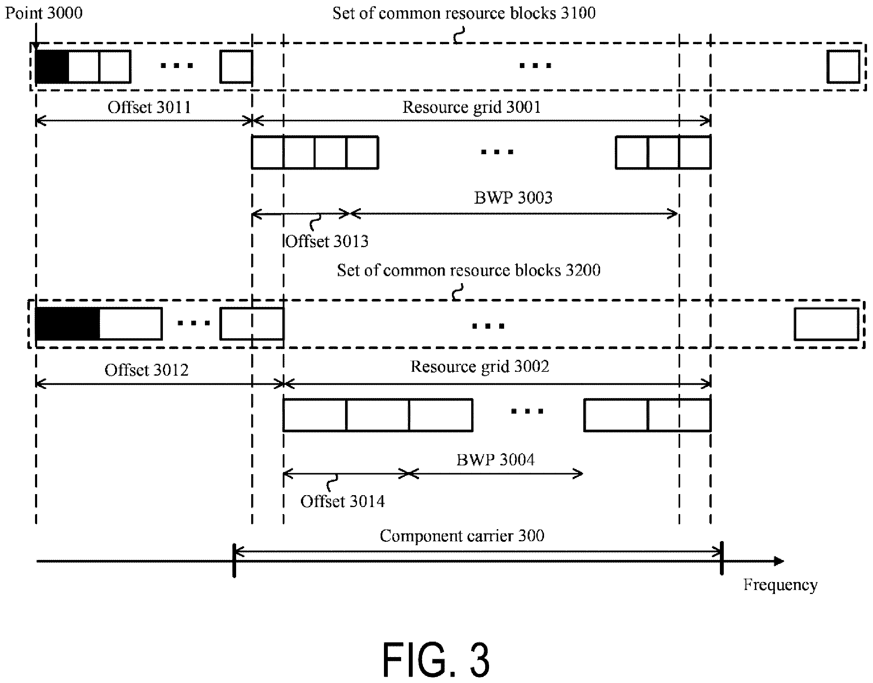

FIG. 3 is a diagram illustrating an example of a configuration method of the resource grid according to an aspect of the present embodiment. The horizontal axis of FIG. 3 represents a frequency domain. FIG. 3 illustrates a configuration example of a resource grid of a subcarrier spacing µ₁ in a component carrier 300, and a configuration example of a resource grid of a subcarrier spacing µ₂ in the certain component carrier. As described above, for a certain component carrier, one or multiple subcarrier spacings may be configured. In FIG. 3, it is assumed that µ₁ = µ₂ - 1, but various aspects of the present embodiment are not limited to the condition of µ₁ = µ₂ - 1.

The component carrier 300 is a band having a predetermined width in the frequency domain.

A Point 3000 is an identifier for identifying a certain subcarrier. The point 3000 is also referred to as a point A. A Common resource block (CRB) set 3100 is a set of common resource blocks for the subcarrier spacing configuration µ₁.

In the common resource block set 3100, a common resource block (solid black block in the common resource block set 3100 in FIG. 3) including the point 3000 is also referred to as a reference point of the common resource block set 3100. The reference point of the common resource block set 3100 may be a common resource block having an index of 0 in the common resource block set 3100.

An offset 3011 is an offset from the reference point of the common resource block set 3100 to a reference point of a resource grid 3001. The offset 3011 is represented by the number of common resource blocks for the subcarrier spacing configuration µ₁. The resource grid 3001 includes N^{size, µ}_{grid1, x} common resource blocks starting from the reference point of the resource grid 3001.

An offset 3013 is an offset from the reference point of the resource grid 3001 to a reference point (N^{start, µ}_{BWP, i1}) of a BandWidth Part (BWP) 3003 having an index of i1.

A common resource block set 3200 is a set of common resource blocks for the subcarrier spacing configuration µ₂.

In the common resource block set 3200, a common resource block (solid black block in the common resource block set 3200 in FIG. 3) including the point 3000 is also referred to as a reference point of the common resource block set 3200. The reference point of the common resource block set 3200 may be a common resource block having an index of 0 in the common resource block set 3200.

An offset 3012 is an offset from the reference point of the common resource block set 3200 to a reference point of a resource grid 3002. The offset 3012 is represented by the number of common resource blocks for the subcarrier spacing µ₂. The resource grid 3002 includes N^{size, µ}_{grid2, x} common resource blocks starting from the reference point of the resource grid 3002.

An offset 3014 is an offset from the reference point of the resource grid 3002 to a reference point (N^{start, µ}_{BWP, i2}) of a BWP 3004 having an index of i2.

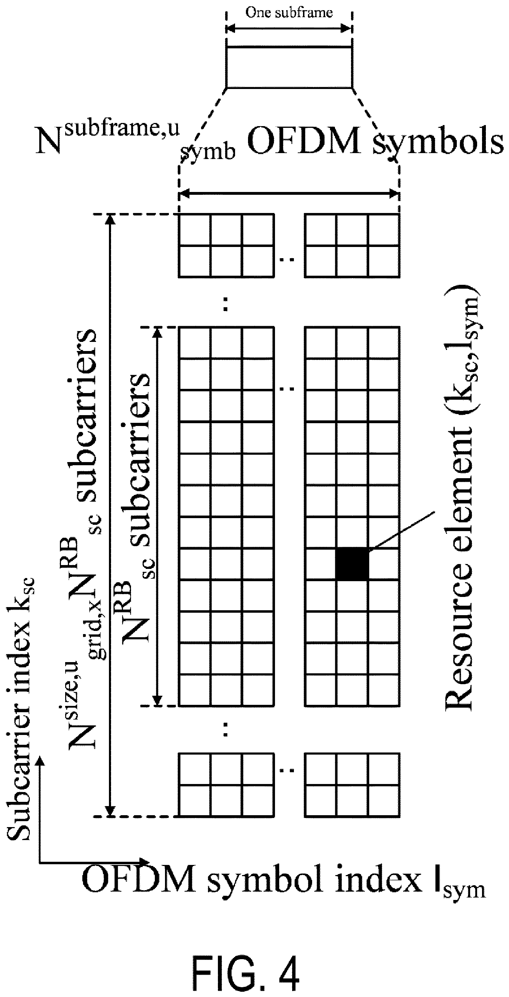

FIG. 4 is a diagram illustrating a configuration example of the resource grid 3001 according to an aspect of the present embodiment. In the resource grid of FIG. 4, the horizontal axis corresponds to an OFDM symbol index l_{sym}, and the vertical axis corresponds to a subcarrier index k_{sc}. The resource grid 3001 includes N^{size, µ}_{grid1, x}N^{RB}_{sc} subcarriers, and N^{subframe, µ}_{symb} OFDM symbols. In the resource grid, a resource identified by the subcarrier index k_{sc} and the OFDM symbol index l_{sym} is also referred to as a Resource Element (RE).

The Resource Block (RB) includes N^{RB}_{sc} consecutive subcarriers. The resource block is a general term for a common resource block, a Physical Resource Block (PRB), and a Virtual Resource Block (VRB). Here, N^{RB}_{sc} is 12.

A resource block unit is a set of resources corresponding to one OFDM symbol in one resource block. That is, one resource block unit includes 12 resource elements corresponding to one OFDM symbol in one resource block.

The common resource blocks for a certain subcarrier spacing configuration µ are assigned indices in ascending order from 0 in the frequency domain in a certain common resource block set (indexing). The common resource block having an index of 0 for a certain subcarrier spacing configuration µ includes (or collides with, matches) the point 3000. An index n^{µ}_{CRB} of the common resource block for a certain subcarrier spacing configuration µ satisfies a relationship of n^{µ}_{CRB} = ceil(k_{sc}/N^{RB}_{sc}). Here, a subcarrier with k_{sc} = 0 is a subcarrier having the same center frequency as the center frequency of a subcarrier corresponding to the point 3000.

Physical resource blocks for a certain subcarrier spacing configuration µ are assigned indices in ascending order from 0 in the frequency domain in a certain BWP. An index n^{µ}_{PRB} of the physical resource block for a certain subcarrier spacing configuration µ satisfies a relationship of n^{µ}_{CRB} = n^{µ}_{PRB} + N^{start, µ}_{BWP, i}. Here, N^{start, µ}_{BWP, i} indicates a reference point of the BWP having an index of i.

The BWP is defined as a subset of common resource blocks included in the resource grid. The BWP includes N^{size, µ}_{BWP, i} common resource blocks starting from the reference point N^{start, µ}_{BWP, i} of the BWP. The BWP configured for the downlink carrier is also referred to as a downlink BWP. The BWP configured for the uplink component carrier is also referred to as an uplink BWP.

An antenna port is defined such that the channel over which a symbol on the antenna port is conveyed can be inferred from the channel over which another symbol on the same antenna port is conveyed. For example, the channel may correspond to a physical channel. The symbol may correspond to an OFDM symbol. The symbol may also correspond to the resource block unit. The symbol may correspond to the resource element.

The fact that a large scale property of a channel over which a symbol on one antenna port is conveyed can be inferred from a channel over which a symbol on another antenna port is conveyed is referred to as the two antenna ports being Quasi Co-Located (QCL). Here, the large scale property may include at least long term performance of a channel. The large scale property may include at least a part or all of delay spread, Doppler spread, Doppler shift, an average gain, an average delay, and a beam parameter (spatial Rx parameters). The fact that the first antenna port and the second antenna port are QCL with respect to a beam parameter may mean that a reception beam assumed by a receiver side for the first antenna port and a reception beam assumed by the receiver side for the second antenna port are the same (or the reception beams correspond to each other). The fact that the first antenna port and the second antenna port are QCL with respect to a beam parameter may mean that a transmission beam assumed by a receiver side for the first antenna port and a transmission beam assumed by the receiver side for the second antenna port are the same (or the transmission beams correspond to each other). In a case that the large scale property of a channel over which a symbol on one antenna port is conveyed can be inferred from a channel over which a symbol on another antenna port is conveyed, the terminal apparatus 1 may assume that the two antenna ports are QCL. The fact that two antenna ports are QCL may mean that the two antenna ports are assumed to be QCL. The large scale property may be referred to as a QCL parameter.

The QCL type may be one of type A, type B, type C, and type D.

The fact that two antenna ports are QCLed with type A may mean that a first large scale property of a channel over which a symbol on one antenna port is conveyed can be inferred from a channel over which a symbol on another antenna port is conveyed. The fact that two antenna ports are QCLed with type B may mean that a second large scale property of a channel over which a symbol on one antenna port is conveyed can be inferred from a channel over which a symbol on another antenna port is conveyed. The fact that two antenna ports are QCLed with type C may mean that a third large scale property of a channel over which a symbol on one antenna port is conveyed can be inferred from a channel over which a symbol on another antenna port is conveyed. The fact that two antenna ports are QCLed with type D may mean that a fourth large scale property of a channel over which a symbol on one antenna port is conveyed can be inferred from a channel over which a symbol on another antenna port is conveyed. The first large scale property may include all of a Doppler shift, a Doppler spread, an average delay, and a delay spread. The second large scale property may include all of a Doppler shift and a Doppler spread. The third large scale property may include all of a Doppler shift and an average delay. The fourth large scale property may include spatial reception parameters (information of a spatial direction, information of a beam). An antenna port of a DMRS may be a DMRS port. For example, an antenna port of a PTRS may be a PTRS antenna port. An antenna port associated with a PTRS may be a PTRS port. An antenna port for an SRS may be an SRS port. An antenna port for a DMRS may be a DMRS port. An antenna port associated with a DMRS may be a DMRS port.

Carrier aggregation may mean that communication is performed by using multiple serving cells being aggregated. Carrier aggregation may mean that communication is performed by using multiple component carriers being aggregated. Carrier aggregation may mean that communication is performed by using multiple downlink component carriers being aggregated. Carrier aggregation may mean that communication is performed by using multiple uplink component carriers being aggregated.

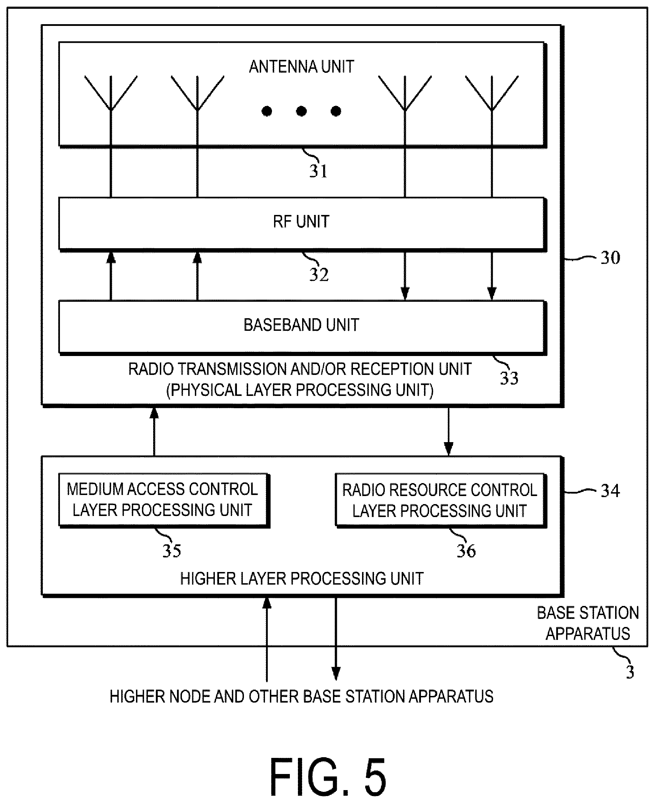

FIG. 5 is a schematic block diagram illustrating a configuration example of the base station apparatus 3 according to an aspect of the present embodiment. As illustrated in FIG. 5, the base station apparatus 3 includes at least a part or all of a radio transmission and/or reception unit (physical layer processing unit) 30 and/or a Higher layer processing unit 34. The radio transmission and/or reception unit 30 includes at least a part or all of an antenna unit 31, a Radio Frequency (RF) unit 32, and a baseband unit 33. The higher layer processing unit 34 includes at least a part or all of a medium access control layer processing unit 35 and a Radio Resource Control (RRC) layer processing unit 36.

The radio transmission and/or reception unit 30 includes at least a part or all of a radio transmission unit 30a and a radio reception unit 30b. Here, apparatus configurations of the baseband unit included in the radio transmission unit 30a and the baseband unit included in the radio reception unit 30b may be the same or different from each other. Apparatus configurations of the RF unit included in the radio transmission unit 30a and the RF unit included in the radio reception unit 30b may be the same or different from each other. Apparatus configurations of the antenna unit included in the radio transmission unit 30a and the antenna unit included in the radio reception unit 30b may be the same or different from each other.

For example, the radio transmission unit 30a may generate and transmit a baseband signal of the PDSCH. For example, the radio transmission unit 30a may generate and transmit a baseband signal of the PDCCH. For example, the radio transmission unit 30a may generate and transmit a baseband signal of the PBCH. For example, the radio transmission unit 30a may generate and transmit a baseband signal of a synchronization signal. For example, the radio transmission unit 30a may generate and transmit a baseband signal of the PDSCH DMRS. For example, the radio transmission unit 30a may generate and transmit a baseband signal of the PDCCH DMRS. For example, the radio transmission unit 30a may generate and transmit a baseband signal of the CSI-RS. For example, the radio transmission unit 30a may generate and transmit a baseband signal of the DL PTRS.

For example, the radio reception unit 30b may receive the PRACH. For example, the radio reception unit 30b may receive and demodulate the PUCCH. The radio reception unit 30b may receive and demodulate the PUSCH. For example, the radio reception unit 30b may receive the PUCCH DMRS. For example, the radio reception unit 30b may receive the PUSCH DMRS. For example, the radio reception unit 30b may receive the UL PTRS. For example, the radio reception unit 30b may receive the SRS.

The higher layer processing unit 34 outputs downlink data (a transport block) to the radio transmission and/or reception unit 30 (or the radio transmission unit 30a). The higher layer processing unit 34 performs processing operations of a Medium Access Control (MAC) layer, a Packet Data Convergence Protocol (PDCP) layer, a Radio Link Control (RLC) layer, and an RRC layer.

The medium access control layer processing unit 35 included in the higher layer processing unit 34 performs processing of the MAC layer.

The radio resource control layer processing unit 36 included in the higher layer processing unit 34 performs processing of the RRC layer. The radio resource control layer processing unit 36 manages various pieces of configuration information/parameters (RRC parameters) of the terminal apparatus 1. The radio resource control layer processing unit 36 sets the parameter based on an RRC message received from the terminal apparatus 1.

The radio transmission and/or reception unit 30 (or the radio transmission unit 30a) performs processing such as modulation and encoding. The radio transmission and/or reception unit 30 (or the radio transmission unit 30a) generates a physical signal through modulation, encoding, and baseband signal generation (conversion into the time-continuous signal) on the downlink data, and transmits the physical signal to the terminal apparatus 1. The radio transmission and/or reception unit 30 (or the radio transmission unit 30a) may map the physical signal to a certain component carrier and transmit the physical signal to the terminal apparatus 1.

The radio transmission and/or reception unit 30 (or the radio reception unit 30b) performs processing such as demodulation and decoding. The radio transmission and/or reception unit 30 (or the radio reception unit 30b) separates, demodulates, and decodes the received physical signal, and outputs the decoded information to the higher layer processing unit 34. The radio transmission and/or reception unit 30 (or the radio reception unit 30b) may perform a channel access procedure prior to transmission of the physical signal.

The RF unit 32 converts (down converts) a signal received via the antenna unit 31 into a baseband signal by means of orthogonal demodulation and removes unnecessary frequency components. The RF unit 32 outputs a processed analog signal to the baseband unit.

The baseband unit 33 converts an analog signal input from the RF unit 32 into a digital signal. The baseband unit 33 removes a portion corresponding to a Cyclic Prefix (CP) from the converted digital signal, performs a Fast Fourier Transform (FFT) on the signal from which the CP has been removed, and extracts a signal in the frequency domain.

The baseband unit 33 performs Inverse Fast Fourier Transform (IFFT) on the data to generate an OFDM symbol, adds a CP to the generated OFDM symbol, generates a baseband digital signal, and converts the baseband digital signal into an analog signal. The baseband unit 33 outputs the converted analog signal to the RF unit 32.

The RF unit 32 removes an unnecessary frequency component from the analog signal input from the baseband unit 33 by using a low-pass filter, upconverts the analog signal into a signal having a carrier frequency, and transmits the signal via the antenna unit 31. The RF unit 32 may have a function of controlling transmit power. The RF unit 32 is also referred to as a transmit power control unit.

For the terminal apparatus 1, one or multiple serving cells (or component carriers, downlink component carriers, uplink component carriers) may be configured.

Each of the serving cells configured for the terminal apparatus 1 may be one of a Primary cell (PCell), a Primary SCG cell (PSCell), or a Secondary Cell (SCell).

The PCell is a serving cell included in a Master Cell Group (MCG). The PCell is a cell in which an initial connection establishment procedure or a connection re-establishment procedure is performed (has been performed) by the terminal apparatus 1.

The PSCell is a serving cell included in a Secondary Cell Group (SCG). The PSCell is a serving cell in which random access is performed by the terminal apparatus 1.

The SCell may be included in either of the MCG or the SCG.

A serving cell group (cell group) is a term at least including an MCG and an SCG. The serving cell group may include one or multiple serving cells (or component carriers). One or multiple serving cells (or component carriers) included in the serving cell group may be operated by means of carrier aggregation.

One or multiple downlink BWPs may be configured for each of the serving cells (or downlink component carriers). One or multiple uplink BWPs may be configured for each of the serving cells (or uplink component carriers).

Among one or multiple downlink BWPs configured for the serving cell (or the downlink component carrier), one downlink BWP may be configured as an active downlink BWP (or one downlink BWP may be activated). Among one or multiple uplink BWPs configured for the serving cell (or the uplink component carrier), one uplink BWP may be configured as an active uplink BWP (or one uplink BWP may be activated).

The PDSCH, the PDCCH, and the CSI-RS may be received in the active downlink BWP. The terminal apparatus 1 may attempt to receive the PDSCH, the PDCCH, and the CSI-RS in the active downlink BWP. The PUCCH and the PUSCH may be transmitted in the active uplink BWP. The terminal apparatus 1 may transmit the PUCCH and the PUSCH in the active uplink BWP. The active downlink BWP and the active uplink BWP are also collectively referred to as an active BWP.

The PDSCH, the PDCCH, and the CSI-RS need not be received in downlink BWPs (inactive downlink BWPs) other than the active downlink BWP. The terminal apparatus 1 need not attempt to receive the PDSCH, the PDCCH, and the CSI-RS in downlink BWPs that are not the active downlink BWP. The PUCCH and the PUSCH need not be transmitted in uplink BWPs (inactive uplink BWPs) that are not the active uplink BWP. The terminal apparatus 1 need not transmit the PUCCH and the PUSCH in uplink BWPs that are not the active uplink BWP. The inactive downlink BWP and the inactive uplink BWP are also collectively referred to as an inactive BWP.

Downlink BWP switch is a procedure for deactivating one active downlink BWP of a certain serving cell and activating any one of the inactive downlink BWPs of the certain serving cell. The downlink BWP switch may be controlled by a BWP field included in downlink control information. The downlink BWP switch may be controlled based on a higher layer parameter.

Uplink BWP switch is used for deactivating one active uplink BWP and activating any one of the inactive uplink BWPs that are not the one active uplink BWP. The uplink BWP switch may be controlled by a BWP field included in downlink control information. The uplink BWP switch may be controlled based on a higher layer parameter.

Among one or multiple downlink BWPs configured for the serving cell, two or more downlink BWPs need not be configured for the active downlink BWP. For the serving cell, at certain times, one downlink BWP may be active.

Among one or multiple uplink BWPs configured for the serving cell, two or more uplink BWPs need not be configured for the active uplink BWP. For the serving cell, at certain times, one uplink BWP may be active.

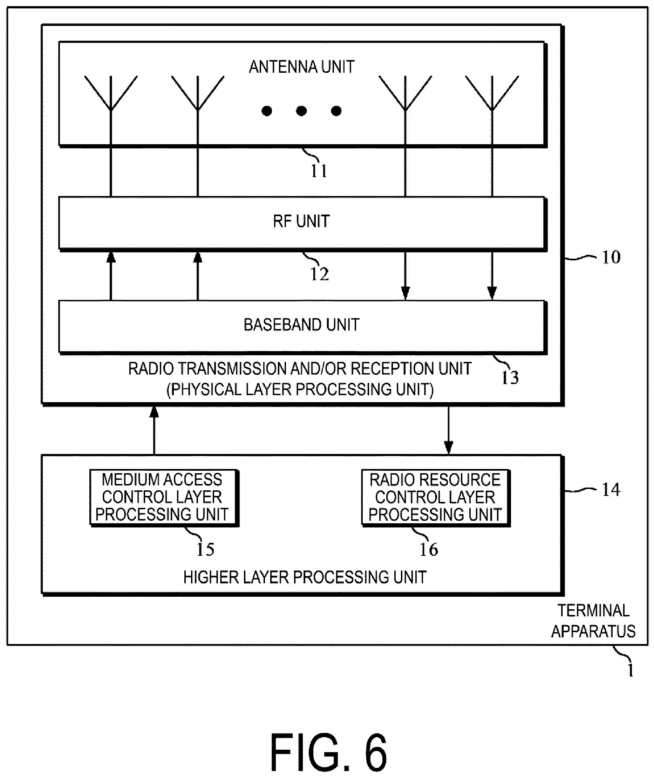

FIG. 6 is a schematic block diagram illustrating a configuration example of the terminal apparatus 1 according to an aspect of the present embodiment. As illustrated in FIG. 6, the terminal apparatus 1 includes at least one or all of a radio transmission and/or reception unit (physical layer processing unit) 10 and a higher layer processing unit 14. The radio transmission and/or reception unit 10 includes at least a part or all of an antenna unit 11, an RF unit 12, and a baseband unit 13. The higher layer processing unit 14 includes at least a part or all of a medium access control layer processing unit 15 and a radio resource control layer processing unit 16.

The radio transmission and/or reception unit 10 includes at least a part or all of a radio transmission unit 10a and a radio reception unit 10b. Here, apparatus configurations of the baseband unit 13 included in the radio transmission unit 10a and the baseband unit 13 included in the radio reception unit 10b may be the same or different from each other. Apparatus configurations of the RF unit 12 included in the radio transmission unit 10a and the RF unit 12 included in the radio reception unit 10b may be the same or different from each other. Apparatus configurations of the antenna unit 11 included in the radio transmission unit 10a and the antenna unit 11 included in the radio reception unit 10b may be the same or different from each other.

For example, the radio transmission unit 10a may generate and transmit a baseband signal of the PRACH. For example, the radio transmission unit 10a may generate and transmit a baseband signal of the PUCCH. The radio transmission unit 10a may generate and transmit a baseband signal of the PUSCH. For example, the radio transmission unit 10a may generate and transmit a baseband signal of the PUCCH DMRS. For example, the radio transmission unit 10a may generate and transmit a baseband signal of the PUSCH DMRS. For example, the radio transmission unit 10a may generate and transmit a baseband signal of the UL PTRS. For example, the radio transmission unit 10a may generate and transmit a baseband signal of the SRS.

For example, the radio reception unit 10b may receive and demodulate the PDSCH. For example, the radio reception unit 10b may receive and demodulate the PDCCH. For example, the radio reception unit 10b may receive and demodulate the PBCH. For example, the radio reception unit 10b may receive the synchronization signal. For example, the radio reception unit 10b may receive the PDSCH DMRS. For example, the radio reception unit 10b may receive the PDCCH DMRS. For example, the radio reception unit 10b may receive the CSI-RS. For example, the radio reception unit 10b may receive the DL PTRS.

The higher layer processing unit 14 outputs uplink data (a transport block) to the radio transmission and/or reception unit 10 (or the radio transmission unit 10a). The higher layer processing unit 14 performs processing operations of the MAC layer, a packet data convergence protocol layer, a radio link control layer, and the RRC layer.

The medium access control layer processing unit 15 included in the higher layer processing unit 14 performs processing of the MAC layer.

The radio resource control layer processing unit 16 included in the higher layer processing unit 14 performs processing of the RRC layer. The radio resource control layer processing unit 16 manages various pieces of configuration information/parameters (RRC parameters) of the terminal apparatus 1. The radio resource control layer processing unit 16 sets the RRC parameters based on an RRC message received from the base station apparatus 3.

The radio transmission and/or reception unit 10 (or the radio transmission unit 10a) performs processing such as modulation and encoding. The radio transmission and/or reception unit 10 (or the radio transmission unit 10a) generates a physical signal through modulation, encoding, and baseband signal generation (conversion into the time-continuous signal) on the uplink data and transmits the physical signal to the base station apparatus 3. The radio transmission and/or reception unit 10 (or the radio transmission unit 10a) may map the physical signal to a certain BWP (an active uplink BWP) and transmit the physical signal to the base station apparatus 3.

The radio transmission and/or reception unit 10 (or the radio reception unit 10b) performs processing such as demodulation and decoding. The radio transmission and/or reception unit 10 (or the radio reception unit 30b) may receive a physical signal in a certain BWP (active downlink BWP) of a certain serving cell. The radio transmission and/or reception unit 10 (or the radio reception unit 10b) separates, demodulates, and decodes the received physical signal and outputs the decoded information to the higher layer processing unit 14. The radio transmission and/or reception unit 10 (radio reception unit 10b) may perform the channel access procedure prior to the transmission of the physical signal.

The RF unit 12 converts (down converts) a signal received via the antenna unit 11 into a baseband signal by means of orthogonal demodulation and removes unnecessary frequency components. The RF unit 12 outputs a processed analog signal to the baseband unit 13.

The baseband unit 13 converts the analog signal input from the RF unit 12 into a digital signal. The baseband unit 13 removes a portion corresponding to a Cyclic Prefix (CP) from the converted digital signal, performs a Fast Fourier Transform (FFT) on the signal from which the CP has been removed, and extracts a signal in the frequency domain.

The baseband unit 13 performs Inverse Fast Fourier Transform (IFFT) on the uplink data to generate an OFDM symbol, adds a CP to the generated OFDM symbol, generates a baseband digital signal, and converts the baseband digital signal into an analog signal. The baseband unit 13 outputs the converted analog signal to the RF unit 12.

The RF unit 12 removes unnecessary frequency components from the analog signal input from the baseband unit 13 by using a low-pass filter, upconverts the analog signal into a signal having a carrier frequency, and transmits the signal via the antenna unit 11. The RF unit 12 may have a function of controlling transmit power. The RF unit 12 is also referred to as a transmit power control unit.

The physical signal (signal) will be described below.

The physical signal is a general term for a downlink physical channel, a downlink physical signal, an uplink physical channel, and an uplink physical channel. The physical channel is a general term for a downlink physical channel and an uplink physical channel. The physical signal is a general term for a downlink physical signal and an uplink physical signal. The physical signal may be referred to as a reference signal.

The uplink physical channel may correspond to a set of resource elements for conveying information that is generated in a Higher layer. The uplink physical channel may be a physical channel used in the uplink component carrier. The uplink physical channel may be transmitted by the terminal apparatus 1. The uplink physical channel may be received by the base station apparatus 3. In the radio communication system according to an aspect of the present embodiment, at least a part or all of the following uplink physical channels may be used.
- Physical Uplink Control CHannel (PUCCH)
- Physical Uplink Shared CHannel (PUSCH)
- Physical Random Access CHannel (PRACH)

The PUCCH may be used to transmit Uplink Control Information (UCI). The PUCCH may be transmitted for conveying (delivering, transmitting) the uplink control information. The uplink control information may be mapped to the PUCCH. The terminal apparatus 1 may transmit the PUCCH to which the uplink control information is mapped. The base station apparatus 3 may receive the PUCCH to which the uplink control information is mapped.

The uplink control information (uplink control information bit, uplink control information sequence, uplink control information type) includes at least a part or all of Channel State Information (CSI), a Scheduling Request (SR), and Hybrid Automatic Repeat request ACKnowledgement (HARQ-ACK) information.

The channel state information is also referred to as a channel state information bit or a channel state information sequence. The scheduling request is also referred to as a scheduling request bit or a scheduling request sequence. The HARQ-ACK information is also referred to as a HARQ-ACK information bit or a HARQ-ACK information sequence.

The HARQ-ACK information may include at least a HARQ-ACK bit corresponding to a Transport block (TB). The HARQ-ACK may indicate an acknowledgement (ACK) or a negative-acknowledgement (NACK) corresponding to the transport block. The ACK may indicate that decoding of the transport block has been decoded successfully. The NACK may indicate that decoding of the transport block has not been decoded successfully. The HARQ-ACK information may include a HARQ-ACK codebook including one or multiple HARQ-ACK bits.

The transport block is a sequence of information bits delivered from a higher layer. Here, the sequence of information bits is also referred to as a bit sequence. Here, the transport block may be delivered through an UpLink - Shared CHannel (UL-SCH) of a Transport layer.

A HARQ-ACK for the transport block may be referred to as a HARQ-ACK for the PDSCH. The "HARQ-ACK for the PDSCH" indicates the HARQ-ACK for the transport block included in the PDSCH.

The HARQ-ACK may indicate an ACK or a NACK corresponding to one Code Block Group (CBG) included in the transport block.

The scheduling request may be at least used for requesting a resource of the UL-SCH for new transmission. The scheduling request bit may be used for indicating either of a positive SR or a negative SR. The scheduling request bit indicating the positive SR is also referred to as "the positive SR being conveyed". The positive SR may indicate that the terminal apparatus 1 requests resources of the UL-SCH for initial transmission. The positive SR may indicate that a scheduling request is triggered by a higher layer. The positive SR may be conveyed in a case that the higher layer indicates the scheduling request. The scheduling request bit indicating the negative SR is also referred to as "the negative SR being transmitted". The negative SR may indicate that the terminal apparatus 1 requests no resources of the UL-SCH for initial transmission. The negative SR may indicate that the scheduling request is not triggered by the higher layer. The negative SR may be conveyed in a case that the higher layer indicates no scheduling request.

Channel state information may include at least a part or all of a Channel Quality Indicator (CQI), a Precoder Matrix Indicator (PMI), and a Rank Indicator (RI). The CQI is an indicator related to quality (for example, propagation strength) of a propagation path or quality of a physical channel, and the PMI is an indicator related to a precoder. The RI is an indicator related to a transmission rank (or the number of transmission layers).

The channel state information is an indicator related to a reception state of a physical signal (for example, CSI-RS) at least used for channel measurement. The channel state information may be determined by the terminal apparatus 1 based on the reception state assumed by the physical signal at least used for channel measurement. Channel measurement may include interference measurement.

The PUCCH may correspond to a PUCCH format. The PUCCH may be a set of resource elements used for conveying the PUCCH format. The PUCCH may include the PUCCH format. The PUCCH format may be transmitted with a certain PUCCH format. Note that the PUCCH format may be interpreted as a form of information. The PUCCH format may be interpreted as a set of information set to a certain form of information.

The PUSCH may be used for conveying one or both of the transport block and the uplink control information. The transport block may be mapped to the PUSCH. The transport block delivered by the UL-SCH may be mapped to the PUSCH. The uplink control information may be mapped to the PUSCH. The terminal apparatus 1 may transmit the PUSCH to which one or both of the transport block and the uplink control information are mapped. The base station apparatus 3 may receive the PUSCH to which one or both of the transport block and the uplink control information are mapped.

The PRACH may be transmitted for conveying a random access preamble. The terminal apparatus 1 may transmit the PRACH. The base station apparatus 3 may receive the PRACH. A PRACH sequence x_{u, v}(n) is defined by x_{u, v}(n) = xᵤ(mod(n + C_{v,} L_{RA})). Here, xᵤ is a Zadoff Chu (ZC) sequence. xᵤ may be defined by xᵤ = exp(-jπui(i + 1)/L_{RA}). j is an imaginary unit. π is ratio of the circumference of a circle to its diameter. Cᵥ corresponds to a cyclic shift of the PRACH sequence. L_{RA} corresponds to the length of the PRACH sequence. L_{RA} is 839, or 139. i is an integer in the range from 0 to L_{RA} - 1. u is a sequence index for the PRACH sequence.

For each PRACH occasion, 64 random access preambles are defined. The random access preambles are identified based on the cyclic shift Cᵥ of the PRACH sequence and the sequence index u for the PRACH sequence. Each of the 64 identified random access preambles may be assigned an index.

The uplink physical signal may correspond to a set of resource elements. The uplink physical signal need not be used to convey information generated in a higher layer. Note that the uplink physical signal may be used to convey information generated in a physical layer. The uplink physical signal may be a physical signal used in the uplink component carrier. The terminal apparatus 1 may transmit the uplink physical signal. The base station apparatus 3 may receive the uplink physical signal. In the radio communication system according to an aspect of the present embodiment, at least a part or all of the following uplink physical signals may be used.
- UpLink Demodulation Reference Signal (UL DMRS)
- Sounding Reference Signal (SRS)
- UpLink Phase Tracking Reference Signal (UL PTRS)

The UL DMRS is a general term for a DMRS for the PUSCH and a DMRS for the PUCCH.

A set of antenna ports of the DMRS for the PUSCH (DMRS related to the PUSCH, DMRS included in the PUSCH, DMRS corresponding to the PUSCH) may be given based on a set of antenna ports for the PUSCH. For example, the set of antenna ports of the DMRS for the PUSCH may be the same as a set of antenna ports of the PUSCH.

Transmission of the PUSCH and transmission of the DMRS for the PUSCH may be indicated (or may be scheduled) by one DCI format. The PUSCH and the DMRS for the PUSCH may be collectively referred to as a PUSCH. Transmission of the PUSCH may mean transmission of the PUSCH and the DMRS for the PUSCH.

A propagation path of the PUSCH may be inferred from the DMRS for the PUSCH.

A set of antenna ports of the DMRS for the PUCCH (DMRS related to the PUCCH, DMRS included in the PUCCH, DMRS corresponding to the PUCCH) may be the same as a set of antenna ports of the PUCCH.

Transmission of the PUCCH and transmission of the DMRS for the PUCCH may be indicated (or may be triggered) by one DCI format. One or both of resource element mapping of the PUCCH and resource element mapping of the DMRS for the PUCCH may be given by one PUCCH format. The PUCCH and the DMRS for the PUCCH may be collectively referred to as a PUCCH. Transmission of the PUCCH may mean transmission of the PUCCH and the DMRS for the PUCCH.

A propagation path of the PUCCH may be inferred from the DMRS for the PUCCH.

The downlink physical channel may correspond to a set of resource elements for conveying information generated in a higher layer. The downlink physical channel may be a physical channel used in a downlink component carrier. The base station apparatus 3 may transmit the downlink physical channel. The terminal apparatus 1 may receive the downlink physical channel. In the radio communication system according to an aspect of the present embodiment, at least a part or all of the following downlink physical channels may be used.
- Physical Broadcast Channel (PBCH)
- Physical Downlink Control Channel (PDCCH)
- Physical Downlink Shared Channel (PDSCH)

The PBCH may be transmitted for conveying one or both of a Master Information Block (MIB) and physical layer control information. Here, the physical layer control information is information generated in the physical layer. The MIB is a set of parameters mapped to a Broadcast Control CHannel (BCCH) that is a logical channel of the MAC layer. The BCCH is mapped to the BCH that is a channel of the transport layer. The BCH may be mapped to the PBCH. The terminal apparatus 1 may receive the PBCH to which one or both of the MIB and the physical layer control information are mapped. The base station apparatus 3 may transmit the PBCH to which one or both of the MIB and/or the physical layer control information are mapped.

For example, the physical layer control information may include 8 bits. The physical layer control information may include at least a part or all of the following 0A to 0D.
0A) Radio frame bit
0B) Half radio frame (half system frame, half frame) bit
0C) SS/PBCH block index bit
0D) Subcarrier offset bit

The radio frame bit is used for indicating a radio frame in which the PBCH is transmitted (radio frame including a slot in which the PBCH is transmitted). The radio frame bit includes 4 bits. The radio frame bit may include 4 bits out of a 10-bit radio frame indicator. For example, the radio frame indicator may be at least used for identifying radio frames from index 0 to index 1023.

The half radio frame bit is used for indicating, out of the radio frame in which the PBCH is transmitted, which of the first five subframes or the last five subframes is used for transmission of the PBCH. Here, the half radio frame may include five subframes. The half radio frame may include the first five subframes out of the 10 subframes included in the radio frame. The half radio frame may include the last five subframes out of the 10 subframes included in the radio frame.

The SS/PBCH block index bit is used for indicating an SS/PBCH block index. The SS/PBCH block index bit includes 3 bits. The SS/PBCH block index bit may include 3 bits out of a 6-bit SS/PBCH block index indicator. The SS/PBCH block index indicator may be at least used for identifying SS/PBCH blocks from index 0 to index 63.

The subcarrier offset bit is used for indicating a subcarrier offset. The subcarrier offset may be used for indicating a difference between the first subcarrier to which the PBCH is mapped and the first subcarrier to which the control resource set having an index of 0 is mapped.

The PDCCH may be transmitted for conveying Downlink Control Information (DCI). The downlink control information may be mapped to the PDCCH. The terminal apparatus 1 may receive the PDCCH to which the downlink control information is mapped. The base station apparatus 3 may transmit the PDCCH to which the downlink control information is mapped.

The downlink control information may be transmitted with a DCI format. Note that the DCI format may also be interpreted to be in the format of downlink control information. The DCI format may be interpreted as a set of downlink control information set to a certain format of downlink control information.

A DCI format 0_0, a DCI format 0_1, a DCI format 1_0, and a DCI format 1_1 are DCI formats. An uplink DCI format is a general term for the DCI format 0_0 and the DCI format 0_1. A downlink DCI format is a general term for the DCI format 1_0 and the DCI format 1_1.

The DCI format 0_0 is at least used for scheduling of the PUSCH mapped to a certain cell. The DCI format 0_0 includes at least a part or all of fields listed from 1A to 1E.
1A) Identifier field for DCI formats
1B) Frequency domain resource assignment field
1C) Time domain resource assignment field
1D) Frequency hopping flag field
1E) Modulation and Coding Scheme (MCS) field

The identifier field for DCI formats may indicate whether the DCI format including the identifier field for DCI formats is an uplink DCI format or a downlink DCI format. In other words, each of the uplink DCI format and the downlink DCI format may include the identifier field for DCI formats. Here, the identifier field for DCI formats included in the DCI format 0_0 may indicate 0.

A frequency domain resource assignment field included in the DCI format 0_0 may be used for indicating assignment of frequency resources for the PUSCH.

A time domain resource assignment field included in the DCI format 0_0 may be used for indicating assignment of time resources for the PUSCH.

A frequency hopping flag field may be used for indicating whether frequency hopping is applied to the PUSCH.

An MCS field included in the DCI format 0_0 may be at least used for indicating one or both of a modulation scheme for the PUSCH and a target encoding rate. The target encoding rate may be a target encoding rate for the transport block mapped to the PUSCH. The Transport Block Size (TBS) of the PUSCH mapped to the PUSCH may be determined based on one or both of the target encoding rate and the modulation scheme for the PUSCH.

The DCI format 0_0 need not include a field used for a CSI request.

The DCI format 0_0 need not include a carrier indicator field. In other words, for the uplink component carrier to which the PUSCH scheduled by the DCI format 0_0 is mapped, the serving cell to which this uplink component carrier belongs may be the same as the serving cell of the uplink component carrier to which the PDCCH including the DCI format 0_0 is mapped. Based on detection of the DCI format 0_0 in a certain downlink component carrier of a certain serving cell, the terminal apparatus 1 may recognize that the PUSCH scheduled by the DCI format 0_0 is mapped to the uplink component carrier of the certain serving cell.

The DCI format 0_0 need not include the BWP field (BWP indicator field). Here, the DCI format 0_0 may be a DCI format for scheduling the PUSCH without changing the active uplink BWP. The terminal apparatus 1 may recognize that the PUSCH is transmitted without switching the active uplink BWP based on detection of the DCI format 0_0 used for the scheduling of the PUSCH.

The DCI format 0_1 is at least used for scheduling of the PUSCH of a certain cell (mapped to a certain cell). The DCI format 0_1 includes at least a part or all of fields listed from 2A to 2H.
2A) Identifier field for DCI formats
2B) Frequency domain resource assignment field
2C) Uplink time domain resource assignment field
2D) Frequency hopping flag field
2E) MCS field
2F) CSI request field
2G) BWP field
2H) Carrier indicator field

The identifier field for DCI formats included in the DCI format 0_1 may indicate 0.

The frequency domain resource assignment field included in the DCI format 0_1 may be used for indicating assignment of frequency resources for the PUSCH.

The time domain resource assignment field included in the DCI format 0_1 may be used for indicating assignment of time resources for the PUSCH.

The MCS field included in the DCI format 0_1 may be at least used for indicating a part or all of a modulation scheme for the PUSCH and/or a target encoding rate.

The BWP field of the DCI format 0_1 may be used for indicating an uplink BWP to which the PUSCH scheduled by the DCI format 0_1 is mapped. In other words, the DCI format 0_1 may be accompanied by a change in the active uplink BWP. The terminal apparatus 1 may recognize the uplink BWP to which the PUSCH is mapped based on detection of the DCI format 0_1 used for scheduling of the PUSCH.

The DCI format 0_1 not including the BWP field may be a DCI format for scheduling the PUSCH without changing the active uplink BWP. The terminal apparatus 1 may recognize that the PUSCH is transmitted without switching the active uplink BWP based on detection of the DCI format D0_1 which is the DCI format 0_1 used for the scheduling of the PUSCH and does not include the BWP field.

In a case that the BWP field is included in the DCI format 0_1 but the terminal apparatus 1 does not support the function of switching the BWP according to the DCI format 0_1, the terminal apparatus 1 may ignore the BWP field. In other words, the terminal apparatus 1 which does not support the function of switching the BWP may recognize that the PUSCH is transmitted without switching the active uplink BWP based on detection of the DCI format 0_1 which is the DCI format 0_1 used for the scheduling of the PUSCH and includes the BWP field. Here, in a case of supporting the function of switching the BWP, the terminal apparatus 1 may report, in a function information reporting procedure of the RRC layer, that "the terminal apparatus 1 supports the function of switching the BWP".

The CSI request field is used for indicating the report of the CSI.

In a case that the carrier indicator field is included in the DCI format 0_1, the carrier indicator field may be used for indicating the uplink component carrier to which the PUSCH is mapped. In a case that the carrier indicator field is not included in the DCI format 0_1, the uplink component carrier to which the PUSCH is mapped may be the same as the uplink component carrier to which the PDCCH including the DCI format 0_1 used for scheduling of the PUSCH is mapped. In a case that the number of uplink component carriers configured for the terminal apparatus 1 in a certain serving cell group is two or more (case that uplink carrier aggregation is operated in a certain serving cell group), the number of bits of the carrier indicator field included in the DCI format 0_1 used for scheduling of the PUSCH mapped to the certain serving cell group may be 1 bit or more (for example, 3 bits). In a case that the number of uplink component carriers configured for the terminal apparatus 1 in a certain serving cell group is one (case that uplink carrier aggregation is not operated in a certain serving cell group), the number of bits of the carrier indicator field included in the DCI format 0_1 used for scheduling of the PUSCH mapped to the certain serving cell group may be 0 bits (or the carrier indicator field need not be included in the DCI format 0_1 used for scheduling of the PUSCH mapped to the certain serving cell group).

The DCI format 1_0 is at least used for scheduling of the PDSCH mapped to a certain cell. The DCI format 1_0 includes at least a part or all of 3A to 3F.
3A) Identifier field for DCI formats
3B) Frequency domain resource assignment field
3C) Time domain resource assignment field
3D) MCS field
3E) PDSCH_HARQ feedback timing indicator field (PDSCH to HARQ feedback timing indicator field)
3F) PUCCH resource indicator field

The identifier field for DCI formats included in the DCI format 1_0 may indicate 1.

The frequency domain resource assignment field included in the DCI format 1_0 may be at least used for indicating assignment of frequency resources for the PDSCH.

The time domain resource assignment field included in the DCI format 1_0 may be at least used for indicating assignment of time resources for the PDSCH.

The MCS field included in the DCI format 1_0 may be at least used for indicating one or both of the modulation scheme for the PDSCH and the target encoding rate. The target encoding rate may be a target encoding rate for the transport block mapped to the PDSCH. The Transport Block Size (TBS) of the PDSCH mapped to the PDSCH may be determined based on one or both of the target encoding rate and the modulation scheme for the PDSCH.

The PDSCH_HARQ feedback timing indicator field may be used for indicating an offset from the slot including the last OFDM symbol of the PDSCH to the slot including the first OFDM symbol of the PUCCH.

The PUCCH resource indicator field may be a field indicating an index of any of one or multiple PUCCH resources included in a PUCCH resource set. The PUCCH resource set may include one or multiple PUCCH resources.

The DCI format 1_0 need not include the carrier indicator field. In other words, the downlink component carrier to which the PDSCH scheduled by using a DCI format 1_0 is mapped may be the same as the downlink component carrier to which the PDCCH including the DCI format 1_0 is mapped. Based on detection of the DCI format 1_0 in a certain downlink component carrier, the terminal apparatus 1 may recognize that the PDSCH scheduled by the DCI format 1_0 is mapped to the downlink component carrier.

The DCI format 1_0 need not include the BWP field. Here, DCI format 1_0 may be a DCI format for scheduling the PDSCH without changing the active downlink BWP. The terminal apparatus 1 may recognize that the PDSCH is received without switching the active downlink BWP based on detection of the DCI format 1_0 used in the scheduling of the PDSCH.

The DCI format 1_1 is at least used for scheduling of the PDSCH mapped to a certain cell. The DCI format 1_1 includes at least a part or all of 4A to 4I.
4A) Identifier field for DCI formats
4B) Frequency domain resource assignment field
4C) Time domain resource assignment field
4E) MCS field
4F) PDSCH_HARQ feedback timing indicator field
4G) PUCCH resource indicator field
4H) BWP field
4I) Carrier indicator field

The identifier field for DCI formats included in the DCI format 1_1 may indicate 1.

The frequency domain resource assignment field included in the DCI format 1_1 may be at least used for indicating assignment of frequency resources for the PDSCH.

The time domain resource assignment field included in the DCI format 1_1 may be at least used for indicating assignment of time resources for the PDSCH.

The MCS field included in the DCI format 1_1 may be at least used for indicating one or both of the modulation scheme for the PDSCH and the target encoding rate.

In a case that the PDSCH_HARQ feedback timing indicator field is included in the DCI format 1_1, the PDSCH_HARQ feedback timing indicator field may be at least used for indicating an offset from the slot including the last OFDM symbol of the PDSCH to the slot including the first OFDM symbol of the PUCCH. In a case that the PDSCH_HARQ feedback timing indicator field is not included in the DCI format 1_1, an offset from the slot including the last OFDM symbol of the PDSCH to the slot including the first OFDM symbol of the PUCCH may be identified by a higher layer parameter.

The PUCCH resource indicator field may be a field indicating an index of any of one or multiple PUCCH resources included in a PUCCH resource set.

The BWP field of the DCI format 1_1 may be used to indicate the downlink BWP to which the PDSCH scheduled by the DCI format 1_1 is mapped. In other words, the DCI format 1_1 may be accompanied by a change in the active downlink BWP. The terminal apparatus 1 may recognize the downlink BWP to which the PUSCH is mapped based on detection of the DCI format 1_1 used for the scheduling of the PDSCH.

The DCI format 1_1 not including the BWP field may be a DCI format for scheduling the PDSCH without changing the active downlink BWP. The terminal apparatus 1 may recognize that the PDSCH is received without switching the active downlink BWP based on detection of the DCI format 1_1 which is used for the scheduling of the PDSCH and does not include the BWP field.

In a case that the DCI format 1_1 includes the BWP field but the terminal apparatus 1 does not support the function of switching the BWP according to the DCI format 1_1, the terminal apparatus 1 may ignore the BWP field. In other words, the terminal apparatus 1 which does not support the function of switching the BWP may recognize that the PDSCH is received without switching the active downlink BWP based on detection of the DCI format 1_1 which is used for the scheduling of the PDSCH and includes the BWP field. Here, in a case of supporting the function of switching the BWP, the terminal apparatus 1 may report, in a function information reporting procedure of the RRC layer, that "the terminal apparatus 1 supports the function of switching the BWP".

In a case that the carrier indicator field is included in the DCI format 1_1, the carrier indicator field may be used for indicating the downlink component carrier to which the PDSCH is mapped. In a case that the carrier indicator field is not included in the DCI format 1_1, the downlink component carrier to which the PDSCH is mapped may be the same as the downlink component carrier to which the PDCCH including the DCI format 1_1 used for scheduling of the PDSCH is mapped. In a case that the number of downlink component carriers configured for the terminal apparatus 1 in a certain serving cell group is two or more (case that downlink carrier aggregation is operated in a certain serving cell group), the number of bits of the carrier indicator field included in the DCI format 1_1 used for scheduling of the PDSCH mapped to the certain serving cell group may be 1 bit or more (for example, 3 bits). In a case that the number of downlink component carriers configured for the terminal apparatus 1 in a certain serving cell group is one (case that downlink carrier aggregation is not operated in a certain serving cell group), the number of bits of the carrier indicator field included in the DCI format 1_1 used for scheduling of the PDSCH mapped to the certain serving cell group may be 0 bits (or the carrier indicator field need not be included in the DCI format 1_1 used for scheduling of the PDSCH mapped to the certain serving cell group).

The PDSCH may be transmitted for conveying the transport block. The PDSCH may be used for transmitting the transport block delivered by the DL-SCH. The PDSCH may be used for conveying the transport block. The transport block may be mapped to the PDSCH. The transport block corresponding to the DL-SCH may be mapped to the PDSCH. The base station apparatus 3 may transmit the PDSCH. The terminal apparatus 1 may receive the PDSCH.

The downlink physical signal may correspond to a set of resource elements. The downlink physical signal need not carry information generated in a higher layer. The downlink physical signal may be a physical signal used in the downlink component carrier. The downlink physical signal may be transmitted by the base station apparatus 3. The downlink physical signal may be transmitted by the terminal apparatus 1. In the radio communication system according to an aspect of the present embodiment, at least a part or all of the following downlink physical signals may be used.
- Synchronization signal (SS)
- DownLink DeModulation Reference Signal (DL DMRS)
- Channel State Information-Reference Signal (CSI-RS)
- DownLink Phase Tracking Reference Signal (DL PTRS)

The synchronization signal may be used for the terminal apparatus 1 to take synchronization in one or both of the frequency domain and the time domain in the downlink. The synchronization signal is a general term for the Primary Synchronization Signal (PSS) and the Secondary Synchronization Signal (SSS).

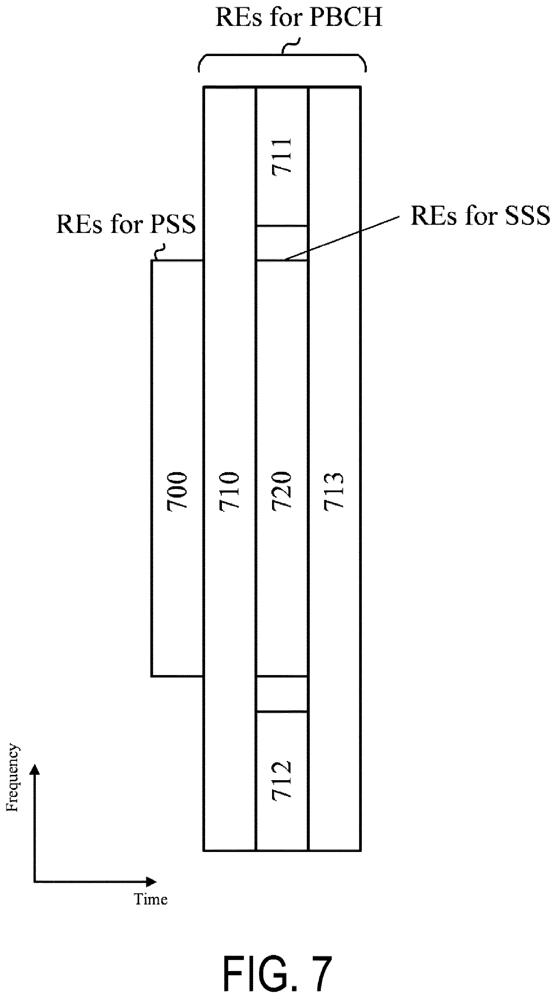

FIG. 7 is a diagram illustrating a configuration example of the SS/PBCH block according to an aspect of the present embodiment. In FIG. 7, the horizontal axis corresponds to a time axis (OFDM symbol index l_{sym}), and the vertical axis represents the frequency domain. A block 700 represents a set of resource elements for the PSS. A block 720 represents a set of resource elements for the SSS. Four blocks (blocks 710, 711, 712, and 713) represent a set of resource elements for the PBCH and the DMRS for the PBCH (DMRS related to the PBCH, DMRS included in the PBCH, DMRS corresponding to the PBCH).

As illustrated in FIG. 7, the SS/PBCH block includes the PSS, the SSS, and the PBCH. The SS/PBCH block includes four consecutive OFDM symbols. The SS/PBCH block includes 240 subcarriers. The PSS is mapped to the 57th to 183rd subcarriers in the first OFDM symbol. The SSS is mapped to the 57th to 183rd subcarriers in the third OFDM symbol. Zero may be set to the 1st to 56th subcarriers of the first OFDM symbol. Zero may be set to the 184th to 240th subcarriers of the first OFDM symbol. Zero may be set to the 49th to 56th subcarriers of the third OFDM symbol. Zero may be set to the 184th to 192nd subcarriers of the third OFDM symbol. The PBCH is mapped to subcarriers which are the 1st to 240th subcarriers of the second OFDM symbol and to which the DMRS for the PBCH is not mapped. The PBCH is mapped to subcarriers which are the 1st to 48th subcarriers of the third OFDM symbol and to which the DMRS for the PBCH is not mapped. The PBCH is mapped to subcarriers which are the 193rd to 240th subcarriers of the third OFDM symbol and to which the DMRS for the PBCH is not mapped. The PBCH is mapped to subcarriers which are the 1st to 240th subcarriers of the fourth OFDM symbol and to which the DMRS for the PBCH is not mapped.

The PSS, the SSS, the PBCH, and the antenna port of the DMRS for the PBCH may be the same.

The PBCH over which the symbol of the PBCH on a certain antenna port is conveyed may be inferred from the DMRS for the PBCH mapped to the slot to which the PBCH is mapped and for the PBCH included in the SS/PBCH block including the PBCH.

The DL DMRS is a general term for a DMRS for the PBCH, a DMRS for the PDSCH, and a DMRS for the PDCCH.

A set of antenna ports of the DMRS for the PDSCH (DMRS related to the PDSCH, DMRS included in the PDSCH, DMRS corresponding to the PDSCH) may be given based on a set of antenna ports for the PDSCH. In other words, the set of antenna ports of the DMRS for the PDSCH may be the same as the set of antenna ports for the PDSCH.

Transmission of the PDSCH and transmission of the DMRS for the PDSCH may be indicated (or may be scheduled) by one DCI format. The PDSCH and the DMRS for the PDSCH may be collectively referred to as a PDSCH. Transmission of the PDSCH may be transmission of the PDSCH and the DMRS for the PDSCH.

A propagation path of the PDSCH may be inferred from the DMRS for the PDSCH. In a case that a set of resource elements in which the symbol of a certain PDSCH is conveyed and a set of resource elements in which the symbol of the DMRS for the certain PDSCH is conveyed are included in the same Precoding Resource Group (PRG), the PDSCH over which the symbol of the PDSCH on a certain antenna port is conveyed may be inferred from the DMRS for the PDSCH.

The antenna port of the DMRS for the PDCCH (DMRS related to the PDCCH, DMRS included in the PDCCH, DMRS corresponding to the PDCCH) may be the same as the antenna port for the PDCCH.

The PDCCH may be inferred from the DMRS for the PDCCH. In other words, a propagation path of the PDCCH may be inferred from the DMRS for the PDCCH. In a case that the same precoder is (assumed to be) applied to a set of resource elements in which the symbol of a certain PDCCH is conveyed and a set of resource elements in which the symbol of the DMRS for the certain PDCCH is conveyed, the PDCCH over which the symbol of the PDCCH on a certain antenna port is conveyed may be inferred from the DMRS for the PDCCH.

A Broadcast CHannel (BCH), an Uplink-Shared CHannel (UL-SCH), and a Downlink-Shared CHannel (DL-SCH) are transport channels. A transport channel defines the relationship between a physical layer channel and a MAC layer channel (also referred to as a logical channel).

The BCH of the transport layer is mapped to the PBCH of the physical layer. In other words, a transport block passing through the BCH of the transport layer is delivered to the PBCH of the physical layer. The UL-SCH of the transport layer is mapped to the PUSCH of the physical layer. In other words, the transport block passing through the UL-SCH of the transport layer is delivered to the PUSCH of the physical layer. The DL-SCH of the transport layer is mapped to the PDSCH of the physical layer. In other words, a transport block passing through the DL-SCH of the transport layer is delivered to the PDSCH of the physical layer.

For each serving cell, one UL-SCH and one DL-SCH may be given. The BCH may be given to the PCell. The BCH need not be given to the PSCell and the SCell.

The MAC layer controls the Hybrid Automatic Repeat reQuest (HARQ) for each transport block.

A Broadcast Control CHannel (BCCH), a Common Control CHannel (CCCH), and a Dedicated Control CHannel (DCCH) are logical channels. For example, the BCCH is a channel of the RRC layer used for transmitting the MIB or system information. The Common Control CHannel (CCCH) may be used for transmitting a common RRC message in multiple terminal apparatuses 1. Here, the CCCH may be, for example, used for the terminal apparatus 1 that is not in a state of RRC connection. The Dedicated Control CHannel (DCCH) may be at least used for transmitting an RRC message dedicated to the terminal apparatus 1. Here, the DCCH may be, for example, used for the terminal apparatus 1 that is in a state of RRC connection.

The higher layer parameter common to the multiple terminal apparatuses 1 is also referred to as a common higher layer parameter. Here, the common higher layer parameter may be defined as a parameter specific to the serving cell. Here, the parameter specific to the serving cell may be a parameter common to terminal apparatuses configured with the serving cell (for example, the terminal apparatuses 1-A, 1-B, and 1-C).

For example, an RRC message delivered to the BCCH may include the common higher layer parameter. For example, an RRC message delivered on the DCCH may include the common higher layer parameter.

Among certain higher layer parameters, a higher layer parameter different from the common higher layer parameter is also referred to as a dedicated higher layer parameter. Here, the dedicated higher layer parameter may provide a dedicated RRC parameter to the terminal apparatus 1-A configured with the serving cell. In other words, the dedicated RRC parameter is a higher layer parameter capable of providing a unique configuration to each of the terminal apparatuses 1-A, 1-B, and 1-C.

The BCCH of the logical channel may be mapped to the BCH or the DL-SCH of the transport layer. For example, a transport block including the information of the MIB is delivered to the BCH of the transport layer. A transport block including system information other than the MIB is delivered to the DL-SCH of the transport layer. The CCCH is mapped to the DL-SCH or the UL-SCH. In other words, a transport block mapped to the CCCH is delivered to the DL-SCH or the UL-SCH. The DCCH is mapped to the DL-SCH or the UL-SCH. In other words, a transport block mapped to the DCCH is delivered to the DL-SCH or the UL-SCH.

The RRC message includes one or multiple parameters managed in the RRC layer. Here, the parameters managed in the RRC layer are also referred to as RRC parameters. For example, the RRC message may include the MIB. The RRC message may include the system information. The RRC message may include a message corresponding to the CCCH. The RRC message may include a message corresponding to the DCCH. The RRC message including a message corresponding to the DCCH is also referred to as a dedicated RRC message.

The higher layer parameter is an RRC parameter or a parameter included in a Medium Access Control Control Element (MAC CE). In other words, the higher layer parameter is a general term for the MIB, the system information, a message corresponding to the CCCH, a message corresponding to the DCCH, and parameters included in the MAC CE. The parameters included in the MAC CE are transmitted by a MAC Control Element (CE) command.

Procedures performed by the terminal apparatus 1 include at least a part or all of the following 5A to 5C.
5A) Cell search
5B) Random access
5C) Data communication

The cell search is a procedure used for the terminal apparatus 1 synchronizing with a certain cell related to the time domain and the frequency domain and detecting a physical cell identity (physical cell ID). In other words, by means of the cell search, the terminal apparatus 1 may perform synchronization with a certain cell in the time domain and the frequency domain and detect a physical cell ID.

A sequence of the PSS is given based at least on the physical cell ID. A sequence of the SSS is given based at least on the physical cell ID.

An SS/PBCH block candidate indicates a resource allowed to (possible to, scheduled to, configured to, defined to, having a possibility to) transmit the SS/PBCH block.

A set of SS/PBCH block candidates in a certain half radio frame is also referred to as an SS burst set. The SS burst set is also referred to as a transmission window (transmissionwindow), an SS transmission window, or a Discovery Reference Signal transmission window (DRS transmission window). The SS burst set is a general term including at least a first SS burst set and a second SS burst set.

The base station apparatus 3 transmits SS/PBCH blocks with one or multiple indices in a prescribed periodicity. The terminal apparatus 1 may detect at least one SS/PBCH block out of the SS/PBCH blocks with one or multiple indices and attempt decoding of the PBCH included in the at least one SS/PBCH block.

The random access is a procedure including at least a part or all of a message 1, a message 2, a message 3, and a message 4.

The message 1 is a procedure in which the PRACH is transmitted by the terminal apparatus 1. The terminal apparatus 1 transmits the PRACH in one PRACH occasion selected out of one or multiple PRACH occasions based at least on the index of the SS/PBCH block candidate detected based on the cell search. Each of the PRACH occasions is defined based at least on resources in the time domain and the frequency domain.

The terminal apparatus 1 transmits one random access preamble selected out of the PRACH occasions corresponding to the indices of the SS/PBCH block candidates in which the SS/PBCH block is detected.

The message 2 is a procedure for attempting to detect a DCI format 1_0 with a Cyclic Redundancy Check (CRC) scrambled by a Random Access - Radio Network Temporary Identifier (RA-RNTI) by the terminal apparatus 1. The terminal apparatus 1 attempts detection of the PDCCH including the DCI format in a control resource set given based on the MIB, which is included in the PBCH included in the SS/PBCH block detected based on cell search, and in resources indicated based on a configuration of a search space set. The message 2 is also referred to as a random access response.

The message 3 is a procedure for transmitting the PUSCH scheduled by using a random access response grant included in a DCI format 1_0 detected through the procedure of the message 2. Here, the random access response grant (random access responsegrant) is indicated by the MAC CE included in the PDSCH scheduled by using the DCI format 1_0.

The PUSCH scheduled based on the random access response grant is either a message 3 PUSCH or a PUSCH. The message 3 PUSCH includes a contention resolution identifier (contention resolution ID) MAC CE. The contention resolution ID MAC CE includes a contention resolution ID.

Retransmission of the message 3 PUSCH is scheduled by using a DCI format 0_0 with a CRC scrambled based on a Temporary Cell - Radio Network Temporary Identifier (TC-RNTI).

The message 4 is a procedure for attempting to detect a DCI format 1_0 with a CRC scrambled based on either of a Cell - Radio Network Temporary Identifier (C-RNTI) or a TC-RNTI. The terminal apparatus 1 receives a PDSCH scheduled based on the DCI format 1_0. The PDSCH may include a contention resolution ID.

Data communication is a general term for downlink communication and uplink communication.

In the data communication, the terminal apparatus 1 attempts detection of the PDCCH (monitors the PDCCH, supervises the PDCCH) in a control resource set and resources identified based on a search space set.

The control resource set (CORESET) is a set of resources including a certain number of resource blocks and a certain number of OFDM symbols. In the frequency domain, the control resource set may include continuous resources (non-interleaved mapping) or may include distributed resources (interleaver mapping).

A set of resource blocks constituting the control resource set may be indicated by the higher layer parameter. The number of OFDM symbols constituting the control resource set may be indicated by the higher layer parameter.

The terminal apparatus 1 attempts detection of the PDCCH in a search space set. Here, an attempt to detect the PDCCH in the search space set may be an attempt to detect a candidate of the PDCCH in the search space set, may be an attempt to detect a DCI format in the search space set, may be an attempt to detect the PDCCH in the control resource set, may be an attempt to detect a candidate of the PDCCH in the control resource set, or may be an attempt to detect a DCI format in the control resource set.

The search space set is defined as a set of candidates of the PDCCH. The search space set may be a Common Search Space (CSS) set or may be a UE-specific Search Space (USS) set. The terminal apparatus 1 attempts detection of candidates of the PDCCH in a part or all of a Type 0 PDCCH common search space set, a Type 0a PDCCH common search space set, a Type 1 PDCCH common search space set, a Type 2 PDCCH common search space set, a Type 3 PDCCH common search space set, and/or a UE-specific PDCCH search space set (UE-specific search space set).

The Type 0 PDCCH common search space set may be used as a common search space set having an index of 0. The Type 0 PDCCH common search space set may be a common search space set having an index of 0.

The CSS set is a general term for the Type 0 PDCCH common search space set, the Type 0a PDCCH common search space set, the Type 1 PDCCH common search space set, the Type 2 PDCCH common search space set, and the Type 3 PDCCH common search space set. The USS set is also referred to as a UE-specific PDCCH search space set.

A certain search space set is related to (included in, corresponds to) a certain control resource set. The index of the control resource set related to the search space set may be indicated by the higher layer parameter.

For a certain search space set, a part or all of 6A to 6C may be indicated by at least the higher layer parameter.
6A) PDCCH monitoring periodicity
6B) PDCCH monitoring pattern within a slot
6C) PDCCH monitoring offset

The monitoring occasion of a certain search space set may correspond to the OFDM symbol to which the first OFDM symbol of a control resource set related to the certain search space set is mapped. The monitoring occasion of a certain search space set may correspond to a resource of a control resource set starting from the first OFDM symbol of the control resource set related to the certain search space set. The monitoring occasion of the search space set is given based at least on a part or all of the monitoring periodicity of the PDCCH, the monitoring pattern of the PDCCH in a slot, and the monitoring offset of the PDCCH.

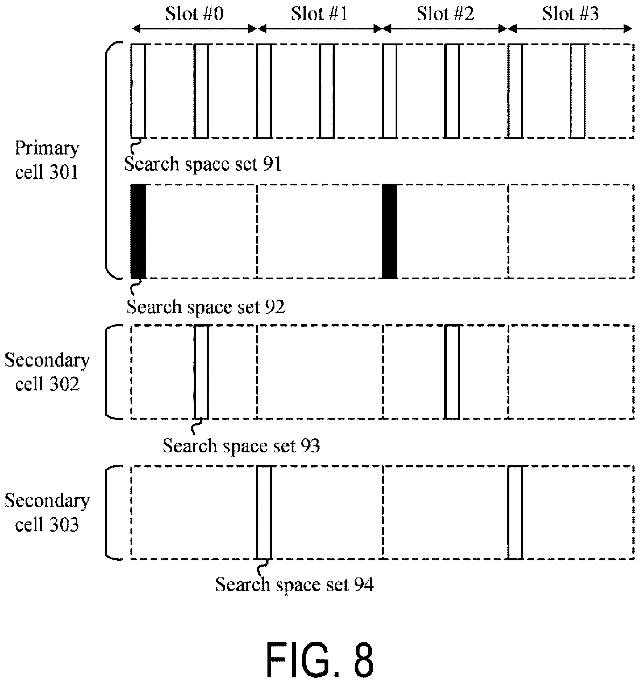

FIG. 8 is a diagram illustrating an example of the monitoring occasions for the search space sets according to an aspect of the present embodiment. In FIG. 8, a search space set 91 and a search space set 92 are configured in a primary cell 301, a search space set 93 is configured in a secondary cell 302, and a search space set 94 is configured in a secondary cell 303.

In FIG. 8, solid white blocks in the primary cell 301 represent a search space set 91, solid black blocks in the primary cell 301 represent a search space set 92, blocks in the secondary cell 302 represent a search space set 93, and blocks in the secondary cell 303 represent a search space set 94.

The monitoring periodicity of the search space set 91 is set to one slot, the monitoring offset of the search space set 91 is set to zero slots, and the monitoring pattern of the search space set 91 is set to [1, 0, 0, 0, 0, 0, 0, 1, 0, 0, 0, 0, 0, 0]. In other words, the monitoring occasions for the search space set 91 corresponds to the first OFDM symbol (OFDM symbol #0) and the eighth OFDM symbol (OFDM symbol #7) in each of the slots.

The monitoring periodicity of the search space set 92 is set to two slots, the monitoring offset of the search space set 92 is set to zero slots, and the monitoring pattern of the search space set 92 is set to [1, 0, 0, 0, 0, 0, 0, 0, 0, 0, 0, 0, 0, 0]. In other words, the monitoring occasion for the search space set 92 corresponds to the first OFDM symbol (OFDM symbol #0) in each of the even-numbered slots.

The monitoring periodicity of the search space set 93 is set to two slots, the monitoring offset of the search space set 93 is set to zero slots, and the monitoring pattern of the search space set 93 is set to [0, 0, 0, 0, 0, 0, 0, 1, 0, 0, 0, 0, 0, 0]. In other words, the monitoring occasion for the search space set 93 corresponds to the eighth OFDM symbol (OFDM symbol #7) in each of the even-numbered slots.

The monitoring periodicity of the search space set 94 is set to two slots, the monitoring offset of the search space set 94 is set to one slot, and the monitoring pattern of the search space set 94 is set to [1, 0, 0, 0, 0, 0, 0, 0, 0, 0, 0, 0, 0, 0]. In other words, the monitoring occasion for the search space set 94 corresponds to the first OFDM symbol (OFDM symbol #0) in each of the odd-numbered slots.

The Type 0 PDCCH common search space set may be at least used for the DCI format with a Cyclic Redundancy Check (CRC) sequence scrambled by a System Information-Radio Network Temporary Identifier (SI-RNTI).

The Type 0a PDCCH common search space set may be at least used for the DCI format with a Cyclic Redundancy Check (CRC) sequence scrambled by a System Information-Radio Network Temporary Identifier (SI-RNTI).

The Type 1 PDCCH common search space set may be at least used for the DCI format with a CRC sequence scrambled by a Random Access-Radio Network Temporary Identifier (RA-RNTI) and/or a CRC sequence scrambled by a Temporary Cell-Radio Network Temporary Identifier (TC-RNTI).

The Type 2 PDCCH common search space set may be used for the DCI format with a CRC sequence scrambled by a Paging- Radio Network Temporary Identifier (P-RNTI).

The Type 3 PDCCH common search space set may be used for the DCI format with a CRC sequence scrambled by a Cell-Radio Network Temporary Identifier (C-RNTI).

The UE-specific PDCCH search space set may be at least used for the DCI format with a CRC sequence scrambled by a C-RNTI.

In the downlink communication, the terminal apparatus 1 detects a downlink DCI format. The detected downlink DCI format is at least used for resource assignment of the PDSCH. The detected downlink DCI format is also referred to as a downlink assignment. The terminal apparatus 1 attempts reception of the PDSCH. Based on the PUCCH resource indicated based on the detected downlink DCI format, the HARQ-ACK corresponding to the PDSCH (HARQ-ACK corresponding to the transport block included in the PDSCH) is reported to the base station apparatus 3.

In the uplink communication, the terminal apparatus 1 detects an uplink DCI format. The detected DCI format is at least used for resource assignment of the PUSCH. The detected uplink DCI format is also referred to as an uplink grant. The terminal apparatus 1 performs transmission of the PUSCH.

In configured grant (scheduling type), the uplink grant for scheduling the PUSCH is configured for each transmission periodicity of the PUSCH. A part or all of pieces of information indicated by an uplink DCI format in a case that the PUSCH is scheduled by the uplink DCI format may be indicated by the uplink grant configured in a case of the configured scheduling.

The PUSCH transmission may correspond to a configured grant type (configured scheduling type) 1 or a configured grant type (configured scheduling type) 2. In other words, the configured scheduling may be either the configured scheduling type 1 or the configured scheduling type 2. The configured scheduling type 1 PUSCH transmission may be semi-statically configured. For example, the configured scheduling type 1 PUSCH transmission may be operated in response to receiving a certain higher layer parameter. The higher layer parameter may be configuredGrantConfig. For example, configuredGrantConfig may include rrc-ConfiguredUplinkGrant. The PUSCH transmission may be operated without detection of an uplink grant in the DCI.

The configured scheduling type 2 PUSCH transmission may be semi-persistently scheduled. For example, the configured grant type 2 PUSCH transmission may be scheduled by a certain uplink grant. The certain uplink grant may be included in activation DCI (or valid activation DCI). For example, after the reception of the certain higher layer parameter, the configured scheduling type 2 PUSCH transmission may be scheduled by a certain uplink grant. The higher layer parameter may be configuredGrantConfig. For example, configuredGrantConfig need not include rrc-ConfiguredUplinkGrant.

A system frame number (SFN) n_{f} may be a number assigned to a radio frame and/or an index for a radio frame. The system frame number may include 10 bits. At least a part of the system frame number may be signaled in the MIB. For example, six bits (e.g., six most significant bits) of the 10-bit system frame number may be signaled in the MIB. At least a portion of the system frame number may be determined based on the PBCH for conveying the MIB. For example, four bits (e.g., four least significant bits) of the 10-bit system frame number may be conveyed in a PBCH transport block as a part of channel coding.

PDCCH-Config may be a dedicated higher layer parameter. PDCCH-Config may configure parameters for the PDCCH. In PDCCH-Config, multiple (for example, up to three) CORESETs may be configured. In one CORESET, a CORESET ID may be configured. In one CORESET, one CORESET pool index may be configured.

PDSCH-Config may be a dedicated higher layer parameter. PDSCH-Config may configure parameters for the PDSCH.

In a case that multiple PDCCH candidates (PDCCH candidate(s)) are associated with a search space set configured by the higher layer parameter, one PDCCH candidate is used. The one PDCCH candidate may be a PDCCH candidate started earlier among the two PDCCH candidates. The higher layer parameter may be a searchSpaceLinking.

Multiple transmission reception points (or transmit/receive points (TRP)) may be used. The base station apparatus 3 may be configured with a multiple TRPs (Multi-TRPs). The terminal apparatus 1 may be scheduled by two TRPs in one serving cell. In the multi-TRP, one operation mode of single-DCI and multi-DCI may be used. In Multi-TRP, uplink control may be completed in the MAC layer and the physical layer. In Multi-TRP, downlink control may be completed in the MAC layer and the physical layer. In the single-DCI mode, the terminal apparatus 1 may be scheduled by the same DCI for two TRPs. In the multi-DCI mode, the terminal apparatus 1 may be scheduled by independent DCI from each TRP. In the multi-DCI mode, each TRP in Multi-TRP may be specified by TRP information. In other words, one TRP of multi-TRP may be identified by one piece of TRP information. The TRP information may be used to select one TRP. In addition, one control resource set (CORESET) may be associated with an index of a CORESET resource pool. The terminal apparatus 1 may transmit the PUSCH based on the index of the CORESET resource pool. The terminal apparatus 1 may transmit the PDCCH and the PDSCH based on the index of the CORESET resource pool. The TRP information may be a CORESET pool index. The TRP information may be given by the TRP indicator field.

The terminal apparatus 1 may be configured with a higher layer parameter TCI-State. For example, the terminal apparatus 1 may be configured with one list in a higher layer parameter PDSCH-Config. One list may include up to M higher layer parameters TCI-State. One list may be a list of up to M higher layer parameters TCI-State. The terminal apparatus 1 may be configured with one list in order to decode (receive) the PDSCH according to the PDCCH with the DCI. M may depend on the terminal capability (UE capability). For example, M may depend on a terminal capability maxNumberConfiguredTCIStatePerCC. TCI-State may be referred to as a TCI state.

Each TCI-State (i.e., the higher layer parameter TCI-State) may include a parameter for configuring a quasi co-location relationship (QCL). The QCL relationship may be a relationship between one or two downlink reference signals (downlink physical signals) and a DMRS (DMRS port) of PDSCH. The QCL relationship may be a relationship between one or two downlink reference signals (downlink physical signals) and a DMRS (DMRS port) of PDCCH. The QCL relationship may be a relationship between one or two downlink reference signals (downlink physical signals) and a CSI-RS (CSI-RS port) of one CSI-RS resource. For example, the QCL relationship between a channel/signal A and a channel/signal B may indicate that the channel/signal A is QCLed with the channel/signal B.

The QCL relationship may be configured by one or both of a higher layer parameter qcl-Type1 and a higher layer parameter qcl-Type2. For example, the QCL relationship may be configured by one or both of the higher layer parameter qc1-Type1 for a first downlink reference signal (DL RS) and the higher layer parameter qcl-Type2 for a second downlink reference signal. In a case that the first downlink reference signal is different from the second downlink reference signal, the QCL type of qc1-Type1 need not be the same as the QCL type of qcl-Type2. The QCL type corresponding to each downlink reference signal may be given by a higher layer parameter qcl-Type in a higher layer parameter QCL-Info. The QCL type may be any one of type A, type B, type C, and type D.

The terminal apparatus 1 may be configured with a higher layer parameter DLorJointTCIState. For example, the terminal apparatus 1 may be configured with one list in a higher layer parameter PDSCH-Config. One list may include up to 128 higher layer parameters DLorJointTCIState. One list may be a list of up to 128 higher layer parameters DLorJointTCIState. One list may be configured to provide one reference signal. The higher layer parameter DLorJointTCIState may be configured to provide one reference signal. One reference signal may be a reference signal for QCL for a DMRS of PDSCH and a DMRS of PDCCH. One list may be configured to provide one reference. The higher layer parameter DLorJointTCIState may be configured to provide one reference. One reference may be used to determine an uplink transmit spatial filter (UL TX spatial filter). The UL TX spatial filter may be used for a PUSCH, a PUCCH, and an SRS. In other words, one reference may be provided to determine the UL TX spatial filters for a PUSCH, a PUCCH, and an SRS. DLorJointTCIState may be referred to as a TCI state, a DL/Joint TCI state, or a unified TCI state. One list may be dl-OrJoint-TCIStateList.

The terminal apparatus 1 may be configured with the higher layer parameter UL-TCIState. For example, the terminal apparatus 1 may be configured with one list in the higher layer parameter BWP-UplinkDedicated. One list may include up to 64 higher layer parameters UL-TCIState. One list may be a list of up to 64 higher layer parameters UL-TCIState. Each UL-TCIState (or UL-TCIState configuration) may include a parameter for configuring one reference signal. For example, each UL-TCIState may include one parameter for configuring one reference signal for determining an UL TX spatial filter for some or all of a PUSCH, a PUCCH, and an SRS. One list may be a higher layer parameter ul-TCI-StateList. UL-TCIState may be referred to as a TCI state, a UL TCI state, or a unified TCI state.

UL-TCIState may be a higher layer parameter TCI-UL-State. UL-TCIState may be configured by the higher layer parameter TCI-UL-State. The higher layer parameter TCI-UL-State may associate one or two downlink reference signals with one corresponding quasi-colocation (QCL) type.

In a case that DLorJointTCIState or UL-TCIState is configured, the terminal apparatus 1 may transmit a PUSCH according to a spatial relation. For example, the spatial relationship may be a relationship in reference to one reference signal (RS). For example, one reference signal may be a reference signal for determining the UL TX spatial filter. One reference signal may be a reference signal configured with qcl-Type set to type D in the indicated DLorJointTCIState or the indicated UL-TCIState. The reference RS in the indicated DLorJointTCIState may be a CSI-RS resource in a higher layer parameter NZP-CSI-RS-ResourceSet. The reference RS in the indicated UL-TCIState may be a CSI-RS resource in the NZP-CSI-RS-ResourceSet. The indicated UL-TCIState (Indicated UL-TCIState) may be a TCI state, a UL TCI state, or a unified TCI state indicated by the DCI format 1_1 or the DCI format 1_2. The indicated DLorJointTCIState (Indicated DLorJointTCIState) may be a TCI state, a DL/Joint TCI state, or a unified TCI state indicated by the DCI format 1_1 or the DCI format 1_2.

DLorJointTCIState (e.g., the higher layer parameter DLorJointTCIState) and UL-TCIState (e.g., the higher layer parameter UL-TCIState) may be configured in one BWP of one component carrier. In a case that the configuration of DLorJointTCIState or the configuration of UL-TCIState is not performed in one BWP, the terminal apparatus 1 may apply the configuration of DLorJointTCIState or the configuration of UL-TCIState from the reference BWP.

The terminal apparatus 1 need not expect that both of a first higher layer parameter and a second higher layer parameter are configured. The first higher layer parameter SpatialRelationInfo higher layer parameter may be one of TCI-State, SpatialRelationInfo, and PUCCH-SpatialRelationInfo. The second higher layer parameter may be either DLorJointTCIState or UL-TCIState. In a case that TCI-State is configured on any component carrier in a certain list, the second higher layer parameter need not be configured on any component carrier in the same band in the certain list. The certain list may be configured by a higher layer parameter simultaneousTCI-UpdateList1, a higher layer parameter simultaaneousTCI-UpdateList2, a higher layer parameter simultaneousSpatial-UpdatedList1, or a higher layer parameter simultaneousSpatial-UpdatedList2.

The terminal apparatus 1 may receive an activation command. The activation command may be used such that up to eight "TCI states and one or both of pairs of TCI states" are mapped to codepoints of the DCI field 'Transmission Configuration Indication'. The pair of TCI states may involve one TCI state (DL TCI state) for multiple downlink channels/signals and one TCI state (UL TCI state) for multiple uplink channels/signals. The multiple downlink channels/signals may be some or all of a PDSCH, a PDCCH, and a CSI-RS. The multiple uplink channels/signals may be some or all of a PUSCH, a PUCCH, and an SRS. The DCI (DCI format) may also include one or multiple DCI fields. For example, the DCI (DCI format) may be configured to include a TCI field ('Transmission Configuration Indication' field).

In a case that a first set of one or multiple TCI state IDs is activated in a second set, the first set may be applied for a downlink BWP on the indicated component carrier. In a case that the first set of one or multiple TCI state IDs is activated in a third set, the first set may be applied for a downlink BWP and an uplink BWP on the indicated component carrier. The second set may be a set of one or both of one or multiple component carriers and/or one or multiple downlink BWPs. The third set may be a set of some or all of one or multiple component carriers, one or multiple downlink BWPs, and one or multiple uplink BWPs.

In a case that the activation command maps one or both of DLorJointTCIState and UL-TCIState to one TCI codepoint (the codepoint of the DCI field 'Transmission Configuration Indication'), the terminal apparatus 1 may apply one or both of the indicated DLorJointTCIState (Indicated DLorJointTCIState) and the indicated UL-TCIState (Indicated UL-TCIState).

The terminal apparatus 1 may receive the DCI format 1_1/1_2 that provides the indicated DLorJointTCIState or the indicated UL-TCIState. The DCI format need not involve a downlink assignment. For example, in a case that the DCI format 1_1/1_2 does not involve the downlink assignment, the terminal apparatus 1 may assume some or all of the following: the CS-RNTI is used to scramble the CRC for the DCI, all redundancy versions (RVs) are 1, all MCSs are 1, the NDI is 0, all 0 is set for the FDRA type 0, and all 1 is set for the FDRA type 1.

The terminal apparatus 1 may receive a higher layer configuration. After the terminal apparatus 1 receives an initial configuration of more than one DLorJoint-TCIState and before one indicated TCI state is applied from the configured TCI states, the terminal apparatus 1 may assume that a DMRS of PDSCH, a DMRS of PDCCH, and a CSI-RS applying the indicated TCI state are QCLed with the SS/PBCH block.

After the terminal apparatus 1 receives an initial configuration of more than one DLorJoint-TCIState or more than one UL-TCIState and before one indicated TCI state is applied from the configured TCI states, the terminal apparatus 1 may assume that a first UL TX spatial filter for a PUSCH, a PUCCH, and an SRS applying the indicated TCI state is the same as a second UL TX spatial filter. The second UL TX spatial filter may be a UL TX spatial filter for PUSCH transmission scheduled by a random access response grant in an initial access procedure.

After the terminal apparatus 1 receives a configuration of more than one DLorJoint-TCIState and before one "indicated TCI state" is applied from the configured TCI states, a DMRS of PDSCH, a DMRS of PDCCH, and a CSI-RS applying the indicated TCI state may be QCLed with the SS/PBCH block or the CSI-RS resource. For example, the SS/PBCH block or the CSI-RS resource may be identified in the random access procedure initiated by reconfiguration with sync. For example, the terminal apparatus 1 may receive the configuration of DLorJoint-TCIState as a part of the reconfiguration with sync.

After the terminal apparatus 1 receives an initial configuration of more than one DLorJoint-TCIState or more than one UL-TCIState and before one "indicated TCI state" is applied from the configured TCI states, the terminal apparatus 1 may assume that the first UL TX spatial filter for a PUSCH, a PUCCH, and an SRS applying the indicated TCI state is the same as the second UL TX spatial filter. The second UL TX spatial filter may be a UL TX spatial filter for PUSCH transmission scheduled by a random access response grant in the random access procedure initiated by the reconfiguration with sync.

DLorJoint-TCIState may be used as the "indicated TCI state". For example, the terminal apparatus 1 may acquire the QCL assumption (QCL relationship, QCL) for a DMRS of PDSCH, a DMRS of PDCCH, and a CSI-RS applying the "indicated TCI state" from the "configured TCI state". The "indicated TCI state" may be applied to a DMRS of PDSCH, a DMRS of PDCCH, and a CSI-RS. The "indicated TCI state" may be applied to a DMRS of PDSCH, a DMRS of PDCCH, a CSI-RS, a PUSCH, a PUCCH, and an SRS.

UL-TCIState may be used as an the "indicated TCI state". For example, the terminal apparatus 1 may determine the UL TX spatial filter from the "configured TCI state" for a PUSCH, a PUCCH, and an SRS applying the "indicated TCI state".

In a case that the terminal apparatus 1 transmits a first OFDM symbol and in a case that a first "indicated TCI state" is different from a second "indicated TCI state", the first "indicated TCI state" may be applied from the first slot. The first OFDM symbol may be the last OFDM symbol of a PUCCH with the HARQ-ACK information. The first OFDM symbol may be the last OFDM symbol of a PUSCH with the HARQ-ACK information. The HARQ-ACK information may be HARQ-ACK information corresponding to DCI conveying a TCI State indication without the downlink assignment. The HARQ-ACK information may be HARQ-ACK information corresponding to a PDSCH scheduled by the DCI conveying the TCI state indication. The second indicated TCI state may be indicated before (prior to) the first indicated TCI state. The first slot may be the first slot at least BeamAppTime symbols after the second OFDM symbol. BeamAppTime may be the number of OFDM symbols. BeamAppTime may be configured by a higher layer parameter. BeamAppTime may be determined according to the terminal capability. The second OFDM symbol may be the first OFDM symbol. The indicated TCI state may be the indicated DLorJointTCIState or the indicated UL-TCIState.

In a case that the higher layer parameter PDCCH-Config includes two different values of the CORESET pool indexes (or coresetPoolIndex), the terminal apparatus 1 may receive the activation command for the CORESET associated with each CORESET pool index. The activation command may be used to map up to eight TCI states to the codepoints of the DCI field 'Transmission Configuration Indication'. In a case that a set of TCI state IDs is activated for one CORESET pool index, an "activated TCI state" corresponding to the one CORESET pool index may be associated with one physical cell ID, and an "activated TCI state" corresponding to a CORESET pool index different from the one CORESET pool index may be associated with a physical cell ID different from the one physical cell ID. The activation command may be received as a MAC CE. In one BWP, one or multiple CORESETs may be configured. One CORESET may correspond to the CORESET pool index of '0' or '1'.

One codepoint of the DCI field 'Transmission Configuration Indication' may include four TCI states. For example, one of four TCI states may be a Joint TCI state. One of four TCI states may be a DL TCI state. One of four TCI states may be a UL TCI state. One codepoint of the DCI field 'Transmission Configuration Indication' may include two "pairs of TCI states". The pair of TCI states may be a pair of the DL TCI state and the UL TCI state. The terminal apparatus 1 may receive the activation command. The activation command may be used to map up to 8 combinations of four or fewer TCI states to the codepoints of the DCI field 'Transmission Configuration Indication'. The activation command may be used to map up to eight combinations of one or two "pairs of TCI states" to the code map of the DCI field 'Transmission Configuration Indication'. The terminal apparatus 1 need not expect to receive more than eight TCI states in the activation command. The terminal apparatus 1 need not expect to receive more than eight "pairs of TCI states" in the activation command.

In a case that the terminal apparatus 1 transmits a first PUCCH in a first slot, the mapping between the TCI state and the codepoint may be applied starting from a second slot. The first PUCCH may involve first HARQ-ACK information. The first PUCCH may be transmitted in correspondence with a first PDSCH. The first PDSCH may convey an activation command.

In a case that the first higher layer parameter is configured and in a case that a first time offset is equal to or greater than a first value, after the terminal apparatus 1 receives the initial configuration of the TCI state and before the activation command is received, the DMRS port of the PDSCH may be QCLed with the SS/PBCH block with respect to the QCL type A. The first higher layer parameter may be configured for a CORESET scheduling a PDSCH. The CORESET may schedule a PDSCH. The first time offset may be an offset between the reception of the DL DCI and the PDSCH. The first value may be a timeDurationForQCL.

In the case that the first higher layer parameter is configured, the terminal apparatus 1 may assume that the TCI field is present in the DCI format of the PDCCH transmitted in the CORESET. The first higher layer parameter may be tci-PresentInDCI set to 'enabled' for the CORESET scheduling the PDSCH or the multicast PDSCH. The first higher layer parameter may be tci-PresentDCI-1-2.

In a case that a first DCI format schedules a PDSCH and in a case that the time offset is equal to or greater than a threshold, the TCI state or QCL assumption for the PDSCH may be identical to the TCI state or QCL assumption applied for the CORESET used for the PDCCH, in order to determine the PDSCH antenna port QCL. The time offset may be a time offset between the reception of the DL DCI and the corresponding PDSCH. The threshold may be timeDurationForQCL. The first DCI format need not include a TCI field.

In a case that the first higher layer parameter and the second higher layer parameter are configured, in the case that the time offset is equal to or greater than the threshold, and in a case that DCI scheduling without a TCI state is supported, the TCI state or QCL assumption for the PDSCH may be identical to the TCI state or QCL assumption applied to the CORESET used for the reception of the DL DCI. The identical TCI state or QCL assumption for the PDSCH and the CORESET need not be related to the number of active TCI states of the CORESET. In a case that dynamic switching between an SFN PDSCH and a non-SFN PDSCH is not supported, the terminal apparatus 1 may be activated with the CORESET including two TCI states. In a case that dynamic switching between an SFN PDSCH and a non-SFN PDSCH is not supported, two "indicated TCI states" may be applied to the PDSCH. For example, in the case that dynamic switching between an SFN PDSCH and a non-SFN PDSCH is not supported, one "indicated TCI state" need not be expected to be applied to the PDSCH. The DL DCI may be received in the active BWP of the serving cell. The DL DCI may be DCI for the downlink channel (downlink physical channel). The SFN PDSCH may be a PDSCH to which the SFN is applied. The first higher layer parameter may be sfnSchemePdcch. The second higher layer parameter may be sfnSchemePdsch. The time offset may be a time offset between the reception of the DL DCI and the corresponding PDSCH. The thresholds may be timeDurationForQCL. The fact that sfnSchemePdcch is configured may mean that a Single Frequency Network (SFN) is applied to the PDCCH. The fact that the SFN scheme is applied may mean that the same DMRS ports are simultaneously transmitted from different panels. One beam may correspond to one panel. One TSI state may correspond to one panel.

In a case that the first higher layer parameter and the second higher layer parameter are not configured, in a case that scheduling is performed by the DCI format 1_1/1_2, and in the case that the time offset is equal to or greater than the threshold, the terminal apparatus 1 may expect that the TCI field is present. The first higher layer parameter may be sfnSchemePdcch. The second higher layer parameter may be sfnSchemePdsch.

In a case that the PDSCH is scheduled by the DCI format 1_0/1_1/1_2, in the case that the first higher layer parameter is configured, in a case that the second higher layer parameter is not configured, in a case that there is no TCI codepoint (codepoint in the TCI field) with two TCI states in the activation command, in the case that the time offset is equal to or greater than the threshold, and in a case that the CORESET schedules the PDSCH indicated with the two TCI states, the TCI state or QCL assumption for the PDSCH may be the first TCI state or QCL assumption applied to the CORESET used for the PDCCH. The first higher layer parameter may be sfnSchemePdcch set to 'sfnSchemeA'. The second higher layer parameter may be sfnSchemePdsch.

In a case that the time offset is equal to or less than the threshold and in a case that at least one "configured TCI state" includes a QCL type of typeD, some or all of operations 1, 2, 3, 4, and 5 may be performed. The time offset may be a time offset between the reception of the DL DCI and the corresponding PDSCH. The thresholds may be timeDurationForQCL.

In the operation 1, a DMRS port of a first PDSCH may be QCLed with a first reference signal with respect to a first QCL parameter. The first QCL parameter may be used for PDCCH QCL indication of a CORESET. The CORESET may be associated with a search space (search space set) with the smallest CORESET ID (controlResourceSetId) of one or multiple CORESETS in the active BWP. Further, the CORESET may be a CORESET in the latest slot among one or multiple CORESETS in the active BWP.

In the operation 2, in the case that the first higher layer parameter and the second higher layer parameter are configured, a DMRS port of a second PDSCH associated with a first value of the CORESET pool index may be QCLed with a reference signal with respect to a second QCL parameter. The second QCL parameter may be used for PDCCH QCL indication of a CORESET. The CORESET may be configured with the same CORESET pool index as the PDCCH scheduling the second PDSCH. The CORESET may be associated with the search space with the smallest CORESETID. The CORESET may be a CORESET in the latest slot. The first higher layer parameter may be enableDefaultTCI-StatePerCoresetPoolIndex. The second higher layer parameter may be PDCCH-Config including values of two different CORESET pool index (coresetPoolIndex).

In the operation 3, in a case that a third higher layer parameter is configured and in a case that at least one TCI codepoint indicates two TCI states, the DMRS port of the PDSCH (or a PDSCH transmission occasion) may be QCLed with a reference signal with respect to the third QCL parameter. The third QCL parameter may be associated with a TCI state corresponding to the smallest codepoint of the multiple TCI codepoints. Each of the multiple TCI codepoints may include two different TCI states. In a case that a fourth higher layer parameter is configured and in a case that the time offset is equal to or less than the threshold, the mapping of the TCI state to the PDSCH transmission occasion may be determined. For example, an "indicated TCI state" with the TCI state corresponding to the smallest codepoint among the multiple TCI codepoints may be applied to the PDSCH transmission occasion. One TCI codepoint may indicate up to four TCI states. The third higher layer parameter may be enableTwoDefaultTCI-States. The fourth higher layer parameter may be repetitionScheme set to 'tdmSchemeA'. The fourth higher layer parameter may be a repetitionNumber. The fact that repetitionScheme is configured for the PDSCH may mean that a Time Division Multiplexing (TDM) scheme is applied for the PDSCH. The time offset may be a time offset between the reception of the DL DCI and the first PDSCH transmission occasion.

In the operation 4, in a case that the fifth higher layer parameter is not configured, in a case that a sixth higher layer parameter is configured, in a case that there is no TCI codepoint with multiple TCI states in the activation command, and in a case that the CORESET with the smallest ID is indicated with multiple (e.g., two) TCI states, the DMRS port of the PDSCH may be QCLed with the reference signal with respect to the fourth QCL parameter. The fourth QCL parameter may be associated with the first TCI state among the multiple (e.g., two) TCI states indicated for the CORESET. The CORESET may be a CORESET in the latest slot. The fifth higher layer parameter may be sfnSchemePdsch. A sixth higher layer parameter may be sfnSchemePdcch set to 'sfnSchemeA'.

In the operation 5, in a case that the "configured TCI state" for the serving cell of the scheduled PDSCH is not configured with the QCL type of typeD, the terminal apparatus 1 may acquire the QCL assumption from the "indicated TCI state".

In a case that the PDCCH conveying the scheduling DCI is received on a first component carrier and in a case that the PDSCH scheduled by the scheduling DCI is on a second component carrier, the threshold may be determined based on the subcarrier spacing of the scheduled PDSCH (the configuration of the subcarrier spacing) and an additional time may be added to the threshold. The additional time may be determined based on the subcarrier spacing (the configuration of the subcarrier spacing) of the PDCCH and the PDSCH. In the case that the PDCCH conveying the scheduling DCI is received on the first component carrier, in the case that the PDSCH scheduled by the scheduling DCI is on the second component carrier, in the case that the first higher layer parameter is configured, and in the case that the time offset is equal to or less than the threshold, the terminal apparatus 1 may acquire the QCL assumption for the scheduled PDSCH from the "activated TCI state" or the "indicated TCI state". The "activated TCI state" or the "indicated TCI state" may involve the smallest ID or may apply to a PDSCH in the active BWP of the scheduled serving cell. The scheduling DCI may be DCI for scheduling a downlink physical channel or an uplink physical channel. The first higher layer parameter may be enableDefaultBeamForCCS.

In a case that a first terminal capability is indicated to the terminal apparatus 1, the terminal apparatus 1 may determine a spatial domain filter. The spatial domain filter may be used while performing applicable channel access procedures prior to a UL transmission on the channel. In a case that the SRI corresponding to the UL transmission is indicated, the terminal apparatus 1 may use a spatial domain filter the same as the spatial domain filter associated with the indicated SRI. The terminal apparatus 1 may use a spatial domain filter the same as the spatial domain filter used to receive the DL reference signal associated with the indicated TCI state. For example, in a case that the TCI state configuration with DLorJointTCIState or UL-TCIState is configured, the terminal apparatus 1 may use a spatial domain filter the same as the spatial domain filter used to receive the DL reference signal associated with the indicated TCI state. The first terminal capability may be beamCorrespondenceWithoutUL-BeamSweeping set to '1'.

In a case that PDCCH reception includes two PDCCHs from two associated search space sets and in a case that the time offset is determined, the PDCCH candidate (candidate for PDCCH) may be used. The time offset may be a time offset between the reception of the DL DCI and the corresponding PDSCH. The PDCCH candidate may be a PDCCH candidate that ends later in time. In a case that the PDCCH reception includes two PDCCH candidates from two associated search space sets, the terminal apparatus 1 may expect the same configuration in the first CORESET and the second CORESET associated with the two PDCCH candidates in the configuration of the first higher layer parameter. The fact that the PDCCH reception includes two PDCCHs (PDCCH candidates) from two associated search space sets may mean that search space linking is applied. The fact that PDCCH repetition is applied may mean that one PDCCH reception including two PDCCHs (PDCCH candidates) from two associated search space sets is applied.

In a case that a periodic CSI-RS resource in the NZP-CSI-RS-ResourceSet is configured with the first higher layer parameter, the TCI state may indicate one of the multiple QCL types. The multiple QCL types may include typeC with the SS/PBCH block. The first higher layer parameter may be trs-Info. The first higher layer parameter may indicate that antenna ports for all Non Zero Power CSI-RS (NZP-CSI-RS) resources in the CSI-RS resource set are the same.

In a periodic CSI-RS and a semi-persistent CSI-RS, the indicated TCI state (e.g., the indicated DLorJointTCIState) may not be applied.

The TCI state may indicate one of the multiple QCL types in the CSI-RS resource in an NZP-CSI-RS resource set (NZP-CSI-RS-ResourceSet) configured without the first higher layer parameter and the second higher layer parameter. The multiple QCL types may include typeA with the CSI-RS in the NZP-CSI-RS resource set configured with the first higher layer parameter. The multiple QCL types may include typeB with the CSI-RS in the NZP-CSI-RS resource set configured with the first higher layer parameter. The first higher layer parameter may be trs-Info. The second higher layer parameter may be repetition.

The TCI state may indicate one of the multiple QCL types in the CSI-RS resource in the NZP-CSI-RS resource set configured with the second higher layer parameter. The multiple QCL types may include typeB with the CSI-RS in the NZP-CSI-RS resource set configured with the first higher layer parameter. The multiple QCL types may include typeC with the SS/PBCH block. The second higher layer parameter may be repetition.

The DMRS port of the PDCCH may be QCLed with the DL-RSs (downlink reference signals) of the multiple (e.g., two) TCI states. For example, in the case that the first higher layer parameter is configured and in a case that the CORESET is activated with the multiple (e.g., two) TCI states, the DMRS port of the PDCCH in the CORESET may be QCLed with the DL-RSs of the multiple (e.g., two) TCI states. The first higher layer parameter may be sfnSchemePdcch. The first higher layer parameter may be sfnSchemePdcch set to 'sfnSchemeA'. The first higher layer parameter may be sfnSchemePdcch set to 'sfnSchemeB'. The second one of the two TCI states need not include the QCL parameters {Doppler shift, Doppler spread}. For example, in the case that the first higher layer parameter is configured and in a case that the CORESET is activated with one TCI state, the DMRS port of the PDCCH in the CORESET may be QCLed with the DL-RSs of the multiple (e.g., two) "indicated TCI states". For example, for example, in the case that the first higher layer parameter is configured, the DMRS port of the PDCCH in the CORESET may be QCLed with the DL-RSs of the multiple (e.g., two) "indicated TCI states" regardless of the number of active TCI states of the CORESET. The fact that the first higher layer parameter is configured may mean that the SFN scheme is applied for the PDCCH.

For the DMRS of the PDSCH, the TCI state may indicate one QCL type. One QCL type may be typeA with the CSI-RS resources in the NZP-CSI-RS resource set configured with trs-Info. For the DMRS of the PDCCH, the TCI state may indicate one QCL type. One QCL type may be typeA with the CSI-RS resources in the NZP-CSI-RS resource set configured with trs-Info.

In the case that the first higher layer parameter is configured and in a case that multiple (e.g., two) TCI states are indicated, the DMRS port of the PDSCH may be QCLed with the DL-RSs of the multiple (e.g., two) TCI states. The multiple TCI states in one codepoint of the DCI field 'Transmission Configuration Indication' in the DCI for scheduling the PDSCH may be indicated. The first higher layer parameter may be sfnSchemePdsch. The first higher layer parameter may be sfnSchemePdsch set to 'sfnSchemeA'. The first higher layer parameter may be sfnSchemePdsch set to 'sfnSchemeB'. The second one of the two TCI states need not include the QCL parameters {Doppler shift, Doppler spread}. In the case that the first higher layer parameter is configured, in the case that multiple (e.g., two) TCI states are indicated, and in a case that the TRP indicator field indicates a third indication or a fourth indication, the DMRS port of the PDSCH may be QCLed with the DL-RSs of the multiple (e.g., two) TCI states. The fact that the first higher layer parameter is configured may mean that the SFN scheme is applied for the PDSCH.

The terminal apparatus 1 receives the DMRS for the PDSCH scheduled by the PDCCH with the DCI format. In a case that two TCI states are indicated and the terminal apparatus 1 receives the DMRS of the PDSCH and the SS/PBCH block in the same OFDM symbol, at least one DMRS port for the PDSCH and the SS/PBCH block may be QCLed with respect to the typeD ('QCL-TypeD'). In the case that the first higher layer parameter is configured and in a case that multiple PDCCHs overlap in the time frequency domain by multiple PDSCHs, different DMRS configurations need not be expected, and the DMRS ports in one CDM group need not be indicated by two TCI states. The first higher layer parameter may be a PDCCH-Config including two different CORESET pool indices.

In the downlink, up to 16 or 32 HARQ processes may be supported in one serving cell. The number of HARQ processes may be configured by the higher layer parameter. In a case that the higher layer parameter is not configured, the number of HARQ processes may be 8.

In response to detection of a PDCCH with a DCI format, the terminal apparatus 1 may receive (decode) the corresponding PDSCH as indicated by the DCI format.

The higher layer parameter may include values of two different CORESET pool indices. The PDCCHs scheduling two PDSCHs (the first PDSCH and the second PDSCH) may be associated with the CORESETs having different values of the CORESET pool indices. The higher layer parameter may be PDCCH-Config. The terminal apparatus 1 may receive the first PDSCH and the second PDSCH.

The terminal apparatus 1 may assume that the DMRS port of the first PDSCH is QCLed with a first SS/PBCH block with respect to the first QCL parameter. The first PDSCH may be scheduled with the SI-RNTI, the P-RNTI, or the G-RNTI for broadcast. The terminal apparatus 1 may assume that the DMRS port of the second PDSCH is QCLed with a second SS/PBCH block or a second CSI-RS resource with respect to the first QCL parameter. The second SS/PBCH block or the second CSI-RS resource may be used for RACH association. The second PDSCH may be scheduled with the RA-RNTI or the MSGB-RNTI. The terminal apparatus 1 may assume that the DMRS port of a first PDCCH order and the DMRS port of a third PDSCH are QCLed with the second SS/PBCH block or the second CSI-RS resource with respect to the first QCL parameter. The third PDSCH may be scheduled with the RA-RNTI in response to a random access procedure triggered by the first PDCCH order. The first QCL parameter may include some or all of Doppler shift, Doppler spread, average delay, delay spread, and spatial RX parameters.

In a case that decoding of the PDCCH with the CRC scrambled by the CS-RNTI is configured by the higher layer, the terminal apparatus 1 may receive the PDSCH without the corresponding PDCCH.

In the case that the first higher layer parameter is configured, the terminal apparatus 1 may receive multiple PDCCHs. The first higher layer parameter may be PDCCH-Config. The first higher layer parameter may include values of two different CORESET pool indices. The multiple PDCCHs may schedule multiple PDSCHs. The multiple PDSCHs may or may not overlap in the time frequency domain. In a case that the multiple PDCCHs are associated with different CORESETs, the terminal apparatus 1 may simultaneously receive the multiple PDSCHs. The different CORESETs may have different CORESET pool index (coresetPoolIndex) values.

In a case of the CORESET (the higher layer parameter ControlResourceSet) without the CORESET pool index (the higher layer parameter coresetPoolIndex), the terminal apparatus 1 may assume that the CORESET pool index is assigned as 0 to the CORESET.

A first physical cell ID associated with the first CORESET may be different from a second physical cell ID associated with the second CORESET. For example, via the activated TCI state, the first CORESET and the second CORESET may be associated with different physical cell IDs. The first CORESET and the second CORESET may correspond to different CORESET pool indices.

In a case that repetition is configured for a PDSCH, the first higher layer parameter need not be expected to be configured. The first higher layer parameter may be repetitionScheme. The fact that the repetition is configured for the PDSCH may mean that a repetitionNumber is configured for the PDSCH. The fact that the first higher layer parameter is configured may mean that a Frequency Division Multiplexing (FDM) scheme, a Time Division Multiplexing (TDM) scheme, or a Spatial Division Multiplexing (SDM) scheme is applied.

In the case that the first higher layer parameter is configured and in a case that multiple (e.g., two) TCI states and one or multiple DMRS ports are indicated, some or all of operations 6, 7, and 8 may be performed. The first higher layer parameter may be repetitionScheme. In repetitionScheme, 'fdmSchemeA', 'fdmSchemeB' or 'tdmSchemeA' may be set. Multiple TCI states may be included in one codepoint of the DCI field 'Transmission Configuration Indication'. One or multiple DMRS ports may be DMRS ports in one CDM group. One Code Division Multiplexing (CDM) group may be indicated by a DCI field 'Antenna Port(s)'.

In the operation 6, in the case that 'fdmSchemeA' is set in the terminal apparatus 1 and multiple (e.g., two) TCI states are indicated by one DCI, the terminal apparatus 1 may receive one PDSCH transmission occasion or transmit one PUSCH transmission occasion of one transport block with each TCI state. That fact that an FDM scheme A is applied may mean that 'fdmSchemeA' is set in the terminal apparatus 1. Each TCI state may be associated with a non-overlapping frequency domain resource assignment.

In the operation 7, in a case that 'fdmSchemeB' is set in the terminal apparatus 1 and multiple (e.g., two) TCI states are indicated by one DCI, the terminal apparatus 1 may receive two PDSCH transmission occasions or transmit two PUSCH transmission occasions of the same transport block with each TCI state. That fact that the FDM scheme B is applied may mean that 'fdmSchemeB' is set in the terminal apparatus 1. Each TCI state may be associated with a first PDSCH transmission occasion of two PDSCH transmission occasions. The first PDSCH transmission occasion may have a non-overlapping frequency domain resource assignment with respect to a second PDSCH transmission occasion of two PDSCH transmission occasions. Each TCI state may be associated with a first PUSCH transmission occasion of two PUSCH transmission occasions. The first PUSCH transmission occasion may have a non-overlapping frequency domain resource assignment with respect to a second PUSCH transmission occasion of two PUSCH transmission occasions.

In the operation 8, in a case that 'fdmSchemeA' is set in the terminal apparatus 1 and multiple (e.g., two) TCI states are indicated by one DCI, the terminal apparatus 1 may receive two PDSCH transmission occasions of the same transport block with each TCI state. Each TCI state may be associated with a first PDSCH transmission occasion of two PDSCH transmission occasions. The first PDSCH transmission occasion may have a non-overlapping time domain resource assignment with respect to a second PDSCH transmission occasion of two PDSCH transmission occasions. Two PDSCH transmission occasions may be received within one slot. The fact that a TDM scheme A is applied may mean that "tdmSchemeA" is set in the terminal apparatus 1. The fact that the TDM scheme A is applied may mean that the higher layer parameter repetitionScheme set to 'tdmSchemeA' is configured for the terminal apparatus 1.

A frequency division multiplexing (FDM) scheme (fdmScheme) may be applied to one or both of a PDSCH and a PUSCH. An FDM scheme A (fdmSchemeA) may be applied to one or both of a PDSCH and a PUSCH. An FDM scheme B (fdmSchemeB) may be applied to one or both of a PDSCH and a PUSCH. A time division multiplexing (TDM) scheme (tdmScheme) may be applied to one or both of a PDSCH and a PUSCH. A TDM scheme A (tdmSchemeA) may be applied to one or both of a PDSCH and a PUSCH. A TDM scheme B (tdmSchemeB) may be applied to one or both of a PDSCH and a PUSCH. fdmScheme may be a generic term for fdmSchemeA and fdmSchemeB. tdmScheme may be a generic term for tdmSchemeA and tdmSchemeB. The Spatial Division Multiplexing (SDM) scheme (sdmScheme) may be applied to one or both of a PDSCH and a PUSCH.

In a case that the FDM scheme is applied, in a case that multiple (e.g., two) TCI states are indicated, and in a case that the DMRS ports in one CDM group are indicated, first multiple physical resource blocks may be assigned to a first TCI state and second multiple physical resource blocks may be assigned to a second TCI state. The sum of the first multiple physical resource blocks and the second multiple physical resource blocks may be the total number of physical resource blocks allocated for the terminal apparatus 1. In the case that the FDM scheme is applied, in the case that multiple (e.g., two) TCI states are indicated, and in the case that the DMRS ports in one CDM group are indicated, the even number of physical resource block groups may be assigned to the first TCI state and the odd number of physical resource block groups may be assigned to the second TCI state. Both the even number of physical resource block groups and the odd number of physical resource block groups may be within the allocated frequency domain resources. In the case that the FDM scheme is applied, in the case that multiple (e.g., two) TCI states are indicated, and in the case that the DMRS ports in one CDM group are indicated, the terminal apparatus 1 need not expect three or more PDSCH transmission layers for each PDSCH transmission occasion. The fact that the FDM scheme is applied may mean that the higher layer parameter repetitionScheme set to 'fdmSchemeA' or 'fdmSchemeB' is configured to the terminal apparatus 1.

In a case that the FDM scheme B is applied, in a case that two TCI states are indicated, and in the case that the DMRS ports in one CDM group are indicated, each PDSCH transmission occasion may be mapped to the resource element. The resource element may be determined by a physical resource block assigned for the TCI state of the PDSCH transmission occasion. In the case that the FDM scheme B is applied, in the case that two TCI states are indicated, in the case that the DMRS ports in one CDM group are indicated, and in a case that a transmission layer 1 is scheduled, the terminal apparatus 1 may expect up to two code blocks per PDSCH transmission occasion. In the case that the FDM scheme B is applied, in the case that two TCI states are indicated, in the case that the DMRS ports in one CDM group are indicated, and in the case that a transmission layer 2 is scheduled, the terminal apparatus 1 may expect one code block per PDSCH transmission occasion. For two PDSCH transmission occasions, a first Redundancy version may be applied to the first TCI state, and a second Redundancy version may be applied to the second TCI state. The fact that the FDM scheme B is applied may mean that the higher layer parameter repetitionScheme set to 'fdmSchemeB' is configured to the terminal apparatus 1.

In the case that the FDM scheme B is applied, in the case that two TCI states are indicated, and in the case that the DMRS ports in one CDM group are indicated, a modulation order of the first PDSCH transmission occasion may be applied to the second PDSCH transmission occasion. The first PDSCH transmission occasion may be associated with the first TCI state. The second PDSCH transmission occasion may be associated with the second TCI state.

In the case that the FDM scheme B is applied, in the case that two TCI states are indicated, and in the case that the DMRS ports in one CDM group are indicated, the terminal apparatus 1 may determine the total number of resource elements for the PDSCH. The total number of allocated physical resource blocks may correspond to the first TCI state. The TBS of the first PDSCH transmission occasion associated with the first TCI state may be applied to the second PDSCH transmission occasion associated with the second TCI state.

In a case that the TDM scheme A is applied, in the case that two TCI states are indicated, and in the case that the DMRS ports in one CDM group are indicated, the terminal apparatus 1 may determine the total number of resource elements within one physical resource block for the PDSCH. The number of OFDM symbols for PDSCH allocation within one slot may correspond to the first TCI state. The TBS of the first PDSCH transmission occasion associated with the first TCI state may be applied to the second PDSCH transmission occasion associated with the second TCI state.

In the case that the TDM scheme A is applied and in the case that the DMRS ports in one CDM group are indicated, the number of PDSCH transmission occasions may be the number of TCI states indicated by the DCI field 'Transmission Configuration Indication'. In a case that two TCI states (the first TCI state and the second TCI state) are indicated, two PDSCH transmission occasions (the first PDSCH transmission occasion and the second PDSCH transmission occasion) may be expected to be received. In a case that one TCI state is indicated, the terminal apparatus 1 may be expected to receive one PDSCH transmission occasion. The first TCI state may be applied to the first PDSCH transmission occasion. The second TCI state may be applied to the second PDSCH transmission occasion. The second PDSCH transmission occasion may have the number of OFDM symbols the same as the first PDSCH transmission occasion. The number of OFDM symbols K_bar may be the number of OFDM symbols from the last OFDM symbol of the first PDSCH transmission occasion to the first OFDM symbol of the second PDSCH transmission occasion. K_bar may be provided by the higher layer parameter. The terminal apparatus 1 need not expect to receive three or more PDSCH transmission layers for each PDSCH transmission occasion. The first redundancy version may be applied to the first TCI state. The second redundancy version may be applied to the second TCI state. A PDSCH mapping type indicated by the DCI field "Time domain resource assignment' may be expected to be a mapping type B, and the PDSCH mapping type may be applied to two PDSCH transmission occasions.

The repetition may be applied to one or both of a PDSCH and a PUSCH. The fact that the repetition is applied may mean that the higher layer parameter repetitionNumber is configured in a higher layer parameter PDSCH-TimeDomainResourceAllocation. In a case that the repetition is applied, the terminal apparatus 1 may expect one or multiple (e.g., two) TCI states to be indicated. One or multiple TCI states may be included in one codepoint of the DCI field 'Transmission Configuration Indication'. The DCI field "Time domain resource assignment' may indicate an entry including the higher layer parameter repetitionNumber. The DMRS port indicated to the terminal apparatus 1 may be within one CDM group. In the case that multiple TCI states are indicated, the terminal apparatus 1 may receive the PDSCH transmission occasion of the same TB with the multiple TCI states over multiple slots. In the case that one TCI state is indicated, the terminal apparatus 1 may receive the PDSCH transmission occasion of the same TB with one TCI state over multiple slots. The PDSCH transmission occasions may be multiple slot level PDSCH transmission occasions. The fact that the repetition is applied may mean that the DCI field "Time domain resource assignment' indicates the entry including repetitionNumber. repetitionNumber may be included in the PDSCH-TimeDomainResourceAllocation in PDSCH-Config.

In a case that the repetition is applied for the PDSCH, the same SLIV may be applied to all PDSCH transmission occasions over multiple continuous slots. The number of continuous slots may be determined by repetitionNumber. The SLIV may determine the starting OFDM symbol and the number of OFDM symbols.

In the case that the repetition is applied for the PDSCH, in a case that two TCI states are indicated by the DCI field "Transmission Configuration Indication', and in the case that the DMRS ports in one CDM group are indicated, the same SLIV may be applied to all PDSCH transmission occasions over multiple continuous slots, and the first TCI state may be applied to the first PDSCH transmission occasion. In a case that the number of repetitions is two, the second TCI state may be applied to the second PDSCH transmission occasion. In a case that the number of repetitions is equal to or greater than three and in a case that cyclic mapping (cyclicMapping) is enabled, the first TCI state may be applied to the first PDSCH transmission occasion, the second TCI state may be applied to the second PDSCH transmission occasion, and the same TCI state mapping pattern may continue to the remaining PDSCH transmission occasions. In the case that the number of repetitions is equal to or greater than three and in a case that sequential mapping (sequentialMapping) is enabled, the first TCI state may be applied to the first and second PDSCH transmission occasions, the second TCI state may be applied to the third and fourth PDSCH transmission occasions, and the same TCI state mapping pattern may continue to the remaining PDSCH transmission occasions. The number of continuous slots may be determined by repetitionNumber. The number of repetitions may be a value of repetitionNumber.

Each PDSCH transmission occasion may be limited to two transmission layers. In a case that all PDSCH transmission occasions are associated with the first TCI state, the redundancy version (an index for determining the redundancy version) may be counted considering only the PDSCH transmission occasion associated with the first TCI state.

In the case that the repetition is applied for the PDSCH, in a case that one TCI states is indicated by the DCI field "Transmission Configuration Indication', and in the case that the DMRS ports in one CDM group are indicated, the same SLIV may be applied to all PDSCH transmission occasions over multiple continuous slots, and the same TCI state may be applied to all PDSCH transmission occasions.

In a case that the repetition is not applied by the first DCI format, in a case that multiple (e.g., two) TCI states are indicated by the first DCI format, in a case that the DMRS ports in two CDM groups are indicated by the first DCI format, and in a case that the SFN (SFN scheme) is not applied, the SDM scheme may be applied. For example, the fact that the SDM scheme is applied may mean a condition 1, a condition 2, a condition 3, and a condition 4 are satisfied. The condition 1 may be that the repetition is not applied by the first DCI format. The condition 2 may be that multiple (e.g., two) TCI states are indicated by the first DCI format. The condition 3 may be that the DMRS ports in two CDM groups are indicated by the first DCI format. The condition 4 may be that the SFN (SFN scheme) is not applied. In the case that the repetition is not applied by the first DCI format, in the case that multiple (e.g., two) TCI states are indicated by the first DCI format, in the case that the DMRS ports in two CDM groups are indicated by the first DCI format, and in the case that the SFN (SFN scheme) is not applied, the terminal apparatus 1 may receive one PDSCH on the basis of the SDM scheme. The fact that the repetition is not applied may mean that the DCI field "Time domain resource assignment' in the first DCI format does not indicate the entry including repetitionNumber. Multiple TCI states may be included in one codepoint of the DCI field 'Transmission Configuration Indication' in the first DCI format. The DMRS ports in the two CDM groups may be indicated by the DCI field 'Antenna Port(s)' in the first DCI format. In a case that the SDM scheme is applied, the first TCI state may correspond to a first CDM group of a first antenna port. The second TCI state may correspond to a second CDM group.

The Single Frequency Network (SFN) scheme may be applied to one or both of a PDSCH and a PUSCH. The fact that the first higher layer parameter is configured may mean that the SFN scheme is applied. The first higher layer parameter may be sfnSchemePdsch. The first higher layer parameter may be sfnSchemePdsch set to 'sfnSchemeA'. The first higher layer parameter may be sfnSchemePdsch set to 'sfnSchemeB'. The SFN scheme may be a generic term for the SFN scheme A and the SFN scheme B.

In a case that the SFN scheme is applied for the PDSCH and in a case that the terminal apparatus 1 reports the first terminal capability, the terminal apparatus 1 may be indicated with one or multiple (e.g., two) TCI states. The first terminal capability may be dynamicSFN. The first terminal capability may be dynamic switching of the SFN scheme. In the case that the SFN scheme is applied and in a case that the terminal apparatus 1 does not report the first terminal capability, the terminal apparatus 1 need not expect one TCI state to be indicated in the TCI codepoint by the MAC CE and may be indicated with multiple (e.g., two) TCI states.

The Single Frequency Network (SFN) scheme may be applied to a PDCCH. The fact that the first higher layer parameter is configured may mean that the SFN scheme is applied. The first higher layer parameter may be sfnSchemePdcch. The first higher layer parameter may be sfnSchemePdcch set to 'sfnSchemeA'. The first higher layer parameter may be sfnSchemePdcch set to 'sfnSchemeB'. The SFN scheme may be a generic term for the SFN scheme A and the SFN scheme B.

In a case that the SFN scheme is applied for a PDSCH and a PDCCH, sfnSchemePdsch and sfnSchemePdcch may be expected to be set to the same scheme (e.g., 'sfnSchemeA' or 'sfnSchemeB'). The fact that the SFN scheme is applied for the PDSCH may mean that sfnSchemePdsch is configured. The fact that the SFN scheme is applied for the PDCCH may mean that sfnSchemePdcch is configured.

In a case that the SFN scheme B is applied for the PDCCH and in a case that multiple (e.g., two) TCI states are activated by the MAC CE, the terminal apparatus 1 may expect that the SFN scheme B is applied for the PDSCH and two TCI states are indicated. The fact that the SFN scheme B is applied for the PDSCH may mean that sfnSchemePdsch set to 'sfnSchemeB' is configured. The fact that the SFN scheme B is applied for the PDCCH may mean that sfnSchemePdcch set to 'sfnSchemeB' is configured. The PDSCH may be scheduled by the DCI format 1_1/1_2.

In the case that the PDCCH reception includes two PDCCH candidates from the search space sets, one PDCCH monitoring occasion may be a union of the PDCCH monitoring occasions for the two PDCCH candidates. The start of the PDCCH reception may be the start of an earlier PDCCH candidate. The end of the PDCCH reception may be the end of a later PDCCH candidate.

In a case that no CORESET pool index is provided in one BWP in one serving cell, three or fewer CORESETs may be provided. In a case that the same CORESET pool index is provided for all CORESETS in one BWP in one serving cell, three or fewer CORESETs may be provided. In a case that the CORESET pool index of 0 is provided for the first CORESET in one BWP in one serving cell, and in a case that the CORESET pool index of 1 is provided for the second CORESET, five or fewer CORESETs may be provided.

In each CORESET, at least the CORESET index by the first higher layer parameter, the QCL relationship (antenna port QCL) by the second higher layer parameter, and an indication of whether the TCI field is present by the third higher layer parameter may be provided. The first higher layer parameter may be controlResourceSetId. The second higher layer parameter may be TCI-State. The third higher layer parameter may be tci-PresentInDCI or tci-PresentDCI-1-2.

In a case that the value 0 is provided for a search space ID, the terminal apparatus 1 may determine a search occasion for the PDCCH candidate. The search space ID may be a searchSpaceID. The search space ID may be included in PDCCH-Config or PDCCH-ConfigCommon.

In a case that two TCI states are provided in one CORESET, the terminal apparatus 1 may assume the QCL information indicated by both of the two TCI states for the PDCCH reception in one CORESET. The two TCI states may indicate QCL information (QCL relationship) of a DMRS antenna port for PDCCH reception.

In a case that the configuration of the TCI state is not provided or the initial configurations of two or more TCI states are provided in one CORESET, and in a case that the MAC CE activation command is not received, the terminal apparatus 1 may assume that the DMRS antenna port associated with the PDCCH reception is the QCLed with the SS/PBCH block. The SS/PBCH block may be identified by the terminal apparatus 1 at the time of the initial access procedure.

In a case that the configurations of two or more TCI states are provided by reconfiguration with synchronization (Reconfiguration with synch) in one CORESET and in a case that the MAC CE activation command is not received, the terminal apparatus 1 may assume that the DMRS antenna port associated with the PDCCH reception is QCLed with the SS/PBCH block or the CSI-RS resource. For example, the SS/PBCH block or the CSI-RS resource may be identified by the terminal apparatus 1 in the random access procedure initiated by the reconfiguration with synchronization.

In a case that the TCI state (for example, the unified TCI state) is provided in the CORESET with the index 0 and in a case that the unified TCI state is applied, the terminal apparatus 1 may assume that the DMRS antenna port (DMRS port) for a first PDCCH reception and the DMRS antenna port for a first PDSCH reception are QCLed with the reference signal indicated with the TCI state. The fact that the unified TCI state is applied may mean that followUnifiedTCIstate set to 'enable' is configured. The first PDSCH reception may be scheduled by the DCI format provided by the first PDCCH reception. The unified TCI state may be DLorJoint-TCIState.

In the case that the TCI state (for example, the unified TCI state) is provided in the CORESET with the index 0 and in a case that the unified TCI state is not applied, the terminal apparatus 1, the DMRS antenna port (DMRS port) for the first PDCCH reception may be QCLed with one or multiple reference signals by the activated TCI state.

In a case that one TCI state is provided in the CORESET with the index other than 0, or in a case that the MAC CE activation command is received for one or two provided TCI states, the terminal apparatus 1 may assume that the DMRS antenna port for the PDCCH reception is QCLed with one or multiple DL RSs configured by the TCI state. The TCI state indicated by the MAC CE activation command may be the "activated TCI state".

In a case that the unified TCI state is provided, the DMRS antenna port for the PDCCH reception in one CORESET with the index other than 0 and the DMRS antenna port for the PDSCH scheduled by the DCI format provided by the PDCCH reception may be QCLed with the reference signal provided by the indicated unified TCI state ("indicated TCI state").

In a case that multiple (e.g. two) unified TCI states are provided (or indicated), the DMRS antenna port for the PDCCH reception in one CORESET with the index other than 0 and the DMRS antenna port for the PDSCH scheduled by the DCI format provided by the PDCCH reception may be QCLed with the reference signal provided by one or both of the indicated unified TCI states ("indicated TCI state").

In a case that the unified TCI state is applied, the DMRS antenna port for the PDCCH reception in one CORESET with the index other than 0 and the DMRS antenna port for the PDSCH scheduled by the DCI format provided by the PDCCH reception may be QCLed with the reference signal provided by the indicated unified TCI state ("indicated TCI state").

Ten or fewer search space sets may be provided in one BWP in one serving cell. For each search space set, at least the search space set index by the first higher layer parameter, the relationship between the search space set and the CORESET by the second higher layer parameter, and the search space set (search space set index) linked by the third higher layer parameter may be determined. The first higher layer parameter may be a searchSpaceID. The second higher layer parameter may be controlResourceSetId. In a first search space set, a second search space set index may be provided by the third higher layer parameter. The third higher layer parameter may link the first search space set to the second search space set. The third higher layer parameter may be searchSpaceLinking. The fact that the third higher layer parameter is provided may mean that the search space linking is applied.

In a case that the first search space set is linked to the second search space set, the terminal apparatus 1 may perform monitoring in accordance with each search space set in a monitoring occasion in one slot. The count of PDCCH candidates corresponding to the first search space set and the second search space set may be 3. The CORESET pool index for the first CORESET associated with the first search space set may be different from the CORESET pool index for the second CORESET associated with the second search space set. The fact that the first search space set is linked to the second search space set may mean that the first search space set includes searchSpaceLinking with the second search space set and the second search space set includes searchSpaceLinking with the first search space set.

In the case that the first search space set is linked to the second search space set and in a case that the third search space set is not linked, the terminal apparatus 1 may monitor a first PDCCH candidate corresponding to the first search space set and may monitor a second PDCCH candidate corresponding to the second search space set for the first DCI format. The terminal apparatus 1 may monitor a third PDCCH candidate corresponding to the third search space set for the second DCI format. In one CORESET and in the same symbol in one slot, the first PDCCH candidate corresponding to the first search space set or the second PDCCH candidate corresponding to the second search space set and the third PDCCH candidate corresponding to the third search space set may use the same set of CCEs and may be subjected to the same scrambling. The third PDCCH candidate corresponding to the third search space set need not be counted for monitoring. The detected DCI format need not be assumed to be the first DCI format.

In the case that the first search space set is linked to the second search space set, in a case that the third search space set is linked to a fourth search space set, and in a case that the sizes of the detected DCI formats are the same, the terminal apparatus 1 may expect different CCEs or different scrambling in one CORESET.

In a case that the terminal apparatus monitors multiple PDCCHs in the first CORESET and the second CORESET, the first CORESET may correspond to the CSS set with the smallest index or may correspond to the USS set with the smallest index. The second CORESET may have a 'typeD' property the same as the first CORESET. The repetition may be applied for the PDCCH. The fact that the repetition is applied for the PDCCH may mean that two-QCLTypeDforPDCCHRepetition is provided.

In the case that the first search space set is linked to the second search space set, the terminal apparatus 1 may detect that one of two PDCCH receptions which ends later is the DCI format.

A MAC protocol data unit (PDU) may be a bit string that is byte aligned (i.e. multiple of 8 bits) in length. A MAC service data unit (MAC SDU) may be a bit string that is byte aligned (i.e. multiple of 8 bits) in length. One MAC SDU may be included into one MAC PDU from the first bit onward. The MAC CE may be a bit string that is byte aligned (i.e. multiple of 8 bits) in length. A MAC subheader may be a bit string that is byte aligned (i.e. multiple of 8 bits) in length. Each MAC subheader may be placed immediately in front of the corresponding MAC SDU, MAC CE, or padding.

The MAC protocol data unit (MAC PDU) may include one or multiple MAC subPDUs. Each MAC subPDU may include one MAC subheader. Each MACsubPDU may include one MAC subheader and one MAC service data unit (SDU). Each MAC subPDU may consist of one MAC subheader and one MAC CE. Each MAC subPDU may include one MAC subheader and padding. The MAC SDUs may have a variable size. Each MAC subheader may correspond to one MAC SDU, one MAC CE, or padding. One MAC PDU may be one transport block.

A first MAC CE may be an activation command A. The first MAC CE may be a MAC CE for activation or deactivation of a TCI state for a PDSCH (a UE-specific PDSCH). The MAC CE for activation/deactivation of the TCI state for the PDSCH may be identified by a first MAC subheader. For example, the first MAC subheader may involve a first Logical channel ID (LCID). For example, a value of the first LCID may be "TCI States Activation/Deactivation for UE-specific PDSCH".

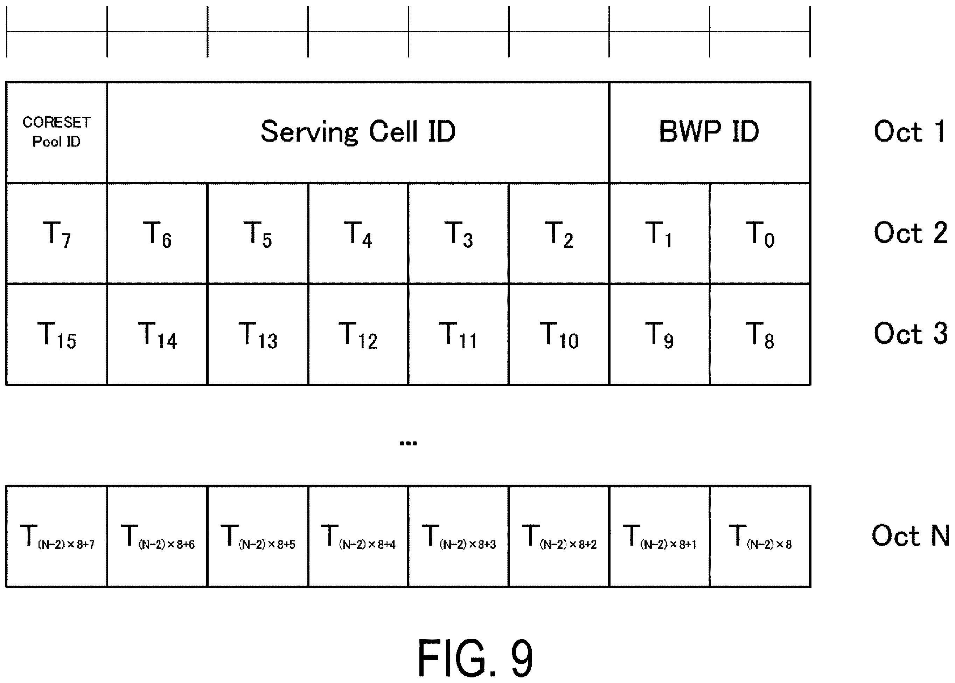

FIG. 9 is a diagram illustrating an example of the activation command A according to an aspect of the present embodiment. A field of a serving cell ID may indicate an identifier of a serving cell applying the first MAC CE. A field of a BWP ID may indicate a DL BWP applying the MAC CE as a codepoint of the 'bandwidth part indicator field' in the DCI. In a case that the first MAC CE is applied to a set of multiple serving cells, the field of the BWP ID may be ignored. A field of "Tᵢ" may indicate an activation/deactivation status of a TCI state with a TCI state ID i. The fact that the field of "Tᵢ" is set to 1 may indicate that the TCI state with the TCI state ID i is activated. The fact that the field of "Tᵢ" is set to 1 may indicate that the TCI state with the TCI state ID i is mapped to one codepoint of the 'Transmission Configuration Indication field' in the DCI. The fact that the field of "Tᵢ" is set to 0 may indicate that the TCI state with the TCI state ID i is deactivated. The fact that the field of "Tᵢ" is set to 1 may indicate that the TCI state with TCI state ID I is not mapped to one codepoint of the ' Transmission Configuration Indication field ' of the DCI. i may be a TCI state ID (or TCI-StateID). The TCI state may involve a TCI state ID. The maximum number of activated TCI states may be eight. A field of a CORESET pool ID field may indicate that a first mapping is specific to a CORESET ID (ControlResourceSetId) configured with the CORESET pool ID (CORESET pool index). The first mapping may be a mapping between the "activated TCI state" and the codepoint of the DCI 'Transmission Configuration Indication' set by the "Tᵢ" field. The fact that the field of the CORESET pool ID is set to 1 may indicate that the first MAC CE is applied to a downlink transmission scheduled by a CORESET with the CORESET pool ID (CORESET pool index) having a value of 1. The fact that the field of the CORESET pool ID is set to 0 may indicate that the first MAC CE is applied to a downlink transmission scheduled by a CORESET with the CORESET pool ID (CORESET pool index) having a value of 0. In a case that the CORESET pool index (coresetPoolIndex) is not configured, the field of the CORESET pool ID in the first MAC CE may be ignored.

A second MAC CE may be an activation command B. The second MAC CE may be a MAC CE for activation or deactivation of a TCI state for a PDSCH (a UE-specific PDSCH). The MAC CE for activation/deactivation of the TCI state for the PDSCH may be identified by a second MAC subheader. For example, the second MAC subheader may involve a second Logical channel ID (LCID). The second LCID may be an eLCID. For example, a value of the second LCID may be "Enhanced TCI States Activation/Deactivation for UE-specific PDSCH".

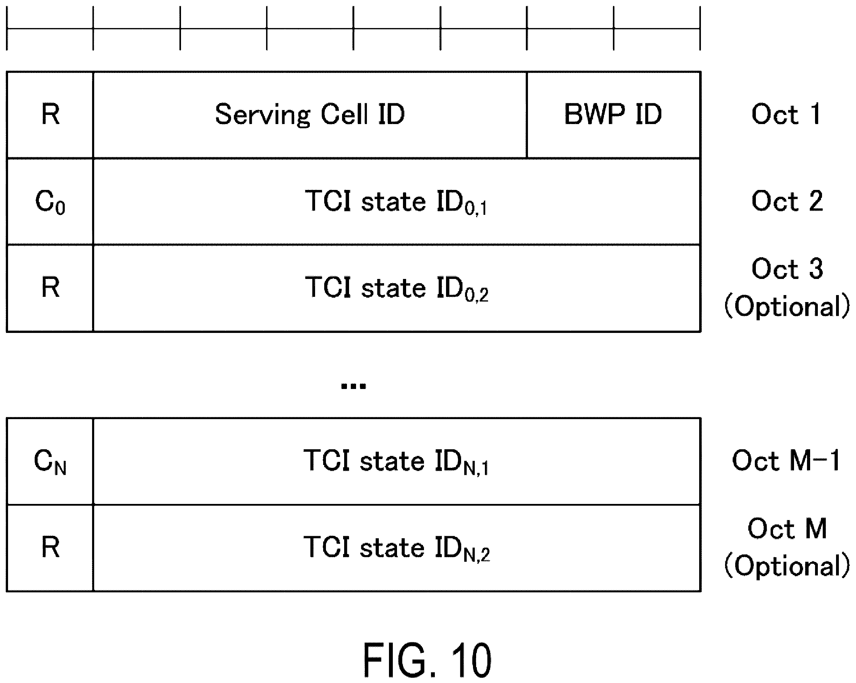

FIG. 10 is a diagram illustrating an example of the activation command B according to an aspect of the present embodiment. A field of "Cᵢ" may indicate whether an octet containing a TCI state ID_{i, 2} is present. For example, in a case that the field of "Cᵢ" is set to 1, the octet containing the TCI state ID_{i, 2} may be present. For example, in a case that the field of "Cᵢ" is set to 0, the octet containing the TCI state IDᵢ, ₂ need not be present. The field of the TCI state ID_{i j} may indicate a TCI state identified by the TCI state ID (TCI-StateId). TCI state ID_{i, j} may represent the j-th TCI state indicated for the i-th codepoint of the DCI 'Transmission configuration indication' field. The TCI state ID_{i, 2} may be optional based on the indication of the "Cᵢ" field. i may be an index of a codepoint of the DCI 'Transmission configuration indicatin' field. j may be 1 or 2.

A third MAC CE may be an activation command C. The third MAC CE may be a MAC CE for activation or deactivation of a unified TCI state. The MAC CE for activation/deactivation of the unified TCI state may be identified by a third MAC subheader. For example, the third MAC subheader may involve a third Logical channel ID (LCID). The third LCID may be an eLCID. For example, a value of the third LCID may be "Unified TCI States Activation/Deactivation MAC CE".

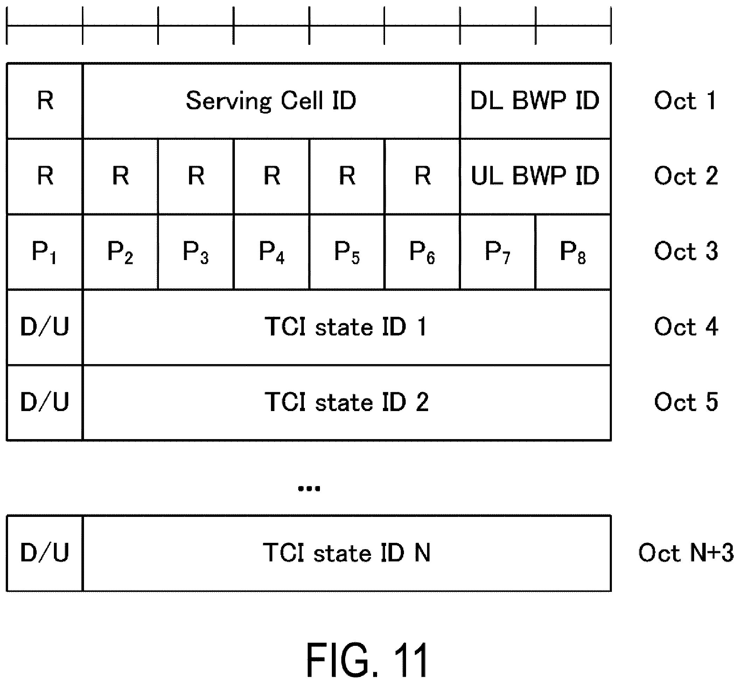

FIG. 11 is a diagram illustrating an example of the activation command C according to an aspect of the present embodiment. A field of a DL BWP ID may indicate one downlink BWP applying the MAC CE as a codepoint of the DCI 'bandwidth part indicator' field. A field of a UL BWP ID may indicate one uplink BWP applying the MAC CE as a codepoint of the DCI 'bandwidth part indicator' field. A field of "Pᵢ" may indicate whether each TCI codepoint has multiple TCI states or one TCI state. For example, in a case that the "Pᵢ" field is set to 1, the i-th TCI codepoint may include both the DL TCI state and the UL TCI state. For example, in a case that the "Pᵢ" field is set to 0, the i-th TCI codepoint may include one of the DL TCI state and the UL TCI state. A field of "D/U" may indicate whether the TCI state ID in the same octet is for joint (both DL and UL)/DL or UL. For example, in a case that the "D/U" field is set to 1, the TCI state ID in the same octet may be for DL/joint. For example, in a case that the "D/U" field is set to 0, the TCI state ID in the same octet may be for UL. A "TCI state ID" field may indicate a TCI state identified by a TCI state ID (TCI-StateId). In a case that the "D/U" field is set to 1, a 7-bit long "TCI state ID" may be used. In a case that the "D/U" field is set to 0, the most significant bit of the "TCI state ID" may be considered to be reserved and the remaining 6 bits may indicate the ID of UL-TCIState (UL-TCIState-Id). The DL TCI state may be a TCI state applied to some or all of a PDSCH, a PDCCH, and a CSI-RS. The UL TCI state may be a TCI state applied to some or all of a PUSCH, a PUCCH, and an SRS. The Joint TCI state may be a TCI state representing both the DL TCI state and the UL TCI state. DLorJointTCIState may be the DL TCI state or the Joint TCI state. UL-TCIState may be the UL TCI state. The DL TCI state may be a TCI state for DL. The Joint TCI state may be a TCI state for both DL and UL. The UL TCI state may be a TCI state for UL. The TCI codepoint may be a codepoint of the DCI 'Transmission configuration indication' field. An "R" field in the MAC CE may be a reserved bit. The reserved bit may be set to 0.

A fourth MAC CE may be an activation command D. A fifth MAC CE may be an activation command E. The fourth MAC CE may be a MAC CE for activation or deactivation of a unified TCI state. For example, the fourth MAC CE may be a MAC CE for activation or deactivation of an enhanced unified TCI state. The fifth MAC CE may be a MAC CE for activation or deactivation of a unified TCI state. For example, the fifth MAC CE may be a MAC CE for activation or deactivation of an enhanced unified TCI state. The MAC CE for activation/deactivation of the unified TCI state may be identified by a fourth MAC subheader. The MAC CE for activation/deactivation of the unified TCI state may be identified by a fifth MAC subheader. For example, the fourth MAC subheader may involve a fourth Logical channel ID (LCID). For example, the fifth MAC subheader may involve a fifth Logical channel ID (LCID). The fourth LCID may be an eLCID. The fifth LCID may be an eLCID. For example, a value of the fourth LCID may be "Enhanced unified TCI States Activation/Deactivation MAC CE 1". For example, a value of the fifth LCID may be "Enhanced unified TCI States Activation/Deactivation MAC CE 2".

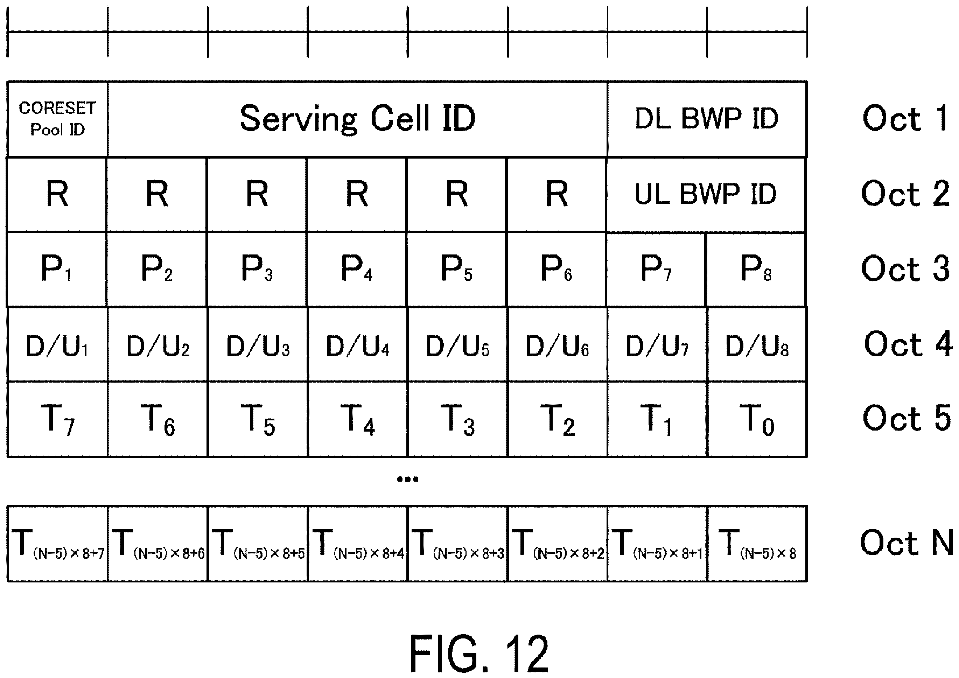

FIG. 12 is a diagram illustrating an example of the activation command D according to an aspect of the present embodiment. A field of a serving cell ID may indicate an identifier of a serving cell applying the fourth MAC CE. A field of a DL BWP ID may indicate one downlink BWP applying the fourth MAC CE. The field of the DL BWP ID field may indicate one downlink BWP applying the fourth MAC CE as one codepoint of the DCI 'bandwidth part indicator' field. A field of a UL BWP ID may indicate one uplink BWP applying the fourth MAC CE. The field of the UL BWP ID may indicate one uplink BWP applying the fourth MAC CE as one codepoint of the DCI 'bandwidth part indicator' field. A field of "Pᵢ" may indicate whether each TCI codepoint has multiple TCI states or one TCI state. For example, in a case that the "Pᵢ" field is set to 1, the i-th TCI codepoint may include both the DL TCI state and the UL TCI state. For example, in a case that the "Pᵢ" field is set to 0, the i-th TCI codepoint may include one of the DL TCI state and the UL TCI state. A field of "D/Uᵢ" field may indicate whether each TCI codepoint is for joint (both DL and UL)/DL or UL. For example, in a case that the "D/Uᵢ" field is set to 1, the i-th TCI codepoint may be for DL/joint. For example, in a case that the "D/Uᵢ" field is set to 0, the i-th TCI codepoint may be for UL. A field of "Tⱼ" may indicate an activation/deactivation status of a TCI state with a TCI state ID j. The fact that the field of "Tⱼ" is set to 1 may indicate that the TCI state with the TCI state ID j is activated. The fact that the field of "Tⱼ" is set to 1 may indicate that the TCI state with the TCI state ID j is mapped to one codepoint of the 'Transmission Configuration Indication field' in the DCI. The fact that the field of "Tⱼ" is set to 0 may indicate that the TCI state with the TCI state ID j is deactivated. The fact that the field of "Tⱼ" is set to 1 may indicate that the TCI state with the TCI state ID j is not mapped to one codepoint of the "Transmission Configuration Indication field' in the DCI. j may be a UL TCI state ID (UL-TCIState-Id) or a DL/Joint TCI state ID (DLorJoint-TCIState-Id). The number of UL TCI state IDs may be up to 64. The number of DL/Joint TCI state IDs may be up to 128. j may be {0, ..., 63}. j may be {0, ..., 127. j may be {0, ..., 191}. For example, in a case that the i-th TCI codepoint corresponds to the UL TCI state, the field of "Tⱼ" may indicate an activation/deactivation status of the TCI state with the TCI state ID j - 128. For example, in a case that the i-th TCI codepoint corresponds to the DL TCI state or the joint TCI state, the field of "Tⱼ" may indicate an activation/deactivation status of the TCI state with the TCI state ID j - 64. For example, in a case that the i-th TCI codepoint corresponds to the UL TCI state, the fact that the field of "Tⱼ" is set to 1 may indicate that the TCI state with the TCI state ID j - 128 is activated. For example, in the case that the i-th TCI codepoint corresponds to the UL TCI state, the fact that the field of "Tⱼ" is set to 1 may indicate that the TCI state with the TCI state ID j - 128 is mapped to the i-th TCI codepoint. For example, in the case that the i-th TCI codepoint corresponds to the DL TCI state or the joint TCI state, the fact that the field of "Tⱼ" is set to 1 may indicate that the TCI state with TCI state ID j - 64 is activated. For example, in the case that the i-th TCI codepoint corresponds to the DL TCI state or the joint TCI state, the fact that the field of "Tⱼ" is set to 1 may indicate that the TCI state with TCI state ID j - 64 is mapped to the i-th TCI codepoint. A field of a CORESET pool ID field may indicate that a second mapping is specific to a CORESET ID (ControlResourceSetId) configured with the CORESET pool ID (CORESET pool index). The second mapping may be a mapping between the "activated TCI state" and the codepoint of the DCI 'Transmission Configuration Indication' set by the "Tᵢ" field. The fact that the field of the CORESET pool ID is set to 1 may indicate that the MAC CE is applied to a downlink transmission or uplink transmission scheduled by a CORESET with the CORESET pool ID (CORESET pool index) having a value of 1. The fact that the field of the CORESET pool ID is set to 0 may indicate that the MAC CE is applied to a downlink transmission or uplink transmission scheduled by a CORESET with the CORESET pool ID (CORESET pool index) having a value of 0. In a case that the CORESET pool index (coresetPoolIndex) is not configured, the field of the CORESET pool ID in the fourth MAC CE may be ignored.

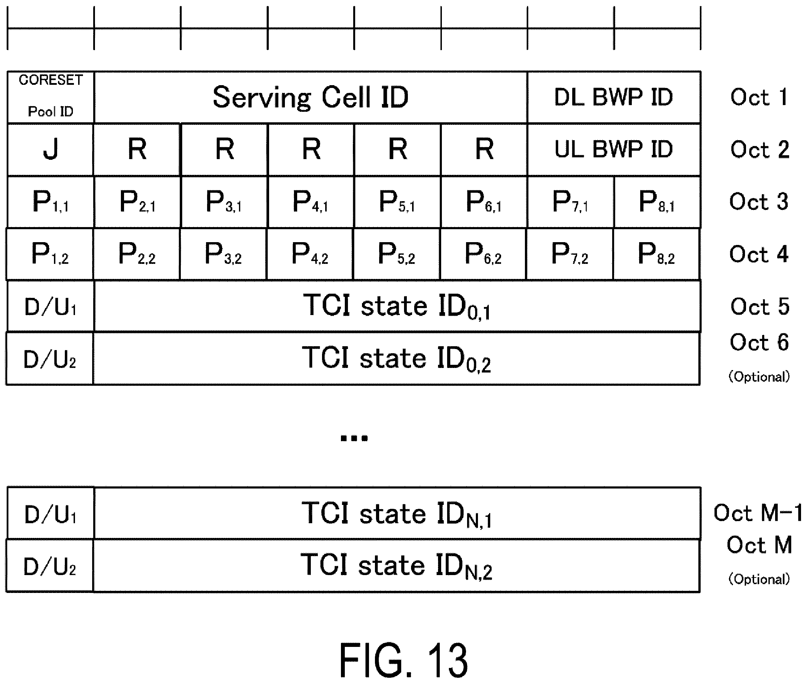

FIG. 13 is a diagram illustrating an example of the activation command E according to an aspect of the present embodiment. A field of a CORESET pool ID in FIG. 13 may be reserved. A field of "P_{i, j}" may indicate whether each TCI codepoint has multiple TCI states or one TCI state. For example, in a case that the "P_{i, j}" field is set to 1, the j-th TCI state in the i-th TCI codepoint may include two TCI states (e.g., a DL TCI state and a UL TCI state). For example, in a case that the "P_{i, j}" field is set to 0, the j-th TCI state in the i-th TCI codepoint may include one TCI state (e.g., a DL TCI state or a UL TCI state). A field of "D/Uⱼ" may indicate whether the TCI state ID in the same octet is for joint (both DL and UL)/DL or UL. The field of "D/Uⱼ" may indicate whether the TCI state ID in the same octet is for joint (both DL and UL)/DL or UL. For example, in a case that the "D/Uⱼ" field is set to 1, the TCI state ID in the same octet may be for DL/joint. For example, in a case that the "D/Uⱼ" field is set to 0, the TCI state ID in the same octet may be for UL. A "TCI state ID_{i, j}" field may indicate a TCI state identified by the DL/Joint TCI state ID (TCI-StateId) or the UL TCI state ID (UL-TCIState-Id). In the case that the "D/Uⱼ" field is set to 1, a 7-bit long "TCI state ID_{i, j}" may be used. In a case that the "D/Uⱼ" field is set to 0, the most significant bit of the "TCI state ID_{i, j}" may be considered to be reserved and the remaining 6 bits may indicate the ID of UL-TCIState (UL TCI state Id, UL-TCIState-Id).

j in FIG. 13 may correspond to a CORESET pool ID (CORESET pool index). For example, j = 1 may correspond to the CORESET pool ID (CORESET pool index) = 0. For example, j = 2 may correspond to the CORESET pool ID (CORESET pool index) = 1. For example, j = 0 may correspond to the CORESET pool ID (CORESET pool index) = 0. For example, j = 1 may correspond to the CORESET pool ID (CORESET pool index) = 1. Whether j corresponds to the CORESET pool ID (CORESET pool index) may be determined by a "J" field. For example, in a case that the "J" field is set to 1, j may correspond to the CORESET pool ID (CORESET pool index). For example, in a case that the "J" field is set to 0, j may correspond to an index of the TCI state in one codepoint. A field of "P_{i, j}" may indicate whether each TCI codepoint of the DCI associated with the CORESET pool ID corresponding to j has multiple TCI states or one TCI state. For example, in the case that the "P_{i, j}" field is set to 1, the i-th TCI codepoint of the DCI associated with the CORESET pool ID corresponding to j may correspond to both the DL TCI state and the UL TCI state. For example, in the case that the "P_{i, j}" field is set to 0, the i-th TCI codepoint of the DCI associated with the CORESET pool ID corresponding to j may correspond to one of the DL TCI state and the UL TCI state. In a case that the CORESET pool index (higher layer parameter coresetPoolIndex) is not configured, j need not correspond to the CORESET pool ID.

An activation command F may be a MAC CE for the TCI state indication for the PDCCH. The activation command F may include a 5-bit serving cell ID, a 4-bit CORESET ID, and a 7-bit TCI state ID.

An activation command G may be a MAC CE for the TCI state indication for the PDCCH. The activation command G may include a 5-bit serving cell ID, a 4-bit CORESET ID, a 7-bit first TCI state ID, and a 7-bit second TCI state ID. In a case that one or multiple CORESETs in one BWP are configured with different CORESET pool index values, the activation command G need not be applied to the one or multiple CORESET. In a case that the SFN is applied for the PDCCH, the activation command G may be applied. The fact that the SFN is applied for the PDCCH may mean that sfnSchemePdcch is configured.

The terminal apparatus 1 may receive the activation command. The activation command may be a generic term for the activation command A, the activation command B, the activation command C, the activation command D, the activation command E, the activation command F, and the activation command G.

The DCI format 1_0/1_1/1_2 may be used for scheduling of the PDSCH. The bandwidth part indicator (BWP indicator) field may be included in one or both of the DCI format 1_1 and the DCI format 1_2. The number of information bits constituting the BWP indicator field may be determined based on the number of DL BWPs. A TPC command (TPC command for scheduled PUCCH) field may be included in one or both of the DCI format 1_1 and the DCI format 1_2. A second TPC command (Second TPC command for scheduledPUCCH) field may be included in one or both of the DCI format 1_1 and the DCI format 1_2. For example, in a case that a higher layer parameter SecondTPCFieldDCI is configured, the second TPC command (Second TPC command for scheduled PUCCH) field may be included in the DCI format 1_1.

The DCI format 1_0, the DCI format 1_1, and the DCI format 1_2 may be the DCI formats for scheduling the PDSCH. The DCI format 1_0 may be used for scheduling of the PDSCH in one downlink cell.

The antenna port field (Antenna port(s) field) may be included the DCI format 1_1 and the DCI format 1_2. The number of information bits constituting the antenna port field may be 4, 5, or 6 bits. The number of information bits constituting the antenna port field may also be 4, 5, 6, or 7 bits. The number of information bits constituting the antenna port field may also be 4, 5, 6, 7, or 8 bits. The number of CDM groups without data may be any of a value of 1, a value of 2, and a value of 3. The number of CDM groups without data that is the value of 1 may refer to the CDM group 0. The number of CDM groups without data that is the value of 2 may refer to the CDM group {0, 1}. The number of CDM groups without data that is the value of 3 may refer to the CDM group {0, 1, 2}.

The fact that a higher layer parameter dmrs-Type is 1 may mean that a DMRS configuration type 1 is configured. The fact that the higher layer parameter dmrs-Type is 2 may mean that a DMRS configuration type 2 is configured. The fact that a higher layer parameter maxLength is 1 may mean that the maximum number of front-loaded DMRS symbols has 1 symbol. The fact that the higher layer parameter maxLength is 2 may mean that the maximum number of front-loaded DMRS symbols has 2 symbols. For example, the fact that the higher layer parameter maxLength is 1 may mean that a single symbol front-loaded DMRS (front-loaded DMRS symbol) is configured. For example, the fact that the higher layer parameter maxLength is 2 may mean that a single symbol front-loaded DMRS (front-loaded DMRS symbol) or a double symbol front-loaded DMRS is configured.

In a case that the DMRS configuration type 1 and the single symbol front-loaded DMRS symbol are configured, the number of information bits constituting the antenna port field may be four. In the case that the DMRS configuration type 1 and the single symbol front-loaded DMRS symbol are configured and in a case that a higher layer parameter ExtendedDMRSports is not configured, the number of information bits constituting the antenna port field may be four. In the case that the DMRS configuration type 1 and the single symbol front-loaded DMRS symbol are configured and in a case that a higher layer parameter ExtendedDMRSports is configured to be disabled, the number of information bits constituting the antenna port field may be four. In a case that a value of the antenna port field including four information bits is 0, the DMRS port may be 0 and the number of CDM groups without data may be one. In a case that the value of the antenna port field including four information bits is 1, the DMRS port may be 1 and the number of CDM groups without data may be one. In a case that the value of the antenna port field including four information bits is 2, the DMRS port may be {0, 1} and the number of CDM groups without data may be one. In a case that the value of the antenna port field including four information bits is 3, the DMRS port may be 0 and the number of CDM groups without data may be two. In a case that the value of the antenna port field including four information bits is 4, the DMRS port may be 1 and the number of CDM groups without data may be two. In a case that the value of the antenna port field including four information bits is 5, the DMRS port may be 2 and the number of CDM groups without data may be two. In a case that the value of the antenna port field including four information bits is 6, the DMRS port may be 3 and the number of CDM groups without data may be two. In a case that the value of the antenna port field including four information bits is 7, the DMRS port may be {0, 1} and the number of CDM groups without data may be two. In a case that the value of the antenna port field including four information bits is 8, the DMRS port may be {2, 3} and the number of CDM groups without data may be two. In a case that the value of the antenna port field including four information bits is 9, the DMRS port may be {0, 1, 2} and the number of CDM groups without data may be two. In a case that the value of the antenna port field including four information bits is 10, the DMRS port may be {0, 1, 2, 3} and the number of CDM groups without data may be two. In a case that the value of the antenna port field including four information bits is 11, the DMRS port may be {0, 2} and the number of CDM groups without data may be two. In a case that the value of the antenna port field including four information bits is 12, 13, 14, or 15, the DMRS port may be reserved and the number of CDM groups without data may be reserved.

In the case that the DMRS configuration type 1 and the single symbol front-loaded DMRS symbol are configured and in a case that a higher layer parameter ExtendedDMRSports is configured, the number of information bits constituting the antenna port field may be 5. In the case that the DMRS configuration type 1 and the single symbol front-loaded DMRS symbol are configured and in a case that a higher layer parameter ExtendedDMRSports is configured to be enabled, the number of information bits constituting the antenna port field may be five. In a case that a value of the antenna port field including five information bits is 0, the DMRS port may be 0 and the number of CDM groups without data may be one. In a case that the value of the antenna port field including five information bits is 1, the DMRS port may be 1 and the number of CDM groups without data may be one. In a case that the value of the antenna port field including five information bits is 2, the DMRS port may be {0, 1} and the number of CDM groups without data may be one. In a case that the value of the antenna port field including five information bits is 3, the DMRS port may be 0 and the number of CDM groups without data may be two. In a case that the value of the antenna port field including five information bits is 4, the DMRS port may be 1 and the number of CDM groups without data may be two. In a case that the value of the antenna port field including five information bits is 5, the DMRS port may be 2 and the number of CDM groups without data may be two. In a case that the value of the antenna port field including five information bits is 6, the DMRS port may be 3 and the number of CDM groups without data may be two. In a case that the value of the antenna port field including five information bits is 7, the DMRS port may be {0, 1} and the number of CDM groups without data may be two. In a case that the value of the antenna port field including five information bits is 8, the DMRS port may be {2, 3} and the number of CDM groups without data may be two. In a case that the value of the antenna port field including five information bits is 9, the DMRS port may be {0, 1, 2} and the number of CDM groups without data may be two. In a case that the value of the antenna port field including five information bits is 10, the DMRS port may be {0, 1, 2, 3} and the number of CDM groups without data may be two. In a case that the value of the antenna port field including five information bits is 11, the DMRS port may be {0, 2} and the number of CDM groups without data may be two. In a case that the value of the antenna port field including five information bits is 12, the DMRS port may be 8 and the number of CDM groups without data may be two. In a case that the value of the antenna port field including five information bits is 13, the DMRS port may be 9 and the number of CDM groups without data may be two. In a case that the value of the antenna port field including five information bits is 14, the DMRS port may be 10 and the number of CDM groups without data may be two. In a case that the value of the antenna port field including five information bits is 15, the DMRS port may be 11 and the number of CDM groups without data may be two. In a case that the value of the antenna port field including five information bits is 16, the DMRS port may be {8, 9} and the number of CDM groups without data may be two. In a case that the value of the antenna port field including five information bits is 17, the DMRS port may be { 10, 11} and the number of CDM groups without data may be two. In a case that the value of the antenna port field including five information bits is 18, the DMRS port may be {8, 9, 10} and the number of CDM groups without data may be two. In a case that the value of the antenna port field including five information bits is 19, the DMRS port may be {8, 9, 10, 11} and the number of CDM groups without data may be two. In a case that the value of the antenna port field including five information bits indicates some or all of the DMRS ports {8, 9, 10, 11}, the number of CDM groups without data may be two.

In a case that the DMRS configuration type 1 is configured and in a case that the maximum number of front-loaded DMRS symbols is configured to be two, the number of information bits constituting the antenna port field may be five. In the case that the DMRS configuration type 1 is configured, in the case that the maximum number of front-loaded DMRS symbols is configured to be two, and in a case that the higher layer parameter ExtendedDMRSports is not configured, the number of information bits constituting the antenna port field may be five. In the case that the DMRS configuration type 1 is configured, in the case that the maximum number of front-loaded DMRS symbols is configured to be two, and in a case that the higher layer parameter ExtendedDMRSports is configured to be disabled, the number of information bits constituting the antenna port field may be five. The antenna port field including five information bits may indicate some or all of the DMRS ports {0, 1, 2, 3, 4, 5, 6, 7}.

In the case that the DMRS configuration type 1 is configured and in the case that the maximum number of front-loaded DMRS symbols is configured to be two, the number of information bits constituting the antenna port field may be five. In the case that the DMRS configuration type 1 is configured, in the case that the maximum number of front-loaded DMRS symbols is configured to be two, and in the case that the higher layer parameter ExtendedDMRSports is not configured, the number of information bits constituting the antenna port field may be five. In the case that the DMRS configuration type 1 is configured, in the case that the maximum number of front-loaded DMRS symbols is configured to be two, and in the case that the higher layer parameter ExtendedDMRSports is configured to be disabled, the number of information bits constituting the antenna port field may be five. The antenna port field including five information bits may indicate some or all of the DMRS ports {0, 1, 2, 3, 4, 5, 6, 7}.

In the case that the DMRS configuration type 1 is configured, in the case that the maximum number of front-loaded DMRS symbols is configured to be two, and in the case that the higher layer parameter ExtendedDMRSports is configured, the number of information bits constituting the antenna port field may be six. In the case that the DMRS configuration type 1 is configured, in the case that the maximum number of front-loaded DMRS symbols is configured to be two, and in the case that the higher layer parameter ExtendedDMRSports is configured to be enabled, the number of information bits constituting the antenna port field may be six. The antenna port field including six information bits may indicate some or all of the DMRS ports {0, 1, 2, 3, 4, 5, 6, 7, 8, 9, 10, 11, 12, 13, 14, 15}. In a case that a value of the antenna port field including six information bits indicates some or all of the DMRS ports {8, 9, 10, 11, 12, 13, 14, 15}, the number of CDM groups without data may be two.

In the case of the DMRS configuration type 1, the antenna ports (DMRS ports) that can be used by DMRS extension being applied may correspond to the number of CDM groups without data being two. In the case of the DMRS configuration type 1, the antenna ports (DMRS ports) that can be used by the DMRS extension being applied need not correspond to the number of CDM groups without data being one.

In a case that the DMRS configuration type 2 is configured and in a case that the maximum number of front-loaded DMRS symbols is configured to be one, the number of information bits constituting the antenna port field may be five. In the case that the DMRS configuration type 2 is configured, in the case that the maximum number of front-loaded DMRS symbols is configured to be one, and in the case that the higher layer parameter ExtendedDMRSports is not configured, the number of information bits constituting the antenna port field may be five. In the case that the DMRS configuration type 2 is configured, in the case that the maximum number of front-loaded DMRS symbols is configured to be one, and in the case that the higher layer parameter ExtendedDMRSports is configured to be disabled, the number of information bits constituting the antenna port field may be five. The antenna port field including five information bits may indicate some or all of the DMRS ports {0, 1, 2, 3, 4, 5}.

In the case that the DMRS configuration type 2 is configured, in the case that the maximum number of front-loaded DMRS symbols is configured to be one, and in the case that the higher layer parameter ExtendedDMRSports is configured, the number of information bits constituting the antenna port field may be six. In the case that the DMRS configuration type 2 is configured, in the case that the maximum number of front-loaded DMRS symbols is configured to be one, and in the case that the higher layer parameter ExtendedDMRSports is configured to be enabled, the number of information bits constituting the antenna port field may be six. The antenna port field including six information bits may indicate some or all of the DMRS ports {0, 1, 2, 3, 4, 5, 12, 13, 14, 15, 16, 17}. In a case that the value of the antenna port field including six information bits indicates some or all of the DMRS ports {12, 13, 14, 15, 16, 17}, the number of CDM groups without data may be one or both of two and three, and need not be one.

In the case that the DMRS configuration type 2 is configured and in the case that the maximum number of front-loaded DMRS symbols is configured to be two, the number of information bits constituting the antenna port field may be six. In the case that the DMRS configuration type 2 is configured, in the case that the maximum number of front-loaded DMRS symbols is configured to be two, and in the case that the higher layer parameter ExtendedDMRSports is not configured, the number of information bits constituting the antenna port field may be six. In the case that the DMRS configuration type 2 is configured, in the case that the maximum number of front-loaded DMRS symbols is configured to be two, and in the case that the higher layer parameter ExtendedDMRSports is configured to be disabled, the number of information bits constituting the antenna port field may be six. The antenna port field including six information bits may indicate some or all of the DMRS ports {0, 1, 2, 3, 4, 5, 6, 7, 8, 9, 10, 11}.

In the case that the DMRS configuration type 2 is configured, in the case that the maximum number of front-loaded DMRS symbols is configured to be two, and in the case that the higher layer parameter ExtendedDMRSports is configured, the number of information bits constituting the antenna port field may be seven. In the case that the DMRS configuration type 2 is configured, in the case that the maximum number of front-loaded DMRS symbols is configured to be two, and in the case that the higher layer parameter ExtendedDMRSports is configured to be enabled, the number of information bits constituting the antenna port field may be seven. The antenna port field including seven information bits may indicate some or all of the DMRS ports {0, 1, 2, 3, 4, 5, 6, 7, 8, 9, 10, 11, 12, 13, 14, 15, 16, 17, 18, 19, 20, 21, 22, 23}. In a case that the value of the antenna port field including seven information bits indicates some or all of the DMRS ports {12, 13, 14, 15, 16, 17, 18, 19, 20, 21, 22, 23}, the number of CDM groups without data may be one or both of two and three, and need not be one.

In the case of the DMRS configuration type 2, the antenna ports (DMRS ports) that can be used by the DMRS extension being applied may correspond to the number of CDM groups without data being three. In the case of the DMRS configuration type 1, the antenna ports (DMRS ports) that can be used by the DMRS extension being applied need not correspond to the number of CDM groups without data being one. In the case of the DMRS configuration type 1, the antenna ports (DMRS ports) that can be used by the DMRS extension being applied need not correspond to the number of CDM groups without data being two.

In the case that the DMRS configuration type 1 is configured and the maximum number of front-loaded DMRS symbols is configured to be one, and in the case that the higher layer parameter ExtendedDMRSports is configured, the number of information bits constituting the antenna port field may be six. In the case that the DMRS configuration type 1 is configured and the maximum number of front-loaded DMRS symbols is configured to be one, and in the case that the higher layer parameter ExtendedDMRSports is configured to be enabled, the number of information bits constituting the antenna port field may be six. A first part of the antenna port field including six information bits may be used to indicate the DMRS port, and a second part of the antenna port field including six information bits may be used for DMRS reception assistance.

In the case that the DMRS configuration type 1 is configured, in the case that the maximum number of front-loaded DMRS symbols is configured to be two, and in the case that the higher layer parameter ExtendedDMRSports is configured, the number of information bits constituting the antenna port field may be seven. In the case that the DMRS configuration type 1 is configured, in the case that the maximum number of front-loaded DMRS symbols is configured to be two, and in the case that the higher layer parameter ExtendedDMRSports is configured to be enabled, the number of information bits constituting the antenna port field may be seven. The antenna port field including seven information bits may indicate some or all of the DMRS ports {0, 1, 2, 3, 4, 5, 6, 7, 8, 9, 10, 11, 12, 13, 14, 15}. In a case that the value of the antenna port field including seven information bits indicates some or all of the DMRS ports {8, 9, 10, 11, 12, 13, 14, 15}, the number of CDM groups without data may be two. A first part of the antenna port field including seven information bits may be used to indicate a DMRS port, and a second part of the antenna port field including seven information bits may be used for DMRS reception assistance.

In the case that the DMRS configuration type 2 is configured, in the case that the maximum number of front-loaded DMRS symbols is configured to be one, and in the case that the higher layer parameter ExtendedDMRSports is configured, the number of information bits constituting the antenna port field may be seven. In the case that the DMRS configuration type 2 is configured, in the case that the maximum number of front-loaded DMRS symbols is configured to be one, and in the case that the higher layer parameter ExtendedDMRSports is configured to be enabled, the number of information bits constituting the antenna port field may be seven. The antenna port field including seven information bits may indicate some or all of the DMRS ports {0, 1, 2, 3, 4, 5, 12, 13, 14, 15, 16, 17}. In a case that the value of the antenna port field including seven information bits indicates some or all of the DMRS ports {12, 13, 14, 15, 16, 17}, the number of CDM groups without data may be two. A first part of the antenna port field including seven information bits may be used to indicate a DMRS port, and a second part of the antenna port field including seven information bits may be used for DMRS reception assistance.

In the case that the DMRS configuration type 2 is configured, in the case that the maximum number of front-loaded DMRS symbols is configured to be two, and in the case that the higher layer parameter ExtendedDMRSports is configured, the number of information bits constituting the antenna port field may be eight. In the case that the DMRS configuration type 2 is configured, in the case that the maximum number of front-loaded DMRS symbols is configured to be two, and in the case that the higher layer parameter ExtendedDMRSports is configured to be enabled, the number of information bits constituting the antenna port field may be eight. The antenna port field including eight information bits may indicate some or all of the DMRS ports {0, 1, 2, 3, 4, 5, 6, 7, 8, 9, 10, 11, 12, 13, 14, 15, 16, 17, 18, 19, 20, 21, 22, 23}. In a case that the value of the antenna port field including eight information bits indicates some or all of the DMRS ports {12, 13, 14, 15, 16, 17, 18, 19, 20, 21, 22, 23}, the number of CDM groups without data may be two. A first part of the antenna port field including eight information bits may be used to indicate a DMRS port, and a second part of the antenna port field including seven information bits may be used for DMRS reception assistance.

The number of DMRS ports may be the number of layers (the number of transmission layers) of v. An antenna port {p0,., pv-1} (antenna port value, antenna port number) may be a sum of a DMRS port (DMRS port value, DMRS port number) and 1000. For example, the DMRS port 0 may correspond to antenna port p0 = 1000. For example, the DMRS port 1 may correspond to antenna port p1 = 1001. For example, the DMRS ports {0,1} may correspond to antenna ports {p0 = 1000, p1 = 1001}. For example, the DMRS ports {2, 3} may correspond to antenna ports {p2 = 1002, p3 = 1003}.

The TCI (Transmission configuration indication) field may be included in one or both of the DCI format 1_1 and the DCI format 1_2. For example, in a case that the higher layer parameter is configured, the TCI (Transmission configuration indication) field may be included in one or both of the DCI format 1_1 and the DCI format 1_2. For example, in a case that a higher layer parameter tci-PresentInDCI is configured, the TCI (Transmission configuration indication) field may be included in one or both of the DCI format 1_1 and the DCI format 1_2. One or two TCI states may be indicated by the DCI format. One or multiple (e.g., two) TCI states may be indicated by the TCI field in the DCI format.

One or both of multiple uplink channels/signals (e.g., PUSCH, PUCCH, and SRS) and multiple downlink channels/signals (e.g., PDSCH, PDCCH, and CSI-RS) may be subjected to beam management in one TCI state. In other words, one TCI state being applied to multiple channels/signals leads to an expectation that efficiency of beam management is improved. However, in a case of the Multiple Transmission and Reception Points (Multi-TRP), beams are difficult to switch for each TRP by applying one TCI state to multiple channels/signals. Thus, a problem is that one TCI state needs to be applied to multiple channels/signals and each TRP. Accordingly, efficient communication and efficient beam management may be expected. In addition, efficient beam management is expected in consideration of the PDSCH/PDCCH to which some or all of the FDM/TDM/SDM/SFN scheme and the repetition scheme are applied. The present invention may be used, as means for solving problems, for TCI state switching and activation commands in consideration of the PDSCH/PDCCH to which some or all of the FDM/TDM/SDM/SFN scheme and the repetition scheme are applied. A PDSCH-MTRP scheme may be a generic term for the FDM scheme, TDM scheme, SDM scheme, and SFN schemes for PDSCH.

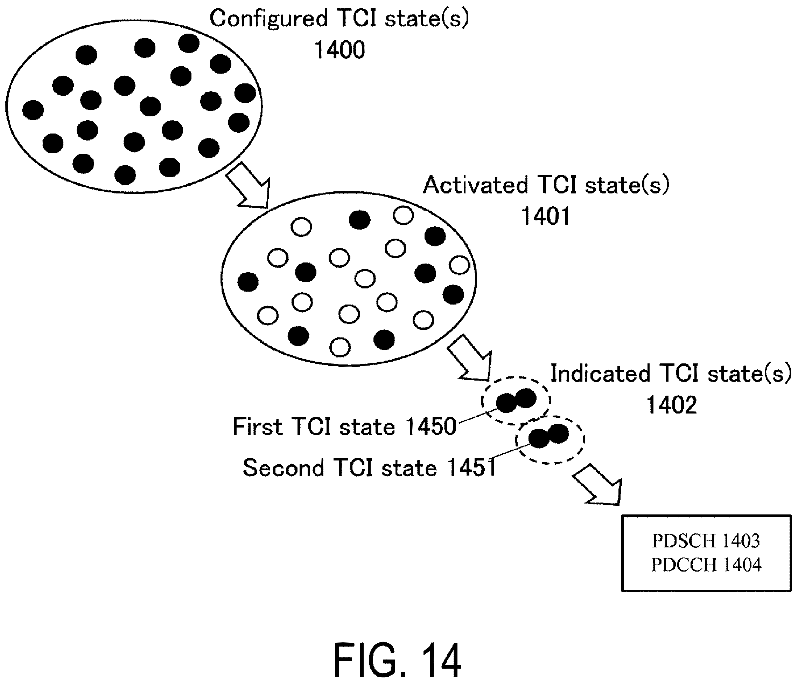

FIG. 14 is a diagram illustrating an example of management of a TCI state according to an aspect of the present embodiment. The terminal apparatus 1 may receive one or both of a PDSCH 1403 and a PDCCH 1404. The PDSCH 1403 may be transmitted for conveying the transport block. The terminal apparatus 1 may receive the PDCCH 1404 to which the DCI is mapped. A black circle in FIG. 14 may be one TCI state.

One or multiple TCI states 1400 may be configured by a higher layer parameter. For example, one or multiple UL TCI states (UL-TCIState) may be configured by the higher layer parameter for each uplink BWP (BWP-UplinkDedicated). For example, one or multiple DL/Joint TCI states (DLorJointTCIState) may be configured by the higher layer parameter for each PDSCH configuration (PDSCH-Config). One TCI state may be associated with one TCI state ID. For example, one UL TCI state may be associated with one UL TCI state ID (TCI-UL-State-Id, UL-TCIState-Id). For example, one DL/Joint TCI state (TCI-state) may be associated with one TCI state ID (TCI-StateId)). One or multiple TCI states configured by the higher layer parameter may be a "configured TCI state 1400".

One or multiple TCI states 1401 may be activated by a MAC CE (e.g., an activation command). The first PDSCH may convey a first transport block. The first transport block may be one MAC PDU. One MAC PDU may include an activation command or a MAC CE referred to as an activation command. For example, the activation command may be the activation command D or the activation command E. One or multiple TCI states, and one or both of one or multiple "pairs of TCI states" may be mapped to one or multiple codepoints. For example, one or multiple TCI states and one or both of "pairs of TCI states" may be mapped to one or multiple codepoints by the activation command. Each TCI state or each pair of TCI states may be mapped to one codepoint. For example, each TCI state or each pair of TCI states may be mapped to one codepoint by the activation command. The codepoint to which a TCI state or a pair of TCI states are mapped may be a codepoint in the TCI field. The codepoint to which a TCI state or a pair of TCI states are mapped may be a codepoint of the TCI field in the DCI format 1_1 or the DCI format 1_2. The codepoint to which a TCI state or a pair of TCI states are mapped may be a codepoint of the TCI field in the DCI 1410. The TCI state activated by the MAC CE may be an "activated TCI state 1401". The TCI state mapped to the codepoint of the TCI field may be the activated TCI state 1401.

In a case that the CORESET pool index (coresetPoolIndex) is not configured in one or multiple CORESETS (ControlResourceSet), the activation command E may be used. In a case that the CORESET pool index (coresetPoolIndex) is configured in one or multiple CORESETS (ControlResourceSet), the activation command D or the activation command E may be used. For example, in the single-DCI mode, the activation command E may be used. For example, in the multi-DCI mode, the activation command D may be used. For example, in both the single-DCI mode and the multi-DCI mode, the activation command E may be used.

One or multiple TCI states 1402 may be indicated by first DCI. The first DCI may be the DCI format 1_1 or the DCI format 1_2. The first DCI may include a transmission configuration indication (TCI) field. The TCI field may indicate one or multiple (e.g., two or four) TCI states. For example, one value of the TCI field may correspond to one codepoint of the TCI field. The TCI state indicated by the first DCI format may be an indicated TCI state 1402. The indicated TCI state 1402 may be some or all of an UL TCI state, a DL TCI state, or a Joint TCI state. The UL TCI state may be a TCI state for a PUSCH, a PUCCH, and an SRS. The DL TCI state may be a TCI state for a PDSCH, a PDCCH, and a CSI-RS. The Joint TCI state may be a TCI state for a PUSCH, a PUCCH, an SRS, a PDSCH, a PDCCH, and a CSI-RS.

The number of indicated TCI states 1402 may be four. For example, the indicated TCI states 1402 may be a first pair of a first UL TCI state and a first DL TCI state, and a second pair of a second UL TCI state and a second DL TCI state. The first pair may be associated with a first TRP. The second pair may be associated with a second TRP.

The number of indicated TCI states 1402 may be three. For example, the indicated TCI states 1402 may be the first pair of the first UL TCI state and the first DL TCI state, and a third DL/UL TCI state. The first pair may be associated with the first TRP and the third DL/UL/Joint TCI state may be associated with the second TRP. The first pair may be associated with the second TRP and the third DL/UL/Joint TCI state may be associated with the first TRP.

The number of indicated TCI states 1402 may be two. For example, the indicated TCI states 1402 may be a first DL/UL/Joint TCI state and a second DL/UL/Joint TCI state. The first DL/UL/Joint may be associated with the first TRP and the second DL/UL/Joint TCI state may be associated with the second TRP.

The number of indicated TCI states 1402 may be two. For example, the indicated TCI state 1402 may be the first pair of the first DL TCI state and the first UL TCI state. The first pair may be associated with the first TRP. The first pair may be associated with the second TRP.

The number of indicated TCI states 1402 may be one. For example, the indicated TCI states 1402 may be the first DL/UL/Joint TCI state. The first DL/UL/Joint need not be associated with a TRP. The first DL/UL/Joint TCI state may be associated with the first TRP. The first DL/UL/Joint TCI state may be associated with the second TRP.

The indicated TCI state 1402 may be applied starting from the first slot N_{symb} symbols after the last OFDM symbol of the PDCCH to which the DCI format 1_1/1_2 is mapped. The indicated TCI state 1402 may apply to multiple channels/signals. N_{symb} may be BeamAppTime.

Some or all of the one or multiple TCI states 1402 may apply to the PDSCH 1403. The "indicated TCI state 1402" applied to the PDSCH 1403 may be one or both of one or multiple DL TCI states and one or multiple Joint TCI states.

Some or all of the one or multiple TCI states 1402 may apply to the PDCCH 1404. The "indicated TCI state 1402" applied to the PDCCH 1404 may be one or both of one or multiple DL TCI states and one or multiple Joint TCI states.

The indicated TCI state 1402 may indicate at least the TCI state 1450 and the TCI state 1451. One or both of the TCI state 1450 and the TCI state 1451 may be applied to the PDCCH 1403. One or both of the TCI state 1450 and the TCI state 1451 may be applied to the PDCCH 1404.

The DCI format for the PDSCH 1403 may perform some or all of a first indication, a second indication, a third indication, and a fourth indication. The DCI format for the PDSCH 1403 may provide any of the first indication, the second indication, the third indication, and the fourth indication. For example, one field in the DCI format for the PDSCH 1403 may be any of the first indication, the second indication, the third indication, and the fourth indication. One field in the DCI format for the PDSCH 1403 may provide any of the first indication, the second indication, the third indication, and the fourth indication. The DCI format for the PDSCH 1403 may perform any of the first indication, the second indication, the third indication, and the fourth indication on the PDSCH 1403 scheduled by the DCI format. The DCI format for the PDSCH 1403 may provide any of the first indication, the second indication, the third indication, and the fourth indication to the PDSCH 1403 transmitted at least N_{symb} symbols after the last OFDM symbol of the PDCCH to which the DCI format is mapped.

The higher layer parameter for the PDCCH 1404 may perform some or all of the first indication, the second indication, the third indication, and the fourth indication. The higher layer parameter for the PDCCH 1404 may provide any of the first indication, the second indication, the third indication, and the fourth indication. The higher layer parameter for the PDCCH 1404 may perform any of the first indication, the second indication, the third indication, and the fourth indication on the PDCCH 1404.

The first indication and the second indication may be that one of the first TCI state 1450 and the second TCI state 1451 is applied to one or both of the PDSCH 1403 and the PDCCH 1404. The first indication may be that the first TCI state 1450 is applied to one or both of the PDSCH 1403 and the PDCCH 1404. The second indication may be that the second TCI state 1451 is applied to one or both of the PDSCH 1403 and the PDCCH 1404. The third indication and the fourth indication may be that both the first TCI state 1450 and the second TCI state 1451 are applied to one or both of the PDSCH 1403 and the PDCCH 1404. The first indication may be that the first TCI state 1450 is used. The second indication may be that the second TCI state 1451 is used. The third indication and the fourth indication may be that both the first TCI state 1450 and the second TCI state 1451 are used. The first indication may be that the first TCI state 1450 is applied to multiple downlink channels/signals including the PDSCH 1403. The second indication may be that the second TCI state 1451 is applied to multiple downlink channels/signals including the PDSCH 1403. The third indication and the fourth indication may be that both the first TCI state 1450 and the second TCI state 1451 are applied to multiple uplink channels/signals including the PDSCH 1403.

The DCI format for the PDSCH 1403 may include the TRP indicator field. The TRP indicator field may provide any of the first indication, the second indication, the third indication, and the fourth indication. For example, in a case that the TRP indicator field indicates 0 ("00"), the first indication may be performed. For example, in a case that the TRP indicator field indicates 1 ("01"), the second indication may be performed. For example, in a case that the TRP indicator field indicates 2 ("10"), the third indication may be performed. For example, in a case that the TRP indicator field indicates 3 ("11"), the fourth indication may be performed. For example, the TRP indicator field being 0 ("00") may be that the first indication is provided. For example, the TRP indicator field being 1 ("01") may be that the second indication is provided. For example, the TRP indicator field being 2 ("10") may be that the third indication is provided. For example, the TRP indicator field being 3 ("11") may be that the fourth indication is provided. The TRP indicator field may be a field different from the TCI field. In a case that a higher layer parameter is configured, the number of information bits constituting the TRP indicator field may be 2. In a case that a higher layer parameter is not configured, the number of information bits constituting the TRP indicator field may be 0. The TRP indicator field may be included in both a UL scheduling DCI format and a DL scheduling DCI format. The UL scheduling DCI format may be some or all of the DCI format 0_0, the DCI format 0_1, and the DCI format 0_2. The DL scheduling DCI format may be some or all of the DCI format 1_0, the DCI format 1_1, and the DCI format 1_2.

The DCI format for the PDSCH 1403 may include the TCI field. The TCI field may provide any of the first indication, the second indication, the third indication, and the fourth indication. For example, in a case that the TCI field indicates 0 ("00"), the first indication may be performed. For example, in a case that the TCI field indicates 1 ("01"), the second indication may be performed. For example, in a case that the TCI field indicates 2 ("10"), the third indication may be performed. For example, in a case that the TCI field indicates 3 ("11"), the fourth indication may be performed. For example, the TCI field being 0 ("00") may be that the first indication is provided. For example, the TCI field being 1 ("01") may be that the second indication is provided. For example, the TCI field being 2 ("10") may be that the third indication is provided. For example, the TCI field being 3 ("11") may be that the fourth indication is provided.

The higher layer parameter for the PDCCH 1403 may provide any of the first indication, the second indication, the third indication, and the fourth indication. For example, in a case that the higher layer parameter for the PDCCH 1403 indicates 0 ("00"), the first indication may be performed. For example, in a case that the higher layer parameter for the PDCCH 1403 indicates 1 ("01"), the second indication may be performed. For example, in a case that the higher layer parameter for the PDCCH 1403 indicates 2 ("10"), the third indication may be performed. For example, in a case that the higher layer parameter for the PDCCH 1403 indicates 3 ("11"), the fourth indication may be performed. For example, the higher layer parameter for the PDCCH 1403 being 0 ("00") may be that the first indication is provided. For example, the higher layer parameter for the PDCCH 1403 being 1 ("01") may be that the second indication is provided. For example, the higher layer parameter for the PDCCH 1403 being 2 ("10") may be that the third indication is provided. For example, the higher layer parameter for the PDCCH 1403 being 3 ("11") may be that the fourth indication is provided.

The TDM scheme may be applied for the PDSCH 1403. The PDSCH 1403 may be received in two PDSCH transmission occasions (a first transmission occasion and a second transmission occasion). For example, in a case that the TDM scheme (TDM scheme A) is applied, the PDSCH 1403 may be received in two PDSCH transmission occasions (the first transmission occasion and the second transmission occasion). The first transmission occasion and the second transmission occasion need not overlap in the time domain and may be in the same slot. The PDSCH 1403 may correspond to the same transport block in the first transmission occasion and the second transmission occasion. In a case that the first indication is provided, the first transmission occasion may be associated with the first TCI 1450 and the second transmission occasion may be associated with the first TCI 1450. In a case that the second indication is provided, the first transmission occasion may be associated with the second TCI 1451 and the second transmission occasion may be associated with the second TCI 1451. In a case that the third indication is provided, the first transmission occasion may be associated with the first TCI 1450 and the second transmission occasion may be associated with the second TCI 1451. In a case that the fourth indication is provided, the first transmission occasion may be associated with the second TCI 1451 and the second transmission occasion may be associated with the first TCI 1450.

The FDM scheme may be applied for the PDSCH 1403. The PDSCH 1403 may be received in two PDSCH transmission occasions (the first transmission occasion and the second transmission occasion). For example, in a case that the FDM scheme (FDM scheme A, FDM scheme B) is applied, the PDSCH 1403 may be received in two PDSCH transmission occasions (the first transmission occasion and the second transmission occasion). The first transmission occasion and the second transmission occasion need not overlap in the frequency domain. One transport block corresponding to the PDSCH 1403 may be transmitted in the first transmission occasion and the second transmission occasion. The PDSCH 1403 may correspond to the same transport block in the first transmission occasion and the second transmission occasion. A redundancy version (RV) in the first transmission occasion may be different from an RV in the second transmission occasion. In the case that the first indication is provided, the first transmission occasion may be associated with the first TCI 1450 and the second transmission occasion may be associated with the first TCI 1450. In the case that the second indication is provided, the first transmission occasion may be associated with the second TCI 1451 and the second transmission occasion may be associated with the second TCI 1451. In the case that the third indication is provided, the first transmission occasion may be associated with the first TCI 1450 and the second transmission occasion may be associated with the second TCI 1451. In the case that the fourth indication is provided, the first transmission occasion may be associated with the second TCI 1451 and the second transmission occasion may be associated with the first TCI 1450.

The SDM scheme may be applied for the PDSCH 1403. In a case that the SDM scheme is applied, the first TCI state 1450 may correspond to the first CDM group and the second TCI state 1451 may correspond to the second CDM group. In the case that the first indication is provided, the SDM scheme need not be applied for the PDSCH 1403. In the case that the second indication is provided, the SDM scheme need not be applied for the PDSCH 1403. In the case that the third indication is provided and in the case that the SDM scheme is applied, the first TCI state 1450 may correspond to the first CDM group and the second TCI state 1451 may correspond to the second CDM group. In the case that the fourth indication is provided and in the case that the SDM scheme is applied, the first TCI state 1450 may correspond to the second CDM group and the second TCI state 1451 may correspond to the first CDM group.

In a case that the SDM scheme is configured to be applied for the PDSCH 1403 by the higher layer parameter and in the case that the first indication is provided, the SDM scheme need not be applied. One of the first TCI state 1450 and the second TCI state 1451 may be applied to the PDSCH 1403. In the case that the SDM scheme is configured to be applied for the PDSCH 1403 by the higher layer parameter and in the case that the second indication is provided, the SDM scheme need not be applied. One of the first TCI state 1450 and the second TCI state 1451 may be applied to the PDSCH 1403. In the case that the SDM scheme is configured to be applied for the PDSCH 1403, the first indication need not be expected to be provided. In the case that the SDM scheme is configured to be applied for the PDSCH 1403, the second indication need not be expected to be provided.

The SFN scheme may be applied for the PDSCH 1403. For example, in the case that the SFN scheme is applied, the same DMRS ports may be simultaneously transmitted (or received) from different panels for the PDSCH 1403. In a case that the SFN scheme is applied for the PDSCH 1403, the DMRS port of the PDSCH 1403 may be QCLed with the DL-RSs of the first TCI state 1450 and the second TCI state 1451. In the case that the first indication is provided, the SFN scheme need not be applied for the PDSCH 1403. In the case that the second indication is provided, the SFN scheme need not be applied for the PDSCH 1403. In the case that the third indication is provided and in the case that the SFN scheme is applied, the DMRS port of the PDSCH 1403 may be QCLed with the DL-RSs of the first TCI state 1450 and the second TCI state 1451. In the case that the fourth indication is provided and in the case that the SFN scheme is applied, the DMRS port of the PDSCH 1403 may be QCLed with the DL-RSs of the first TCI state 1450 and the second TCI state 1451.

In a case that the SFN scheme is configured to be applied for the PDSCH 1403 by the higher layer parameter and in the case that the first indication is provided, the SFN scheme need not be applied. One of the first TCI state 1450 and the second TCI state 1451 may be applied to the PDSCH 1403. In the case that the SFN scheme is configured to be applied for the PDSCH 1403 by the higher layer parameter and in the case that the second indication is provided, the SFN scheme need not be applied. One of the first TCI state 1450 and the second TCI state 1451 may be applied to the PDSCH 1403. In the case that the SFN scheme is configured to be applied for the PDSCH 1403, the first indication need not be expected to be provided. In the case that the SFN scheme is configured to be applied for the PDSCH 1403, the second indication need not be expected to be provided.

The repetition may be applied for the PDSCH 1403. The terminal apparatus 1 may receive repetition of the PDSCH 1403. The terminal apparatus 1 may receive the PDSCH 1403 over multiple slots. For example, the PDSCH 1403 conveying the transport block may be received over multiple slots. The terminal apparatus 1 may repeatedly receive the transport block (the transport block corresponding to the PDSCH 1403) over K continuous slots. K may be the number of repetitions. K may be provided by repetitionNumber. The fact that repetitionNumber is provided for the PDSCH 1403 may mean that the repetition is applied for the PDSCH 1403.

In a case that the repetition is applied for the PDSCH 1403 and in the case that the first indication is provided, the first TCI state 1450 may be associated with K continuous slots. In the case that the repetition is applied for the PDSCH 1403 and in the case that the second indication is provided, the second TCI state 1451 may be associated with K continuous slots. In the case that the repetition is applied for the PDSCH 1403 and in the case that the third indication is provided, the first TCI state 1450 and the second TCI state 1451 may be associated with K continuous slots. For example, in a case of K = 2, the first TCI state 1450 may be applied to the first slot and the second TCI state 1451 may be applied to the second slot. In a case of K > 2 and in the case that cyclic mapping (cyclicMapping) is enabled, the first and second TCI states 1450 and 1451 may be applied to the first and second slots of K continuous slots, respectively, and the same TCI state mapping pattern may follow remaining slots of K continuous slots. In the case of K > 2 and in a case that sequential mapping (sequentialMapping) is enabled, the first TCI state 1450 may be applied to the first and second slots of K continuous slots, and the second TCI state 1451 may be applied to the third and fourth slots of K continuous slots, and the same TCI state mapping pattern may follow remaining slots of K continuous slots. In the case that the repetition is applied for the PDSCH 1403 and in the case that the fourth indication is provided, the first TCI state 1450 and the second TCI state 1451 may be associated with K continuous slots. For example, in the case of K = 2, the second TCI state 1451 may be applied to the first slot and the first TCI state 1450 may be applied to the second slot. In the case of K > 2 and in the case that the cyclic mapping (cyclicMapping) is enabled, the first and second TCI states 1451 and 1450 may be applied to the first and second slots of K continuous slots, respectively, and the same TCI state mapping pattern may follow remaining slots of K continuous slots. In the case of K > 2 and in the case that the sequential mapping (sequentialMapping) is enabled, the second TCI state 1451 may be applied to the first and second slots of K continuous slots, and the first TCI state 1450 may be applied to the third and fourth slots of K continuous slots, and the same TCI state mapping pattern may follow remaining slots of K continuous slots.

The fact that one or multiple TCI states are applied to the PDSCH may mean that the DMRS port (DMRS antenna port) of the PDSCH is QCLed with the DL-RS(s) of the one or multiple TCI states. The fact that one or multiple TCI states are applied to the PDCCH may mean that the DMRS port (DMRS antenna port) of the PDCCH is QCLed with the DL-RS(s) of the one or multiple TCI states. The fact that one or multiple TCI states are applied to the PDCCH may mean that the one or multiple TCI states are applied to the CORESET for the PDCCH.

The TCI state applied to the PDCCH 1404 may be the activated TCI state 1401. That is, one or multiple TCI states applied to the PDCCH 1404 may be indicated by the MAC. The TCI state applied to the PDCCH 1404 may be the indicated TCI state 1402. That is, one or multiple TCI states applied to the PDCCH 1404 may be indicated by the DCI. For example, in a case that the number of indicated TCI states 1402 is zero, the activated TCI state 1401 may be applied to the PDCCH 1404.

The SFN scheme may be applied for the PDCCH 1404. For example, in the case that the SFN scheme is applied, the same DMRS ports may be simultaneously transmitted (or received) from different panels for the PDCCH 1404. In a case that the SFN scheme is applied for the PDCCH 1404, the DMRS port of the PDCCH 1404 may be QCLed with the DL-RSs of the first TCI state 1450 and the second TCI state 1451. In the case that the SFN scheme is applied for the PDCCH 1404, the DMRS port of the PDCCH 1404 in the CORESET may be QCLed with the DL-RSs of the first TCI state 1450 and the second TCI state 1451. In the case that the first indication is provided, the SFN scheme need not be applied for the PDCCH 1404. In the case that the second indication is provided, the SFN scheme need not be applied for the PDCCH 1404. In the case that the third indication is provided and in the case that the SFN scheme is applied, the DMRS port of the PDCCH 1404 may be QCLed with the DL-RSs of the first TCI state 1450 and the second TCI state 1451. In the case that the fourth indication is provided and in the case that the SFN scheme is applied, the DMRS port of the PDCCH 1404 may be QCLed with the DL-RSs of the first TCI state 1450 and the second TCI state 1451.

In a case that the SFN scheme is configured to be applied for the PDCCH 1404 by the higher layer parameter and in the case that the first indication is provided, the SFN scheme need not be applied. One of the first TCI state 1450 and the second TCI state 1451 may be applied to the PDCCH 1404. In the case that the SFN scheme is configured to be applied for the PDCCH 1404 by the higher layer parameter and in the case that the second indication is provided, the SFN scheme need not be applied. One of the first TCI state 1450 and the second TCI state 1451 may be applied to the PDCCH 1404. In the case that the SFN scheme is configured to be applied for the PDCCH 1404, the first indication need not be expected to be provided. In the case that the SFN scheme is configured to be applied for the PDCCH 1404, the second indication need not be expected to be provided.

In the case that the SFN scheme is applied for the PDCCH 1404, the higher layer parameter indicating the first indication for the PDCCH 1404 need not be expected to be configured. In the case that the SFN scheme is applied for the PDCCH 1404, the higher layer parameter indicating the second indication for the PDCCH 1404 need not be expected to be configured. In a case that the higher layer parameter indicating the first indication for the PDCCH 1404 is configured, the SFN scheme need not be expected to be applied for the PDCCH 1404. In a case that the higher layer parameter indicating the second indication for the PDCCH 1404 is configured, the SFN scheme need not be expected to be applied for the PDCCH 1404.

The search space linking may be applied for the PDCCH 1404. For example, the first search space set may be linked to the second search space set for PDCCH 1404 reception. For example, the PDCCH 1404 reception may include the first PDCCH candidate and the second PDCCH candidate from the first search space set and the second search space set. The first search space set may be linked to the second search space set. In a case that the search space linking is applied, the first indication may be provided. In the case that the search space linking is applied, the second indication may be provided. In the case that the search space linking is applied, the third indication need not be expected to be provided. In the case that the search space linking is applied, the fourth indication need not be expected to be provided. In the case that the search space linking is applied, in a case that the first indication or the second indication is provided in the first CORESET, and in a case that the first indication or the second indication is provided in the second CORESET, the first search space set corresponding to the first CORESET may be linked to the second search space corresponding to the second CORESET. In the case that the search space linking is applied, in the case that the first indication or the second indication is provided in the first CORESET, and in a case that the third indication or the fourth indication is provided in the second CORESET, the first search space set corresponding to the first CORESET need not be linked to the second search space corresponding to the second CORESET. In the case that the search space linking is applied, in a case that the third indication or the fourth indication is provided in the first CORESET, and in the case that the third indication or the fourth indication is provided in the second CORESET, the first search space set corresponding to the first CORESET need not be linked to the second search space corresponding to the second CORESET. The fact that the search space linking is applied for the PDCCH 1404 may mean that the higher layer parameter searchSpaceLinking is configured in the search space set of the PDCCH 1404.

In the case that the search space linking is applied, in the case that the first indication or the second indication is provided in the first CORESET, and in the case that the third indication or the fourth indication is provided in the second CORESET, one of the first TCI state 1450 and the second TCI state 1451 may be applied to the second CORESET. In the case that the search space linking is applied, in the case that the third indication or the fourth indication is provided in the first CORESET, and in the case that the third indication or the fourth indication is provided in the second CORESET, one of the first TCI state 1450 and the second TCI state 1451 may be applied to the first CORESET, and one of the first TCI state 1450 and the second TCI state 1451 may be applied to the second CORESET. In the case that the search space linking is applied, the first search space set corresponding to the first CORESET may be linked to the second search space set corresponding to the second CORESET.

The terminal apparatus 1 may include a receiver configured to receive the first PDCCH to which the first DCI is mapped and the second PDCCH in at least one CORESET. The terminal apparatus 1 may include a transmitter configured to transmit the PUSCH scheduled by the second DCI mapped to the second PDCCH. For example, the SFN scheme may be configured to be applied for the second PDCCH. The search space linking may be configured to be applied for the second PDCCH. The first DCI may indicate the first TCI state and the second TCI state. In a case that one of the first TCI state and the second TCI state is applied to the one CORESET, the search space linking may be applied and the SFN scheme need not be applied. In a case that both the first TCI state and the second TCI state are applied to the one CORESET, the SFN scheme may be applied and the search space linking need not be applied. The fact that the SFN scheme is configured to be applied may mean that the higher layer parameter sfnSchemePdcch is configured. The fact that the search space linking is configured to be applied may mean that the higher layer parameter searchSpaceLinking is configured in the search space set for the second PDCCH. The first TCI state may be the first TCI state 1450. The second TCI state may be the second TCI state 1451. The second PDCCH may be the PDCCH 1404. The fact that the TCI state is applied to the CORESET may mean that the TCI state is applied to the PDCCH in the CORESET.

In a case that the SFN scheme is configured to be applied for the second PDCCH, one of the first TCI state and the second TCI state need not be expected to applied to one CORESET. In a case that the SFN scheme is not configured to be applied for the second PDCCH and in a case that one of the first TCI state and the second TCI state is applied to one CORESET, the DMRS port of the second PDCCH may be QCLed with a DL-RS of one of the first TCI state and the second TCI state. In a case that the SFN scheme is configured to be applied for the second PDCCH and in a case that both the first TCI state and the second TCI state are applied to one CORESET, the DMRS port of the second PDCCH may be QCLed with DL-RSs of both the first TCI state and the second TCI state. In the case that the SFN scheme is not configured to be applied, both the first TCI state and the second TCI state need not be expected to be applied to one CORESET.

One or both of the first TCI state and the second TCI state being applied to one CORESET may be determined based on the higher layer parameter. In a case that the higher layer parameter indicates the first indication, the first TCI state may be applied to one CORESET. In a case that the higher layer parameter indicates the second indication, the second TCI state may be applied to one CORESET. In a case that the higher layer parameter indicates the third indication, both the first TCI state and the second TCI state may be applied to one CORESET.

The terminal apparatus 1 may include a receiver configured to receive the first PDCCH to which the first DCI is mapped, the second PDCCH to which the second DCI is mapped, and the PDSCH scheduled by the second DCI. The PDSCH-MTRP scheme may be configured to be applied for the PDSCH. The PDSCH-MTRP scheme may be some or all of the SFN scheme, the FDM scheme, the TDM scheme, and the SDM scheme. The first DCI may indicate the first TCI state and the second TCI state. One or both of the first TCI state and the second TCI state being applied to the PDSCH may be determined based on the second DCI. In a case that one of the first TCI state and the second TCI state is applied to the PDSCH, the PDSCH-MTRP scheme need not be applied to the PDSCH. In a case that both the first TCI state and the second TCI state are applied to the PDSCH, the PDSCH-MTRP scheme may be applied to the PDSCH. The fact that the PDSCH-MTRP scheme is configured to be applied may mean that the higher layer parameter sfnSchemePdsch is configured. The fact that the PDSCH-MTRP scheme is configured to be applied may mean that the higher layer parameter repetitionScheme is configured.

One of the first TCI state and the second TCI state need not be expected to be applied to the PDSCH. In the case that both the first TCI state and the second TCI state are applied to the PDSCH, the PDSCH-MTRP scheme may be applied to the PDSCH.

The second DCI may include one field different from the TCI field. In a case that one field indicates the first indication, the first TCI state may be applied to the PDSCH. In a case that one field indicates the second indication, the second TCI state may be applied to the PDSCH. In a case that one field indicates the third indication, both the first TCI state and the second TCI state may be applied to the PDSCH. The first DCI may be different from the second DCI. The first PDCCH may be different from the second PDCCH.

Various aspects of apparatuses according to an aspect of the present embodiment will be described below.
(1) In order to accomplish the object described above, an aspect of the present invention is contrived to provide the following means. Specifically, a first aspect of the present invention may be a terminal apparatus including a receiver configured to receive a first PDCCH to which first DCI is mapped and a second PDCCH in at least one CORESET, and a transmitter configured to transmit a PUSCH scheduled by second DCI mapped to the second PDCCH, wherein an SFN scheme is configured to be applied for the second PDCCH, search space linking is configured to be applied for the second PDCCH, the first DCI indicates a first TCI state and a second TCI state, in a case that one of the first TCI state and the second TCI state is applied to the one CORESET, the search space linking is applied and the SFN scheme is not applied, and in a case that both of the first TCI state and the second TCI state are applied to the one CORESET, the SFN scheme is applied and the search space linking is not applied. One or both of the first TCI state and the second TCI state being applied to the one CORESET is determined based on a higher layer parameter, in a case that the higher layer parameter indicates a first indication, the first TCI state is applied to the one CORESET, in a case that the higher layer parameter indicates a second indication, the second TCI state is applied to the one CORESET, and in a case that the higher layer parameter indicates a third indication, both of the first TCI state and the second TCI state are applied to the one CORESET.
(2) A second aspect of the present invention is a terminal apparatus including a receiver configured to receive a first PDCCH to which first DCI is mapped and a second PDCCH in at least one CORESET, and a transmitter configured to transmit a PUSCH scheduled by second DCI mapped to the second PDCCH, wherein the first DCI indicates a first TCI state and a second TCI state, in a case that a SFN scheme is configured to be applied for the second PDCCH, one of the first TCI state and the second TCI state is not expected to be applied to the one CORESET, in a case that the SFN scheme is not configured to be applied and in a case that one of the first TCI state and the second TCI state is applied to the one CORESET, a DMRS port of the second PDCCH is QCLed with a DL-RS of the one of the first TCI state and the second TCI state, in a case that the SFN scheme is configured to be applied and in a case that both of the first TCI state and the second TCI state are applied to the one CORESET, the DMRS port is QCLed with DL-RSs of the both of the first TCI state and the second TCI state, and in a case that the SFN scheme is not configured to be applied, both of the first TCI state and the second TCI state are not expected to be applied to the one CORESET. One or both of the first TCI state and the second TCI state being applied to the one CORESET is determined based on a higher layer parameter, in a case that the higher layer parameter indicates a first indication, the first TCI state is applied to the one CORESET, in a case that the higher layer parameter indicates a second indication, the second TCI state is applied to the one CORESET, and in a case that the higher layer parameter indicates a third indication, both of the first TCI state and the second TCI state are applied to the one CORESET.
(3) A third aspect of the present invention is a base station apparatus including a transmitter configured to transmit a first PDCCH to which first DCI is mapped and a second PDCCH in at least one CORESET, and a receiver configured to receive a PUSCH scheduled by second DCI mapped to the second PDCCH, wherein the first DCI indicates a first TCI state and a second TCI state, in a case that a SFN scheme is configured to be applied for the second PDCCH, one of the first TCI state and the second TCI state is not expected to be applied to the one CORESET, in a case that the SFN scheme is not configured to be applied and in a case that one of the first TCI state and the second TCI state is applied to the one CORESET, a DMRS port of the second PDCCH is QCLed with a DL-RS of the one of the first TCI state and the second TCI state, in a case that the SFN scheme is configured to be applied and in a case that both of the first TCI state and the second TCI state are applied to the one CORESET, the DMRS port is QCLed with DL-RSs of the both of the first TCI state and the second TCI state, and in a case that the SFN scheme is not configured to be applied, both of the first TCI state and the second TCI state are not expected to be applied to the one CORESET. One or both of the first TCI state and the second TCI state being applied to the one CORESET is determined based on a higher layer parameter, in a case that the higher layer parameter indicates a first indication, the first TCI state is applied to the one CORESET, in a case that the higher layer parameter indicates a second indication, the second TCI state is applied to the one CORESET, and in a case that the higher layer parameter indicates a third indication, both of the first TCI state and the second TCI state are applied to the one CORESET.
(4) A fourth aspect of the present invention is a terminal apparatus including a receiver configured to receive a first PDCCH to which first DCI is mapped, a second PDCCH to which second DCI is mapped, and a PDSCH scheduled by the second DCI, wherein a PDSCH-MTRP scheme is configured to be applied for the PDSCH, the PDSCH-MTRP scheme is some or all of an SFN scheme, an FDM scheme, a TDM scheme, and an SDM scheme, the first DCI indicates a first TCI state and a second TCI state, one or both of the first TCI state and the second TCI state being applied to the PDSCH is determined based on the second DCI, in a case that one of the first TCI state and the second TCI state is applied to the PDSCH, the PDSCH-MTRP scheme is not be applied to the PDSCH, and in a case that both of the first TCI state and the second TCI state are applied to the PDSCH, the PDSCH-MTRP scheme is applied to the PDSCH. The second DCI includes one field different from a TCI field, in a case that the one field indicates a first indication, the first TCI state is applied to the PDSCH, in a case that the one field indicates a second indication, the second TCI state is applied to the PDSCH, and in a case that the one field indicates a third indication, both of the first TCI state and the second TCI state are applied to the PDSCH.
(5) A fifth aspect of the present invention is a terminal apparatus including a receiver configured to receive a first PDCCH to which first DCI is mapped, a second PDCCH to which second DCI is mapped, and a PDSCH scheduled by the second DCI, wherein a PDSCH-MTRP scheme is configured to be applied for the PDSCH, the PDSCH-MTRP scheme is some or all of an SFN scheme, an FDM scheme, a TDM scheme, and an SDM scheme, the first DCI indicates a first TCI state and a second TCI state, one of the first TCI state and the second TCI state is not expected to be applied to the PDSCH, and in a case that both of the first TCI state and the second TCI state are applied to the PDSCH, the PDSCH-MTRP scheme is applied to the PDSCH. The second DCI includes one field different from a TCI field, in a case that the one field indicates a first indication, the first TCI state is applied to the PDSCH, in a case that the one field indicates a second indication, the second TCI state is applied to the PDSCH, and in a case that the one field indicates a third indication, both of the first TCI state and the second TCI state are applied to the PDSCH.
(6) A sixth aspect of the present invention is a base station apparatus including a transmitter configured to transmit a first PDCCH to which first DCI is mapped, a second PDCCH to which second DCI is mapped, and a PDSCH scheduled by the second DCI, wherein a PDSCH-MTRP scheme is configured to be applied for the PDSCH, the PDSCH-MTRP scheme is some or all of an SFN scheme, an FDM scheme, a TDM scheme, and an SDM scheme, the first DCI indicates a first TCI state and a second TCI state, one or both of the first TCI state and the second TCI state being applied to the PDSCH is determined based on the second DCI, in a case that one of the first TCI state and the second TCI state is applied to the PDSCH, the PDSCH-MTRP scheme is not applied to the PDSCH, and in a case that both of the first TCI state and the second TCI state are applied to the PDSCH, the PDSCH-MTRP scheme is applied to the PDSCH. The second DCI includes one field different from a TCI field, in a case that the one field indicates a first indication, the first TCI state is applied to the PDSCH, in a case that the one field indicates a second indication, the second TCI state is applied to the PDSCH, and in a case that the one field indicates a third indication, both of the first TCI state and the second TCI state are applied to the PDSCH.

A program running on the base station apparatus 3 and the terminal apparatus 1 according to the present invention may be a program that controls a Central Processing Unit (CPU) and the like (a program that causes a computer to function) to implement the functions of the above-described embodiment according to the present invention. The information handled in these apparatuses is temporarily loaded into a Random Access Memory (RAM) while being processed, is then stored in a Hard Disk Drive (HDD) and various types of Read Only Memory (ROM) such as a Flash ROM, and is read, modified, and written by the CPU, as necessary.

Note that the terminal apparatus 1 and the base station apparatus 3 according to the above-described embodiment may be partially implemented by a computer. In that case, this configuration may be implemented by recording a program for implementing such control functions on a computer-readable recording medium and causing a computer system to read the program recorded on the recording medium for execution.

Note that it is assumed that the "computer system" mentioned here refers to a computer system built into the terminal apparatus 1 or the base station apparatus 3, and the computer system includes an OS and hardware components such as peripheral devices. In addition, the "computer-readable recording medium" refers to a portable medium such as a flexible disk, a magneto-optical disk, a ROM, and a CD-ROM, and a storage apparatus such as a hard disk built into the computer system.

Moreover, the "computer-readable recording medium" may include a medium that dynamically stores a program for a short period of time, such as a communication line in a case that the program is transmitted over a network such as the Internet or over a communication line such as a telephone line, and may also include a medium that stores the program for a certain period of time, such as a volatile memory included in the computer system functioning as a server or a client in such a case. In addition, the above-described program may be one for implementing some of the above-described functions, and also may be one capable of implementing the above-described functions in combination with a program already recorded in a computer system.

Furthermore, the base station apparatus 3 according to the aforementioned embodiment may be implemented as an aggregation (apparatus group) including multiple apparatuses. Each of the apparatuses included in such an apparatus group may include a part or all of each function or each functional block of the base station apparatus 3 according to the aforementioned embodiment. As the apparatus group, it is only necessary to have all of functions or functional blocks of the base station apparatus 3. Moreover, the terminal apparatus 1 according to the aforementioned embodiment can also communicate with the base station apparatus as the aggregation.

Also, the base station apparatus 3 according to the aforementioned embodiment may be an Evolved Universal Terrestrial Radio Access Network (EUTRAN) and/or a NextGen RAN (NG-RAN or NR RAN). Moreover, the base station apparatus 3 according to the aforementioned embodiment may have a part or all of the functions of a higher node for an eNodeB and/or a gNB.

Also, a part or all portions of each of the terminal apparatus 1 and the base station apparatus 3 according to the aforementioned embodiment may be implemented as an LSI, which is typically an integrated circuit, or may be implemented as a chip set. The functional blocks of each of the terminal apparatus 1 and the base station apparatus 3 may be individually implemented as a chip, or a part or all of the functional blocks may be integrated into a chip. Furthermore, a circuit integration technique is not limited to the LSI and may be implemented with a dedicated circuit or a general-purpose processor. Moreover, in a case that a circuit integration technology that substitutes an LSI appears with the advance of the semiconductor technology, it is also possible to use an integrated circuit based on the technology.

In addition, although the aforementioned embodiments have described the terminal apparatus as an example of a communication apparatus, the present invention is not limited to such a terminal apparatus, and is also applicable to a terminal apparatus or a communication apparatus that is a stationary type or a non-movable type electronic apparatus installed indoors or outdoors, for example, such as an AV device, a kitchen device, a cleaning or washing machine, an air-conditioning device, office equipment, a vending machine, and other household appliances.

Although the embodiments of the present invention have been described in detail above referring to the drawings, the specific configuration is not limited to the embodiments and includes, for example, design changes within the scope that do not depart from the gist of the present invention. For the present invention, various modifications are possible within the scope of the claims, and embodiments that are made by suitably combining technical means disclosed according to the different embodiments are also included in the technical scope of the present invention. In addition, a configuration in which elements described in the respective embodiments and having mutually similar effects are substituted for one another is also included.

### Industrial Applicability

The present invention can be utilized, for example, in a communication system, communication equipment (for example, a cellular phone apparatus, a base station apparatus, a wireless LAN apparatus, or a sensor device), an integrated circuit (for example, a communication chip), or a program.

### Reference Signs List

1 (1A, 1B, 1C) Terminal apparatus
3 Base station apparatus
10, 30 Radio transmission and/or reception unit
10a, 30a Radio transmission unit
10b, 30b Radio reception unit
11, 31 Antenna unit
12, 32 RF unit
13, 33 Baseband unit
14, 34 Higher layer processing unit
15, 35 Medium access control layer processing unit
16, 36 Radio resource control layer processing unit
91, 92, 93, 94 Search space set
300 Component carrier
301 Primary cell
302, 303 Secondary cell
700 Set of resource elements for PSS
710, 711, 712, 713 Set of resource elements for PBCH and DMRS for PBCH
720 Set of resource elements for SSS
3000 Point
3001, 3002 Resource grid
3003, 3004 BWP
3011, 3012, 3013, 3014 Offset
3100, 3200 Common resource block set
1400 Configured TCI state
1401 Activated TCI state
1402 Indicated TCI state
1403 PDSCH
1404 PDCCH
1450, 1451 TCI state

## Claims

1. A terminal apparatus comprising:
a receiver configured to receive a first PDCCH to which first DCI is mapped, a second PDCCH to which second DCI is mapped, and a PDSCH scheduled by the second DCI, wherein
a PDSCH-MTRP scheme is configured to be applied for the PDSCH,
the PDSCH-MTRP scheme is some or all of an SFN scheme, an FDM scheme, a TDM scheme, and an SDM scheme,
the first DCI indicates a first TCI state and a second TCI state,
one or both of the first TCI state and the second TCI state being applied to the PDSCH is determined based on a higher layer parameter,
in a case that one of the first TCI state and the second TCI state is applied to the PDSCH, the PDSCH-MTRP scheme is not applied to the PDSCH, and
in a case that both of the first TCI state and the second TCI state are applied to the PDSCH, the PDSCH-MTRP scheme is applied to the PDSCH.

2. A terminal apparatus comprising:
a receiver configured to receive a first PDCCH to which first DCI is mapped, a second PDCCH to which second DCI is mapped, and a PDSCH scheduled by the second DCI, wherein
a PDSCH-MTRP scheme is configured to be applied for the PDSCH,
the PDSCH-MTRP scheme is some or all of an SFN scheme, an FDM scheme, a TDM scheme, and an SDM scheme,
the first DCI indicates a first TCI state and a second TCI state,
one of the first TCI state and the second TCI state is not expected to be applied to the PDSCH, and
in a case that both of the first TCI state and the second TCI state are applied to the PDSCH, the PDSCH-MTRP scheme is applied to the PDSCH.

3. The terminal apparatus according to claim 1, wherein
in a case that the higher layer parameter indicates a first indication, the first TCI state is applied to the PDSCH,
in a case that the higher layer parameter indicates a second indication, the second TCI state is applied to the PDSCH, and
in a case that the higher layer parameter indicates a third indication, both of the first TCI state and the second TCI state are applied to the PDSCH.

4. A base station apparatus comprising:
a transmitter configured to transmit a first PDCCH to which first DCI is mapped, a second PDCCH to which second DCI is mapped, and a PDSCH scheduled by the second DCI, wherein
a PDSCH-MTRP scheme is configured to be applied for the PDSCH,
the PDSCH-MTRP scheme is some or all of an SFN scheme, an FDM scheme, a TDM scheme, and an SDM scheme,
the first DCI indicates a first TCI state and a second TCI state,
one or both of the first TCI state and the second TCI state being applied to the PDSCH is determined based on a higher layer parameter,
in a case that one of the first TCI state and the second TCI state is applied to the PDSCH, the PDSCH-MTRP scheme is not applied to the PDSCH, and
in a case that both of the first TCI state and the second TCI state are applied to the PDSCH, the PDSCH-MTRP scheme is applied to the PDSCH.

5. The base station apparatus according to claim 4, wherein
in a case that the higher layer parameter indicates a first indication, the first TCI state is applied to the PDSCH,
in a case that the higher layer parameter indicates a second indication, the second TCI state is applied to the PDSCH, and
in a case that the higher layer parameter indicates a third indication, both of the first TCI state and the second TCI state are applied to the PDSCH.
